# EUROPEAN PATENT SPECIFICATION

(11) **EP 2 327 063 B1**
(45) Date of publication and mention of the grant of the patent: **07.10.2020**
(21) Application number: 09807196.2
(22) Date of filing: 11.08.2009
(51) Int. Cl.: H04L 29/08, H04L 12/24, G08B 25/00, G06F 3/0481, G06F 3/0484, G06F 3/0487, H04L 12/28, G08B 13/196, H04L 12/66, H04M 1/725, H04M 11/02

(54) **CROSS-CLIENT SENSOR USER INTERFACE IN AN INTEGRATED SECURITY NETWORK**
KUNDENÜBERGREIFENDE SENSORBENUTZERSCHNITTSTELLE IN EINEM INTEGRIERTEN SICHERHEITSNETZWERK
INTERFACE UTILISATEUR À CAPTEURS TOUS CLIENTS DANS UN RÉSEAU À SÉCURITÉ INTÉGRÉE

(30) Priority: 30.03.2009 US 164877 P; 11.08.2008 US 189757; 12.11.2008 US 269585; 25.08.2008 US 198023; 25.08.2008 US 197895; 11.08.2008 US 87967 P
(43) Date of publication of application: 01.06.2011
(73) Proprietor: iControl Networks, Inc., Pennsylvania 19103 (US)
(72) Inventor: FULKER, Jim, Philadelphia Pennsylvania 19103 (US); SUNDERMEYER, Ken, Philadelphia Pennsylvania 19103 (US); DAWES, Paul, J., Philadelphia Pennsylvania 19103 (US); RAJI, Reza, Philadelphia Pennsylvania 19103 (US)
(74) Representative: Gill Jennings & Every LLP
(86) International application number: PCT/US2009/053485
(87) International publication number: WO 2010/019624

(56) References cited:
- US-A- 5 086 385
- US-A- 5 874 952
- US-A1- 2004 260 427
- US-A1- 2006 161 960
- US-A1- 2006 200 845
- US-A1- 2006 220 830
- US-A1- 2007 043 478
- US-A1- 2007 298 772
- US-A1- 2008 042 826
- US-A1- 2008 052 348
- US-A1- 2008 065 681
- US-A1- 2008 104 516

## Description

### TECHNICAL FIELD

The embodiments described herein relate generally to a method and apparatus for improving the capabilities of security systems in home and business applications.

### BACKGROUND

The field of home and small business security is dominated by technology suppliers who build comprehensive 'closed' security systems, where the individual components (sensors, security panels, keypads) operate solely within the confines of a single vendor solution. For example, a wireless motion sensor from vendor A cannot be used with a security panel from vendor B. Each vendor typically has developed sophisticated proprietary wireless technologies to enable the installation and management of wireless sensors, with little or no ability for the wireless devices to operate separate from the vendor's homogeneous system. Furthermore, these traditional systems are extremely limited in their ability to interface either to a local or wide area standards-based network (such as an IP network); most installed systems support only a low-bandwidth, intermittent connection utilizing phone lines or cellular (RF) backup systems. Wireless security technology from providers such as GE Security, Honeywell, and DSC/Tyco are well known in the art, and are examples of this proprietary approach to security systems for home and business.

Furthermore, with the proliferation of the internet, ethernet and WiFi local area networks (LANs) and advanced wide area networks (WANs) that offer high bandwidth, low latency connections (broadband), as well as more advanced wireless WAN data networks (e.g. GPRS or CDMA 1xRTT) there increasingly exists the networking capability to extend these traditional security systems to offer enhanced functionality. In addition, the proliferation of broadband access has driven a corresponding increase in home and small business networking technologies and devices. It is desirable to extend traditional security systems to encompass enhanced functionality such as the ability to control and manage security systems from the world wide web, cellular telephones, or advanced function internet-based devices. Other desired functionality includes an open systems approach to interface home security systems to home and small business networks.

Due to the proprietary approach described above, the traditional vendors are the only ones capable of taking advantage of these new network functions. To date, even though the vast majority of home and business customers have broadband network access in their premises, most security systems do not offer the advanced capabilities associated with high speed, low-latency LANs and WANs. This is primarily because the proprietary vendors have not been able to deliver such technology efficiently or effectively. Solution providers attempting to address this need are becoming known in the art, including three categories of vendors traditional proprietary hardware providers such as Honeywell and GE Security; third party hard-wired module providers such as Alarm.com, NextAlarm, and u Control; and new proprietary systems providers such as InGrid.

A disadvantage of the prior art technologies of the traditional proprietary hardware providers arises due to the continued proprietary approach of these vendors. As they develop technology in this area it once again operates only with the hardware from that specific vendor, ignoring the need for a heterogeneous, cross-vendor solution. Yet another disadvantage of the prior art technologies of the traditional proprietary hardware providers arises due to the lack of experience and capability of these companies in creating open internet and web based solutions, and consumer friendly interfaces.

A disadvantage of the prior art technologies of the third party hard-wired module providers arises due to the installation and operational complexities and functional limitations associated with hardwiring a new component into existing security systems. Moreover, a disadvantage of the prior art technologies of the new proprietary systems providers arises due to the need to discard all prior technologies, and implement an entirely new form of security system to access the new functionalities associated with broadband and wireless data networks. There remains, therefore, a need for systems, devices, and methods that easily interface to and control the existing proprietary security technologies utilizing a variety of wireless technologies.

By way of further background mention is made of the following publications:
United States Patent Application Publication No.: US 2004/260427 A1 to Wimsatt describes an interface device, specifically a network-coupled control panel, configured to be in communication with a local network and a security system. A variety of controlled devices are available such as security cameras. A security plug-in monitors status of a home security system and enables features of the security system to be enabled/disabled under user control or programmatically. The home screen also includes a display of the security system status. The security system status includes various control buttons labelled "day", "night", "away" and "vacation" that are used to transition to other screens used to program and operate the security system. Control panels are mounted throughout a building at locations where it is convenient or desired to exercise control over controlled systems. Memory e.g. random access memory and/or read only memory may be provided as separate devices or integrated with a processor. An executable application is stored in the memory, wherein the application comprises instructions which, when executed by the processor, cause a plurality of user interfaces to be output via a display units. The plurality of user interfaces comprises a security interface configured to access data of the security system and control the security system. The security interface comprises a state icon indicating a state of the security system. A network interface is configured to control one or more network components in communication with the local network and to access content of a remote network in communication with the local network. A slideshow timeline editor interface is configured to receive user input indicating a sequence of one or more of the plurality of 'widgets to be output via the display, wherein the sequence comprises one or more of an event associated with a component of the security system or an action associated with changing a state of at least one of the one or more network components.

United States Patent Application Publication No.: US 2008/052348 A1 to Adler et al., describes and interface device in which a timeline defines the order in which widgets are to be played in a constantly repeating sequence; that is, the timeline is representative of the complete set of widgets played by a given user device as well as their relative order and duration of execution. Interaction between a device user and the service provider may be effected through user interface screens presented by the user's device. Said publication also describes a personal electronic device that is able to download and display widget programs. A web network interface, provided by a service provider, has a timeline function enabling the sequence of execution of the widgets associated with a given device to be controlled.

### SUMMARY OF THE INVENTION

The present invention is defined in the appended independent claims to which reference should be made. Advantageous features are set out in the appended claims.

### BRIEF DESCRIPTION OF THE DRAWINGS

Figure 1 is a block diagram of the integrated security system, under an embodiment.
Figure 2 is a block diagram of components of the integrated security system, under an embodiment.
Figure 3 is a block diagram of the gateway software or applications, under an embodiment.
Figure 4 is a block diagram of the gateway components, under an embodiment.
Figure 4A (collectively Figures 4A/I and 4A/2) shows the orb icon and corresponding text summary display elements, under an embodiment.
**Figure 4B** shows an example sensor list of the SUI, under an embodiment.
**Figure 4C** shows icons of the interesting sensors, under an embodiment.
**Figure 4D** shows the quiet sensor icon, under an embodiment.
**Figure 4E** is a block diagram of an iPhone client device SUI, under an embodiment.
**Figure 4F** is an example iPhone client device SUI, under an embodiment.
**Figure 4G** is a block diagram of a mobile portal client device SUI, under an embodiment.
**Figure 4H** is a block diagram of a web portal client device SUI, under an embodiment.
**Figure 4I** is a block diagram of a touchscreen client device SUI, under an embodiment.
**Figure 4J** is an example touchscreen client device SUI, under an embodiment.
**Figure 4K** is an example sign-in screen of the SUI, under an embodiment.
**Figure 4L** is an example site listing screen of the SUI, under an embodiment.
**Figure 4M** is an example system status screen of the SUI, under an embodiment.
**Figure 4N** is an example action sheet screen of the SUI, under an embodiment.
**Figure 4O** is an example sensor bypass screen of the SUI, under an embodiment
**Figure 4P** is an example code entry screen of the SUI, under an embodiment.
**Figure 4Q** is an example sensor status screen of the SUI, under an embodiment.
**Figure 4R** is an example camera screen of the SUI, under an embodiment.
**Figure 4S1** is an example thermostat screen of the SUI, under an embodiment.

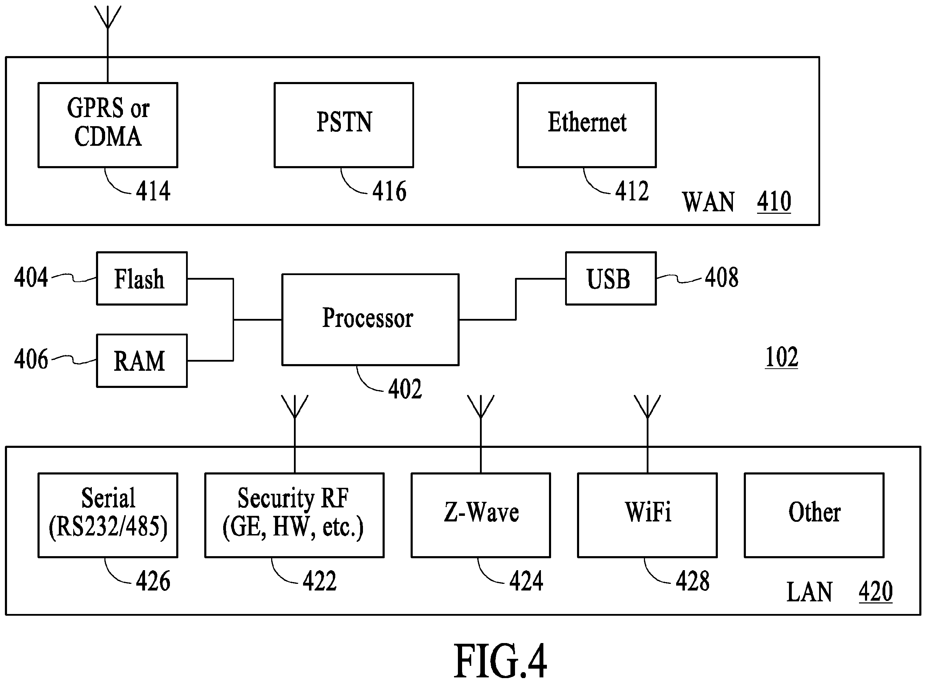

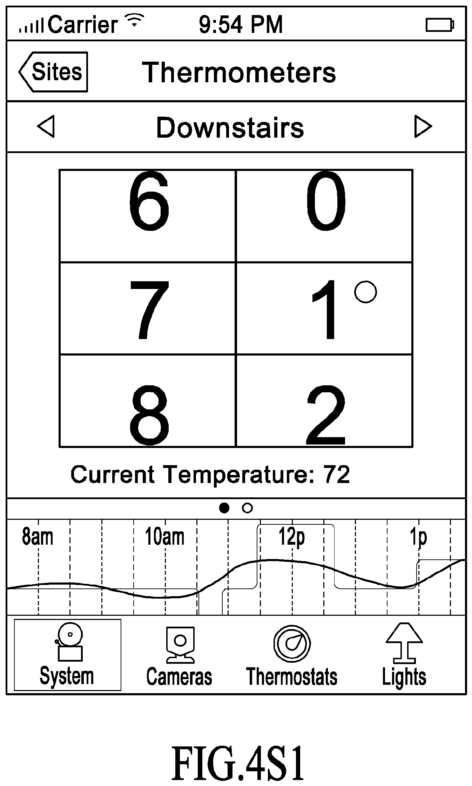

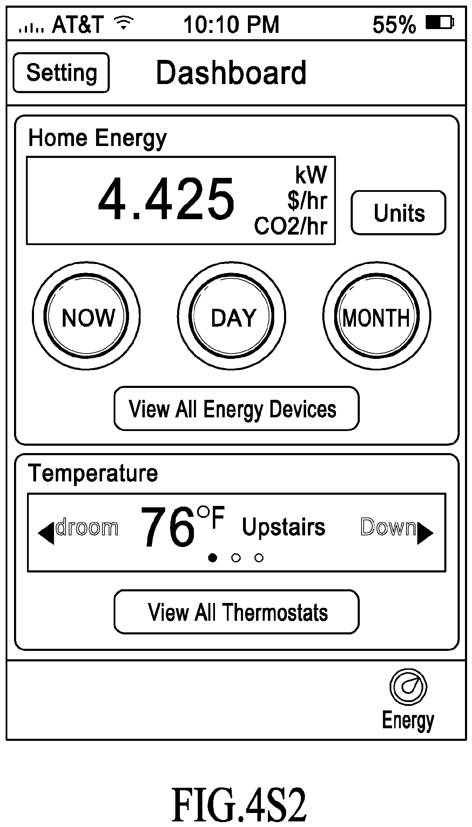

**Figure 4S2** is an example thermostat screen of the SUI that displays energy usage information in addition to thermostat information, under an embodiment

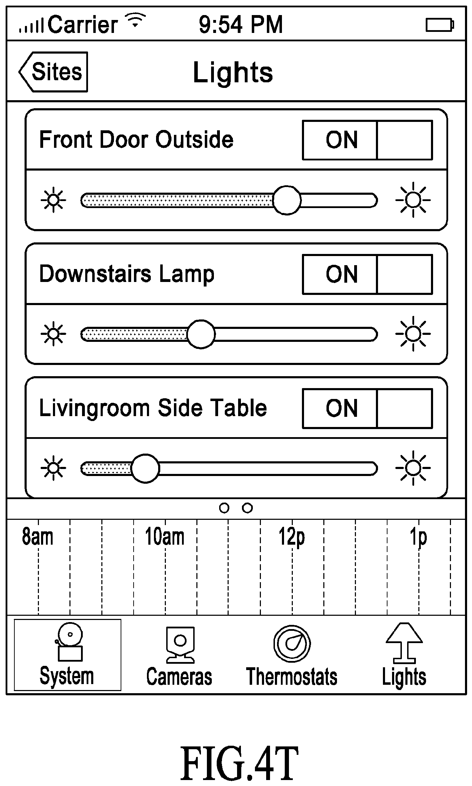

**Figure 4T** is an example lighting screen of the SUI, under an embodiment.

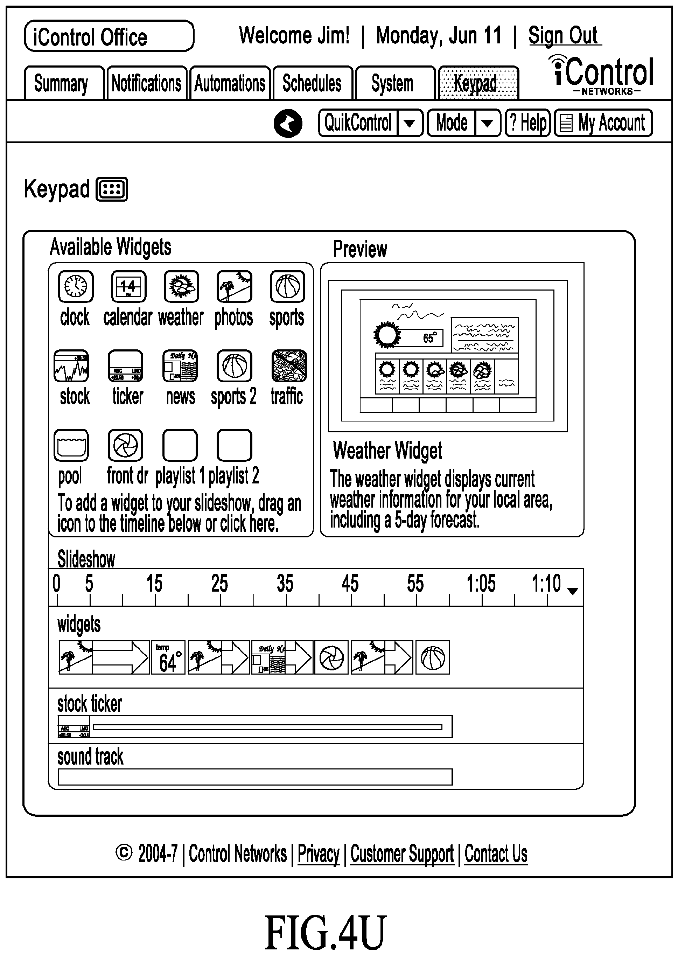

**Figure 4U** is an example slideshow timeline editor (STE), under an embodiment.

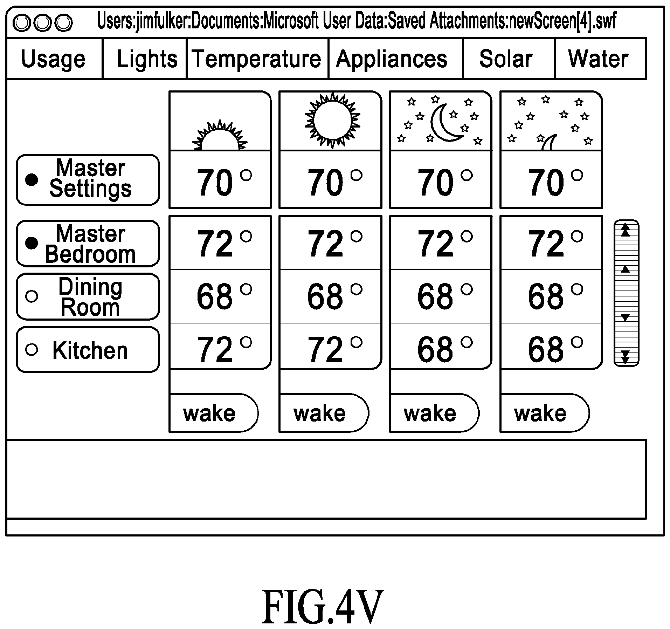

**Figure 4V** is a first example thermostat control screen or page of the EMUI, under an embodiment.

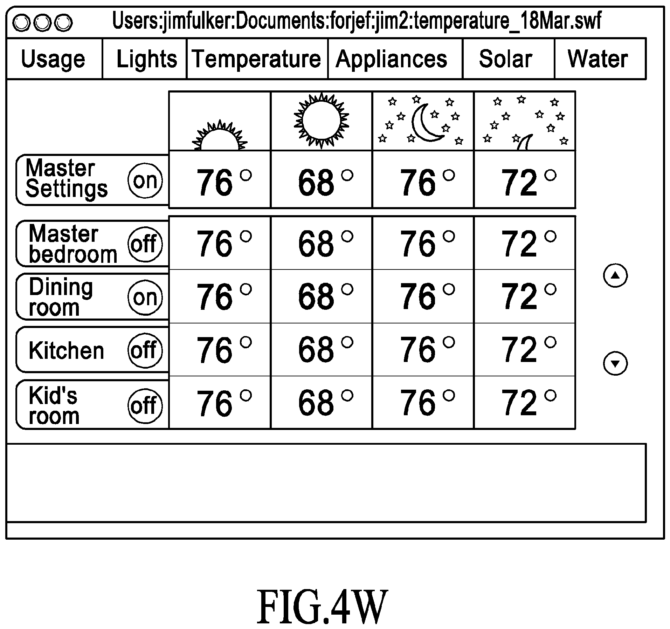

**Figure 4W** is a second example thermostat control screen or page of the EMUI, under an embodiment.

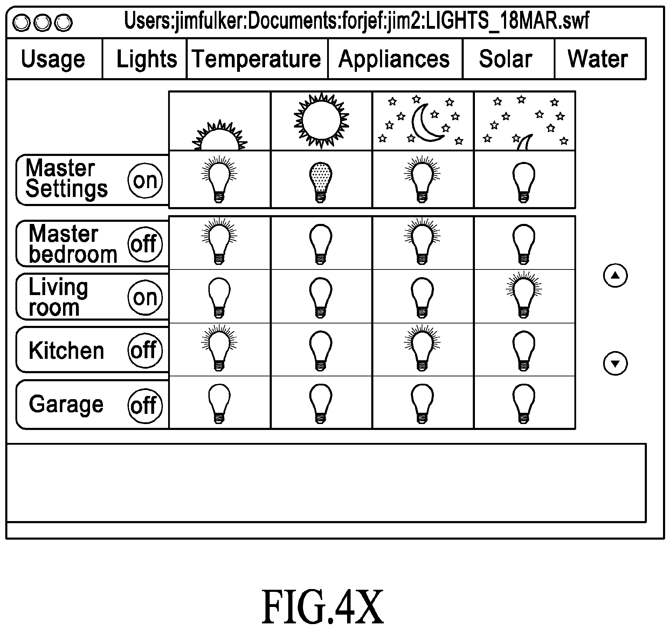

**Figure 4X** shows an example lighting control screen or page of the EMUI, under an embodiment.

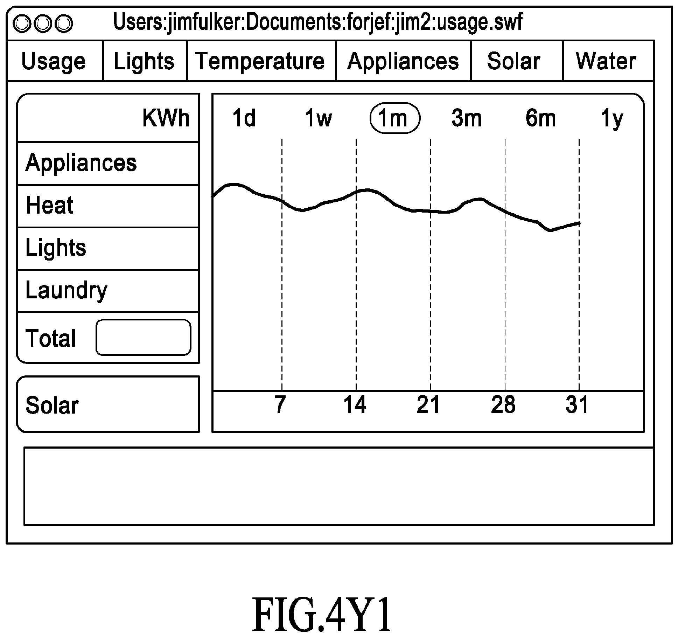

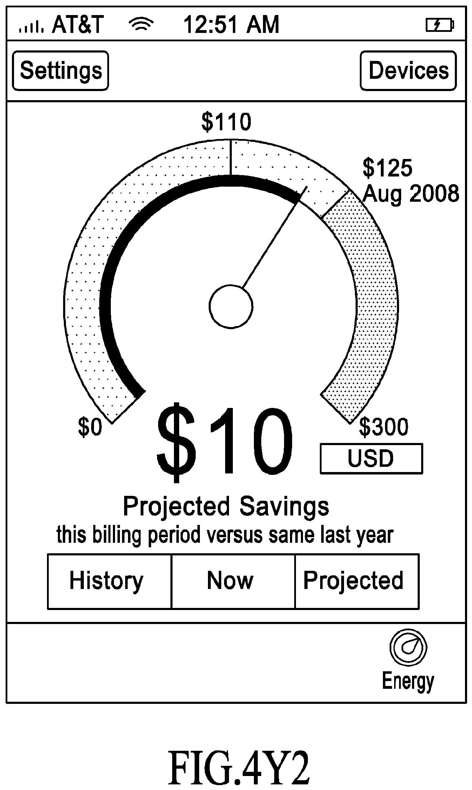

**Figure 4Y1** shows an example energy usage screen or page of the EMUI, under an embodiment.
**Figure 4Y2** shows an example energy usage screen or page of the EMUI, under an alternative embodiment.

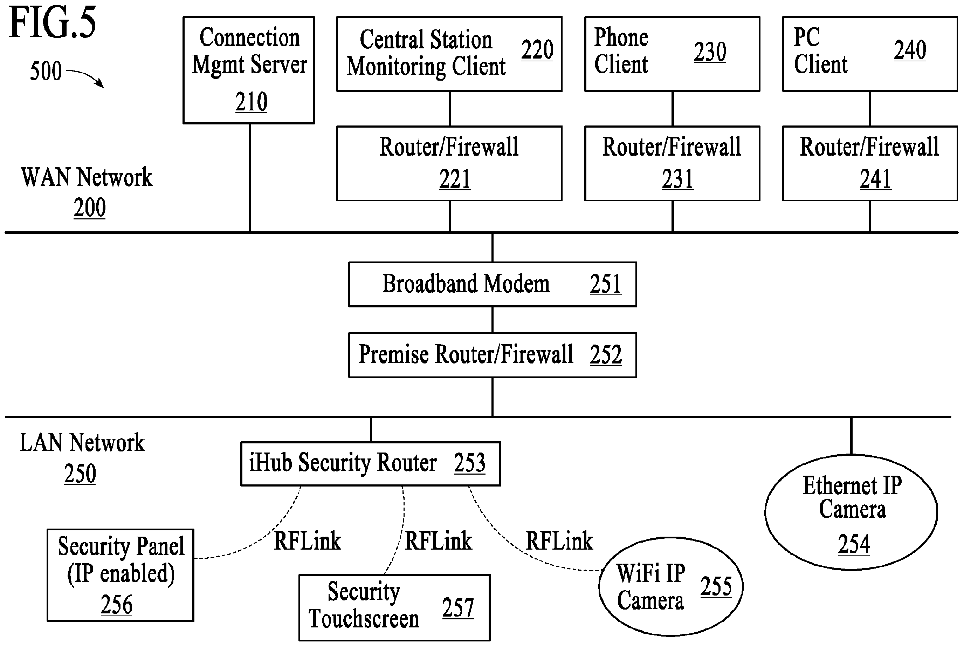

**Figure 5** is a block diagram of IP device integration with a premise network, under an embodiment,

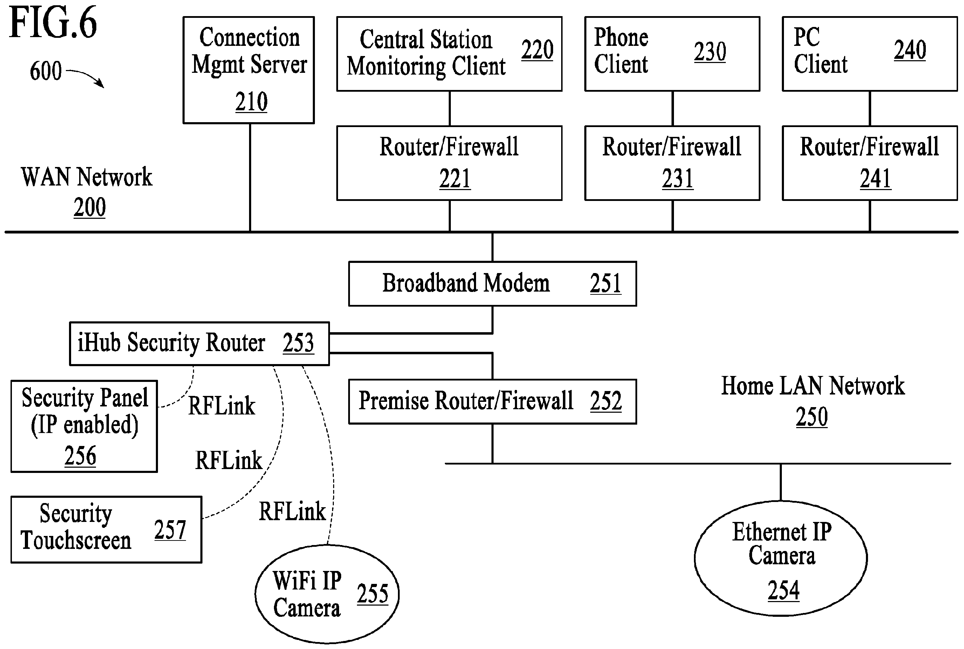

**Figure 6** is a block diagram of IP device integration with a premise network, under an alternative embodiment.

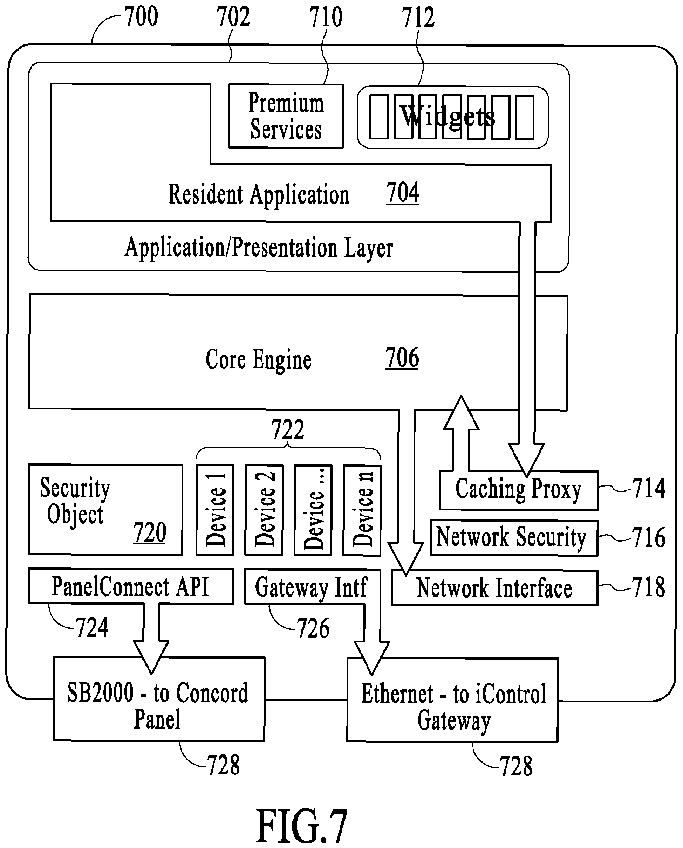

**Figure 7** is a block diagram of a touchscreen, under an embodiment.

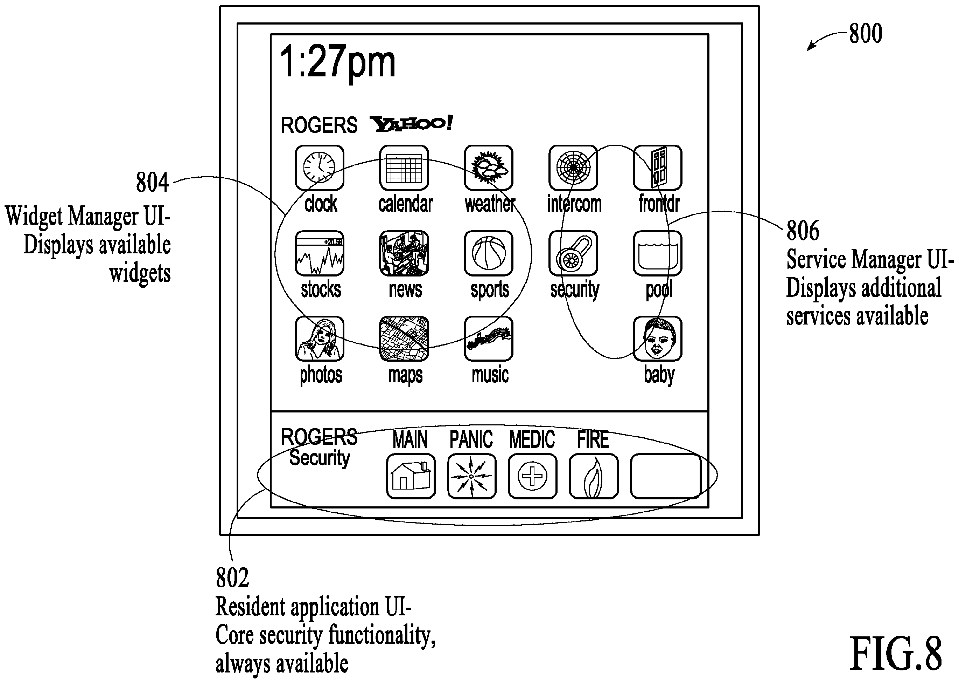

**Figure 8** is an example screenshot of a networked security touchscreen, under an embodiment.

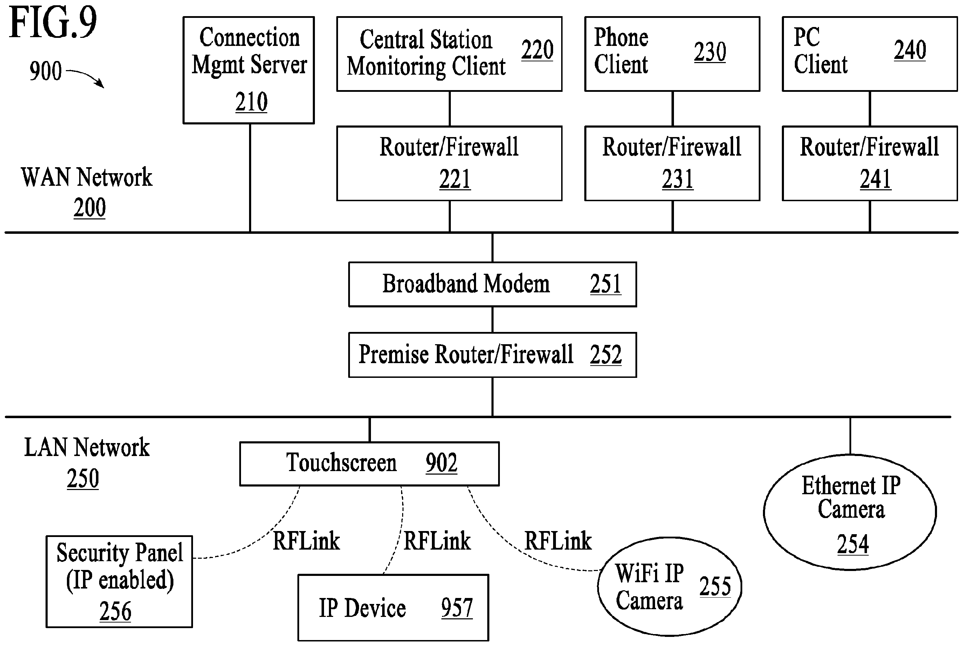

**Figure 9** is a block diagram of network or premise device integration with a premise network, under an embodiment.

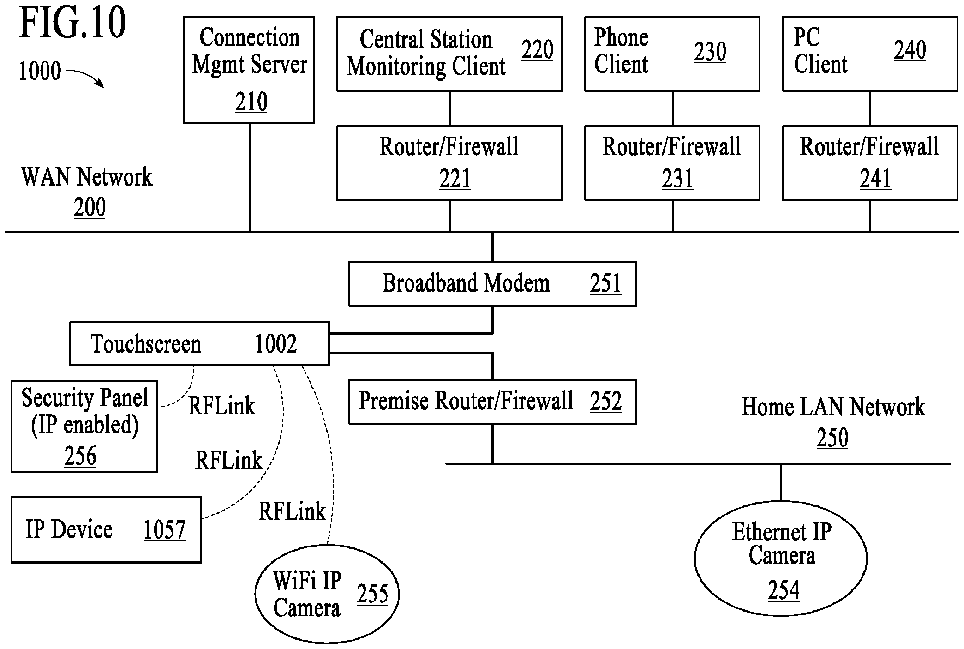

**Figure 10** is a block diagram of network or premise device integration with a premise network, under an alternative embodiment,

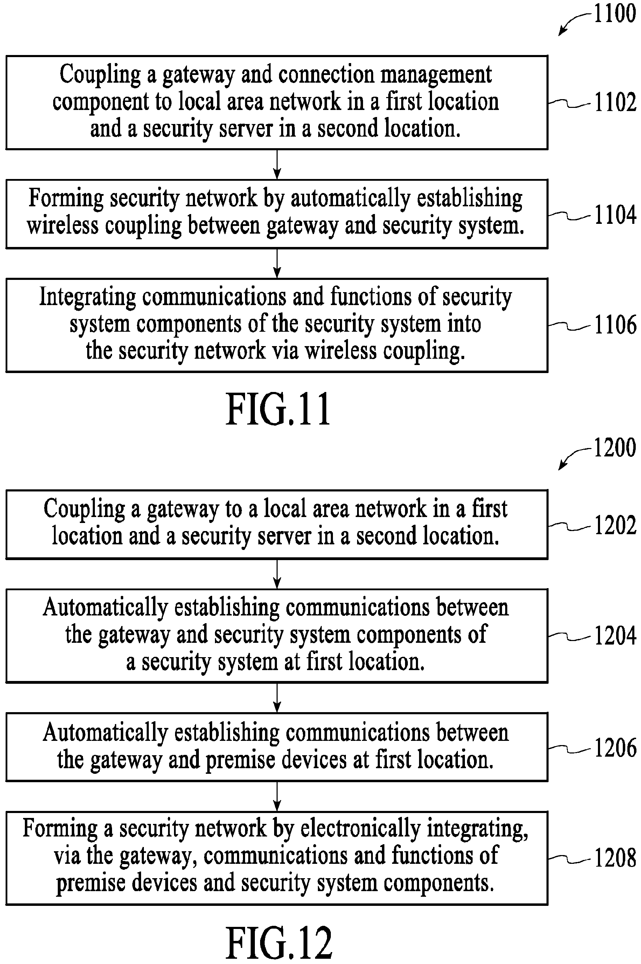

**Figure 11** is a flow diagram for a method of forming a security network including integrated security system components, under an embodiment.
**Figure 12** is a flow diagram for a method of forming a security network including integrated security system components and network devices, under an embodiment.

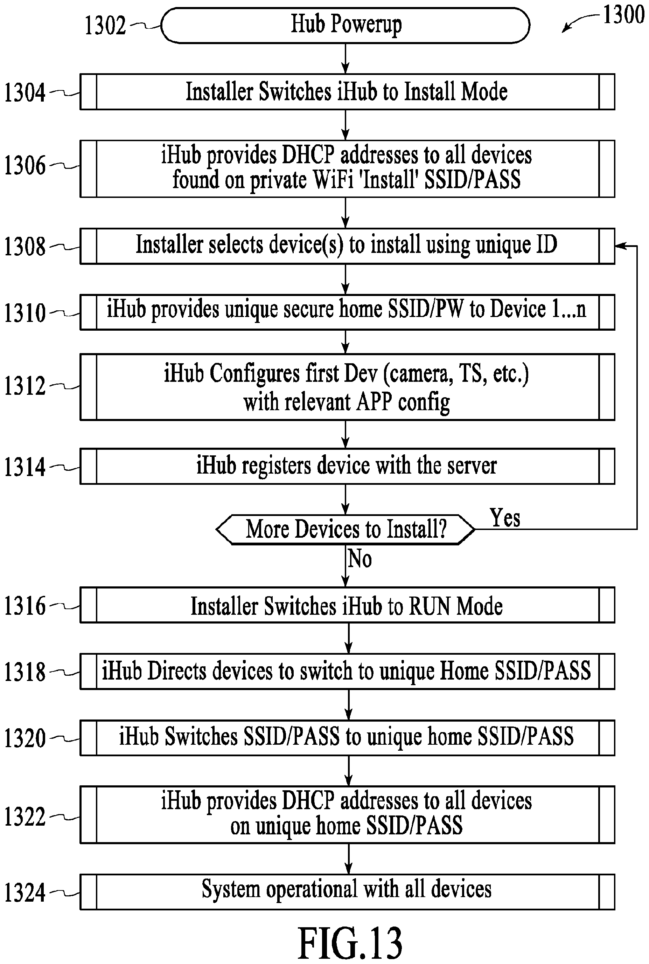

**Figure 13** is a flow diagram for installation of an IP device into a private network environment, under an embodiment.

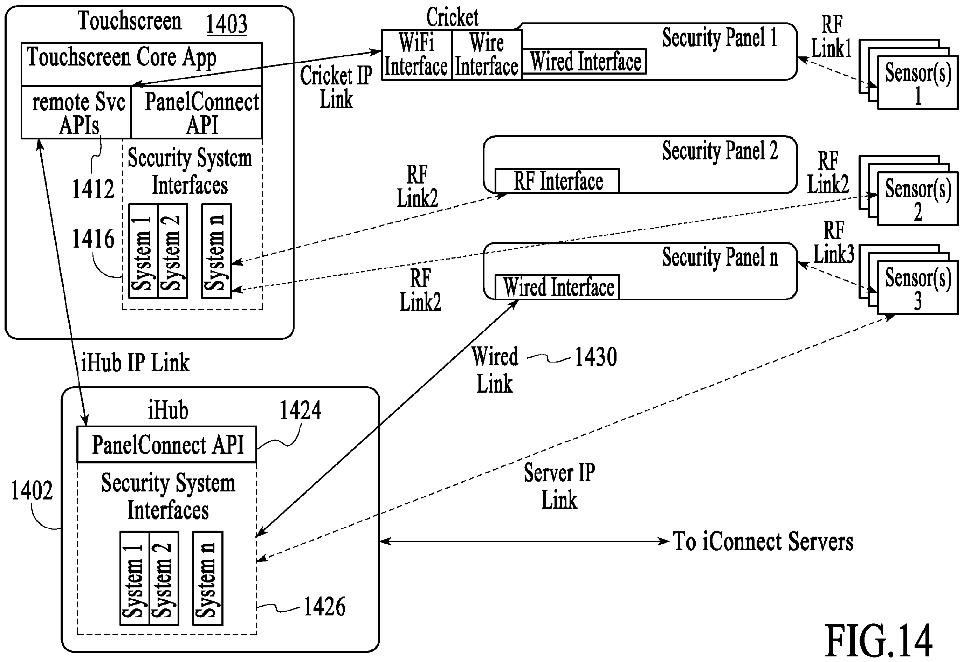

**Figure 14** is a block diagram showing communications among IP devices of the private network environment, under an embodiment.

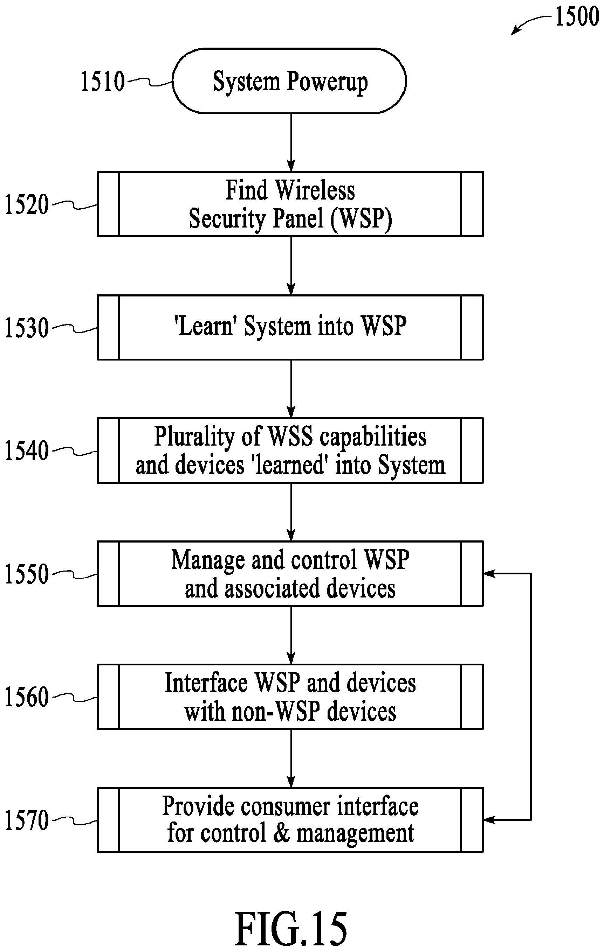

**Figure 15** is a flow diagram of a method of integrating an external control and management application system with an existing security system, under an embodiment.

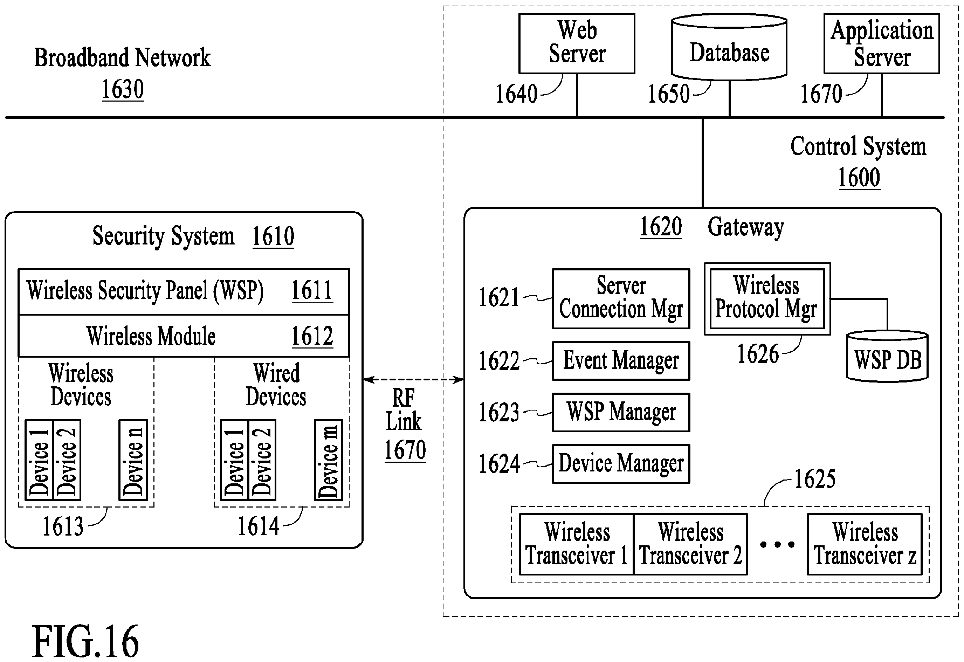

**Figure 16** is a block diagram of an integrated security system wirelessly interfacing to proprietary security systems, under an embodiment.

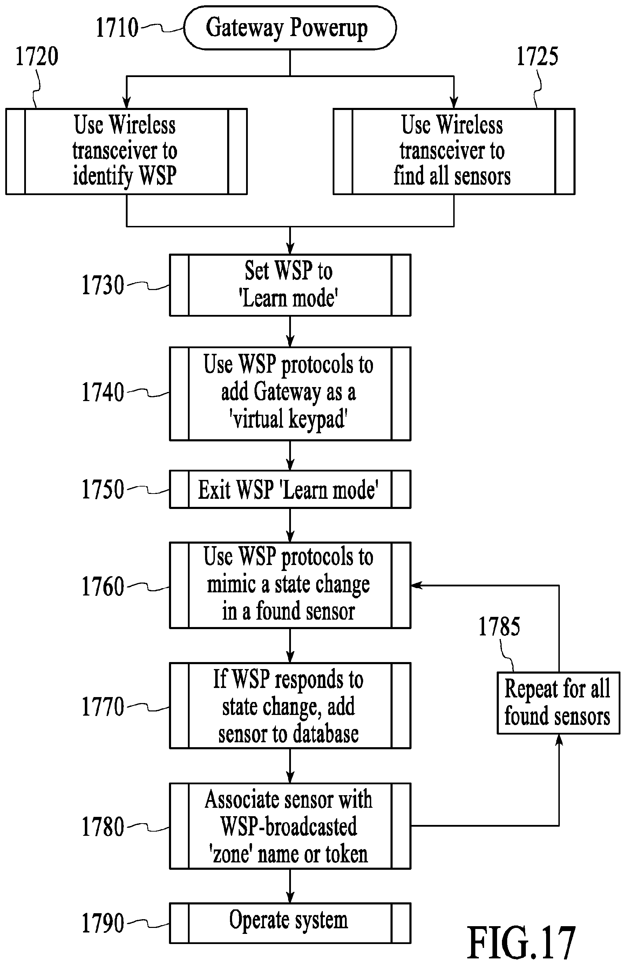

**Figure 17** is a flow diagram for wirelessly 'learning' the gateway into an existing security system and discovering extant sensors, under an embodiment.

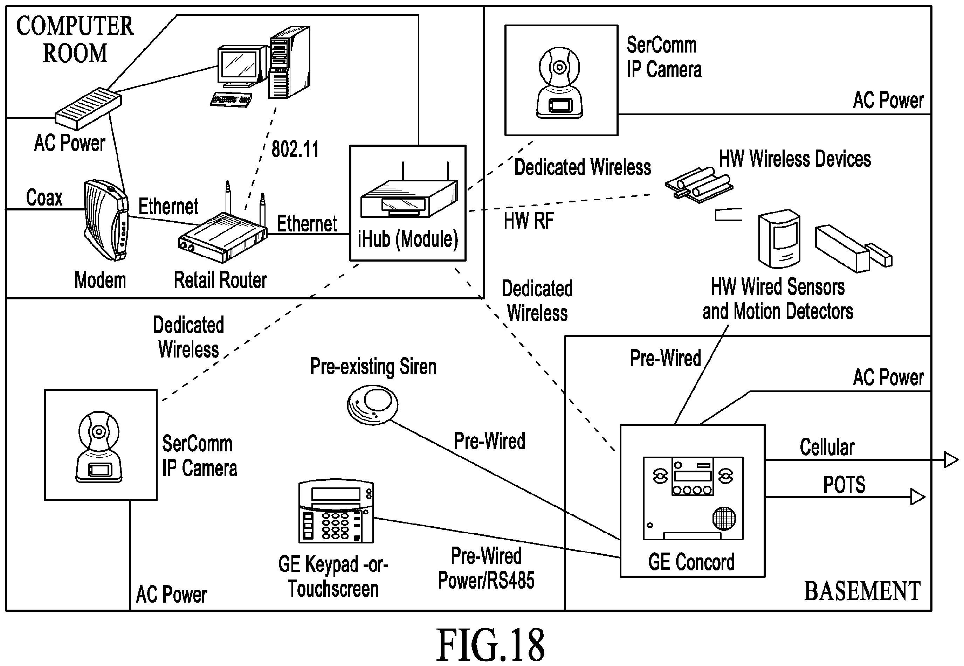

**Figure 18** is a block diagram of a security system in which the legacy panel is replaced with a wireless security panel wirelessly coupled to a gateway, under an embodiment,

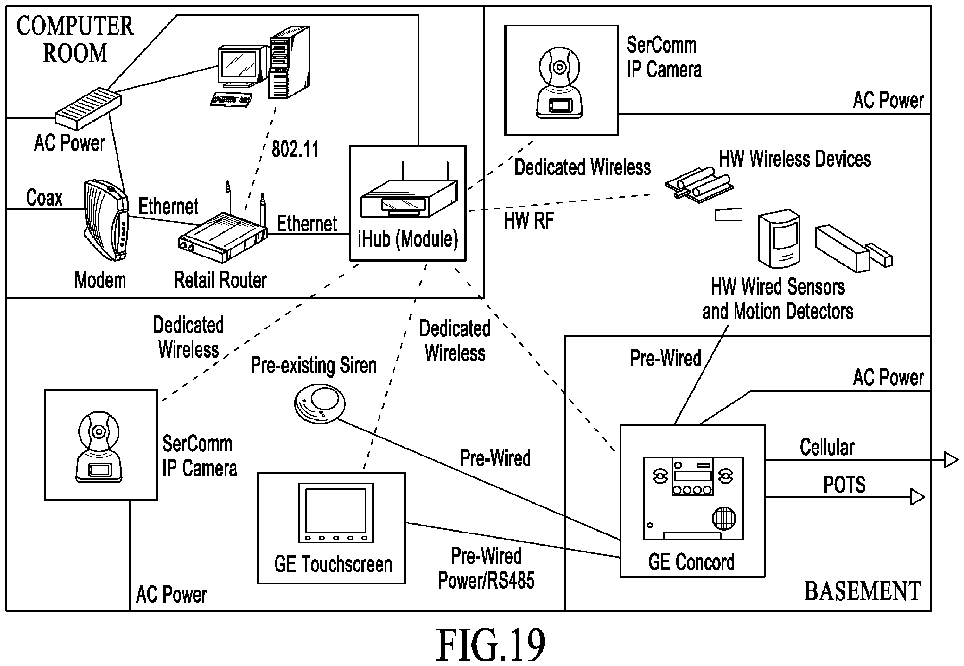

**Figure 19** is a block diagram of a security system in which the legacy panel is replaced with a wireless security panel wirelessly coupled to a gateway, and a touchscreen, under an alternative embodiment.

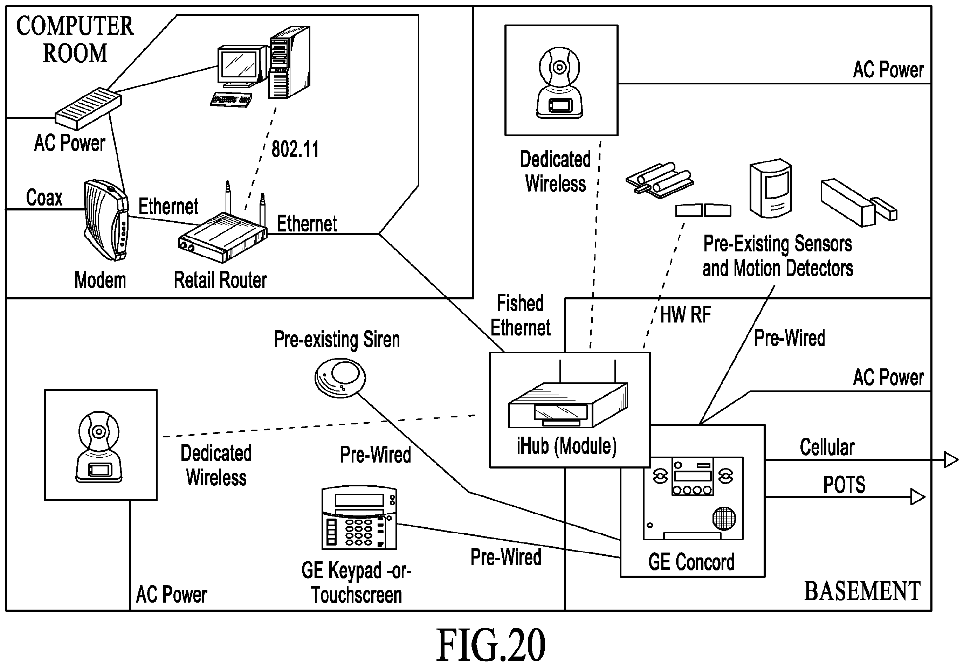

**Figure 20** is a block diagram of a security system in which the legacy panel is replaced with a wireless security panel connected to a gateway via an Ethernet coupling, under another alternative embodiment.

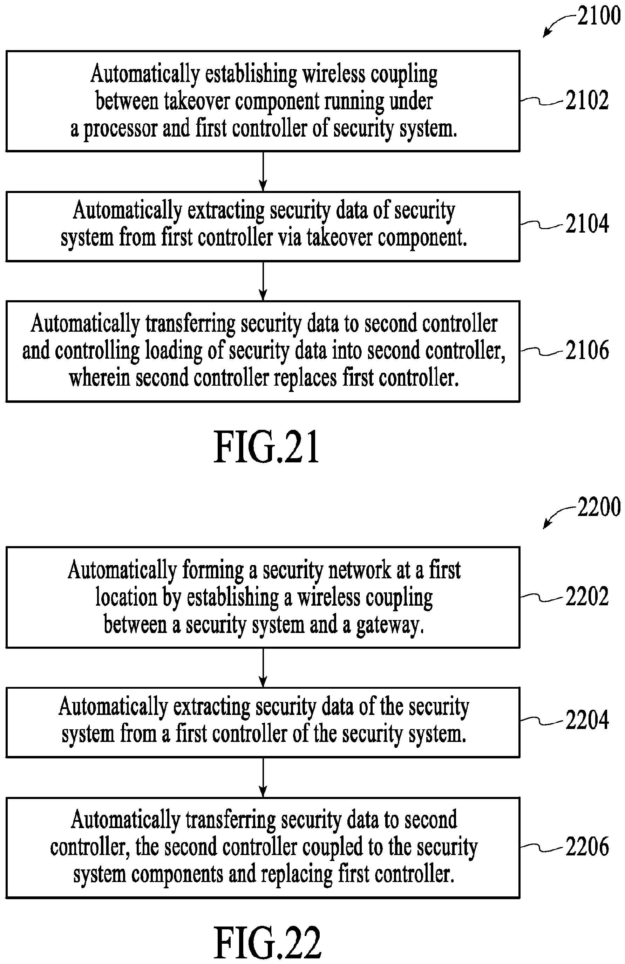

**Figure 21** is a flow diagram for automatic takeover of a security system, under an embodiment,
**Figure 22** is a flow diagram for automatic takeover of a security system, under an alternative embodiment.

### DETAILED DESCRIPTION

An integrated security system is described that integrates broadband and mobile access and control with conventional security systems and premise devices to provide a tri-mode security network (broadband, cellular/GSM, POTS access) that enables users to remotely stay connected to their premises. The integrated security system, while delivering remote premise monitoring and control functionality to conventional monitored premise protection, complements existing premise protection equipment. The integrated security system integrates into the premise network and couples wirelessly with the conventional security panel, enabling broadband access to premise security systems. Automation devices (cameras, lamp modules, thermostats, etc.) can be added, enabling users to remotely see live video and/or pictures and control home devices via their personal web portal or webpage, mobile phone, and/or other remote client device. Users can also receive notifications via email or text message when happenings occur, or do not occur, in their home.

Although the detailed description herein contains many specifics for the purposes of illustration, anyone of ordinary skill in the art will appreciate that many variations and alterations to the following details are within the scope of the embodiments described herein. Thus, the following illustrative embodiments are set forth without any loss of generality to, and without imposing limitations upon, the claimed invention

In accordance with the embodiments described herein, a wireless system (e.g., radio frequency (RF)) is provided that enables a security provider or consumer to extend the capabilities of an existing RF-capable security system or a non-RF-capable security system that has been upgraded to support RF capabilities. The system includes an RF-capable Gateway device (physically located within RF range of the RF-capable security system) and associated software operating on the Gateway device. The system also includes a web server, application server, and remote database providing a persistent store for information related to the system.

The security systems of an embodiment, referred to herein as the iControl security system or integrated security system, extend the value of traditional home security by adding broadband access and the advantages of remote home monitoring and home control through the formation of a security network including components of the integrated security system integrated with a conventional premise security system and a premise local area network (LAN). With the integrated security system, conventional home security sensors, cameras, touchscreen keypads, lighting controls, and/or Internet Protocol (IP) devices in the home (or business) become connected devices that are accessible anywhere in the world from a web browser, mobile phone or through content-enabled touchscreens. The integrated security system experience allows security operators to both extend the value proposition of their monitored security systems and reach new consumers that include broadband users interested in staying connected to their family, home and property when they are away from home.

The integrated security system of an embodiment includes security servers (also referred to herein as iConnect servers or security network servers) and an iHub gateway (also referred to herein as the gateway, the iHub, or the iHub client) that couples or integrates into a home network (e.g., LAN) and communicates directly with the home security panel, in both wired and wireless installations, The security system of an embodiment automatically discovers the security system components (e.g., sensors, etc.) belonging to the security system and connected to a control panel of the security system and provides consumers with full two-way access via web and mobile portals. The gateway supports various wireless protocols and can interconnect with a wide range of control panels offered by security system providers. Service providers and users can then extend the system's capabilities with the additional IP cameras, lighting modules or security devices such as interactive touchscreen keypads. The integrated security system adds an enhanced value to these security systems by enabling consumers to stay connected through email and SMS alerts, photo push, event-based video capture and rule-based monitoring and notifications. This solution extends the reach of home security to households with broadband access.

The integrated security system builds upon the foundation afforded by traditional security systems by layering broadband and mobile access, IP cameras, interactive touchscreens, and an open approach to home automation on top of traditional security system configurations. The integrated security system is easily installed and managed by the security operator, and simplifies the traditional security installation process, as described below.

The integrated security system provides an open systems solution to the home security market, As such, the foundation of the integrated security system customer premises equipment (CPE) approach has been to abstract devices, and allows applications to manipulate and manage multiple devices from any vendor. The integrated security system DeviceConnect technology that enables this capability supports protocols, devices, and panels from GE Security and Honeywell, as well as consumer devices using Z-Wave, IP cameras (e.g., Ethernet, wifi, and Homeplug), and IP touchscreens. The DeviceConnect is a device abstraction layer that enables any device or protocol layer to interoperate with integrated security system components. This architecture enables the addition of new devices supporting any of these interfaces, as well as add entirely new protocols.

The benefit of DeviceConnect is that it provides supplier flexibility. The same consistent touchscreen, web, and mobile user experience operate unchanged on whatever security equipment selected by a security system provider, with the system provider's choice of IP cameras, backend data center and central station software.

The integrated security system provides a complete system that integrates or layers on top of a conventional host security system available from a security system provider. The security system provider therefore can select different components or configurations to offer (e.g., CDMA, GPRS, no cellular, etc.) as well as have iControl modify the integrated security system configuration for the system provider's specific needs (e.g., change the functionality of the web or mobile portal, add a GE or Honeywell-compatible TouchScreen, etc.).

The integrated security system integrates with the security system provider infrastructure for central station reporting directly via Broadband and GPRS alarm transmissions. Traditional dial-up reporting is supported via the standard panel connectivity. Additionally, the integrated security system provides interfaces for advanced functionality to the CMS, including enhanced alarm events, system installation optimizations, system test verification, video verification, 2-way voice over IP and GSM.

The integrated security system is an IP centric system that includes broadband connectivity so that the gateway augments the existing security system with broadband and GPRS connectivity If broadband is down or unavailable GPRS may be used, for example, The integrated security system supports GPRS connectivity using an optional wireless package that includes a GPRS modem in the gateway. The integrated security system treats the GPRS connection as a higher cost though flexible option for data transfers. In an embodiment the GPRS connection is only used to route alarm events (e.g., for cost), however the gateway can be configured (e.g., through the iConnect server interface) to act as a primary channel and pass any or all events over GPRS. Consequently, the integrated security system does not interfere with the current plain old telephone service (POTS) security panel interface. Alarm events can still be routed through POTS; however the gateway also allows such events to be routed through a broadband or GPRS connection as well. The integrated security system provides a web application interface to the CSR tool suite as well as XML web services interfaces for programmatic integration between the security system provider's existing call center products. The integrated security system includes, for example, APIs that allow the security system provider to integrate components of the integrated security system into a custom call center interface. The APIs include XML web service APIs for integration of existing security system provider call center applications with the integrated security system service. All functionality available in the CSR Web application is provided with these API sets. The Java and XML-based APIs of the integrated security system support provisioning, billing, system administration, CSR, central station, portal user interfaces, and content management functions, to name a few. The integrated security system can provide a customized interface to the security system provider's billing system, or alternatively can provide security system developers with APIs and support in the integration effort.

The integrated security system provides or includes business component interfaces for provisioning, administration, and customer care to name a few. Standard templates and examples are provided with a defined customer professional services engagement to help integrate OSS/BSS systems of a Service Provider with the integrated security system.

The integrated security system components support and allow for the integration of customer account creation and deletion with a security system. The iConnect APIs provides access to the provisioning and account management system in iConnect and provide full support for account creation, provisioning, and deletion. Depending on the requirements of the security system provider, the iConnect APIs can be used to completely customize any aspect of the integrated security system backend operational system.

The integrated security system includes a gateway that supports the following standards-based interfaces, to name a few: Ethernet IP communications via Ethernet ports on the gateway, and standard XML/TCP/IP protocols and ports are employed over secured SSL sessions; USB 2.0 via ports on the gateway; 802.11b/g/n IP communications; GSM/GPRS RF WAN communications; CDMA 1xRTT RF WAN communications (optional, can also support EVDO and 3G technologies)

The gateway supports the following proprietary interfaces, to name a few: interfaces including Dialog RF network (319.5 MHz) and RS485 Superbus 2000 wired interface; RF mesh network (908 MHz); and interfaces including RF network (345 MHz) and RS485/RS232bus wired interfaces.

Regarding security for the IP communications (e.g., authentication, authorization, encryption, anti-spoofing, etc), the integrated security system uses SSL to encrypt all IP traffic, using server and client-certificates for authentication, as well as authentication in the data sent over the SSL-encrypted channel. For encryption, integrated security system issues public/private key pairs at the time/place of manufacture, and certificates are not stored in any online storage in an embodiment,

The integrated security system does not need any special rules at the customer premise and/or at the security system provider central station because the integrated security system makes outgoing connections using TCP over the standard HTTP and HTTPS ports. Provided outbound TCP connections are allowed then no special requirements on the firewalls are necessary.

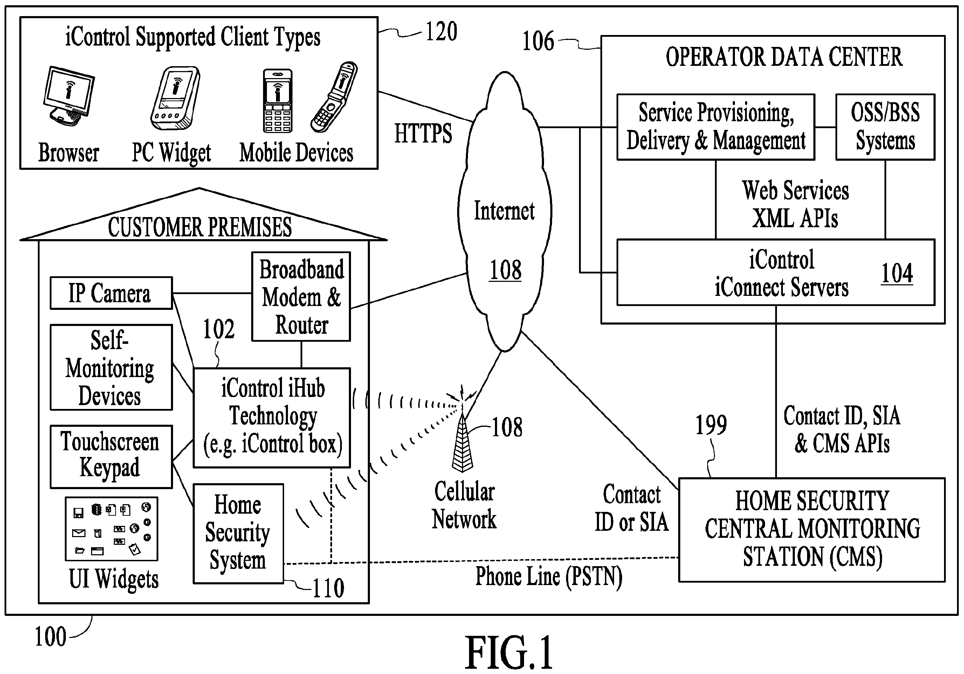

**Figure 1** is a block diagram of the integrated security system 100, under an embodiment. The integrated security system 100 of an embodiment includes the gateway 102 and the security servers 104 coupled to the conventional home security system 110. At a customer's home or business, the gateway 102 connects and manages the diverse variety of home security and self-monitoring devices. The gateway 102 communicates with the iConnect Servers 104 located in the service provider's data center 106 (or hosted in integrated security system data center), with the communication taking place via a communication network 108 or other network (e.g., cellular network, internet, etc.). These servers 104 manage the system integrations necessary to deliver the integrated system service described herein. The combination of the gateway 102 and the iConnect servers 104 enable a wide variety of remote client devices 120 (e.g., personal computers (PCs), cellular or mobile telephones, personal digital assistants (PDAs), processor-based remote devices, etc.) allowing users to remotely stay in touch with their home, business and family. In addition, the technology allows home security and self-monitoring information, as well as relevant third party content such as traffic and weather, to be presented in intuitive ways within the home, such as on advanced touchscreen keypads.

The integrated security system service (also referred to as iControl service) can be managed by a service provider via browser-based Maintenance and Service Management applications that are provided with the iConnect Servers, Or, if desired, the service can be more tightly integrated with existing OSS/BSS and service delivery systems via the iConnect web services-based XML APIs.

The integrated security system service can also coordinate the sending of alarms to the home security Central Monitoring Station (CMS) 199. Alarms are passed to the CMS 199 using standard protocols such as Contact ID or SIA and can be generated from the home security panel location as well as by iConnect server 104 conditions (such as lack of communications with the integrated security system). In addition, the link between the security servers 104 and CMS 199 provides tighter integration between home security and self-monitoring devices and the gateway 102. Such integration enables advanced security capabilities such as the ability for CMS personnel to view photos taken at the time a burglary alarm was triggered. For maximum security, the gateway 102 and iConnect servers 104 support the use of a mobile network (both GPRS and CDMA options are available) as a backup to the primary broadband connection

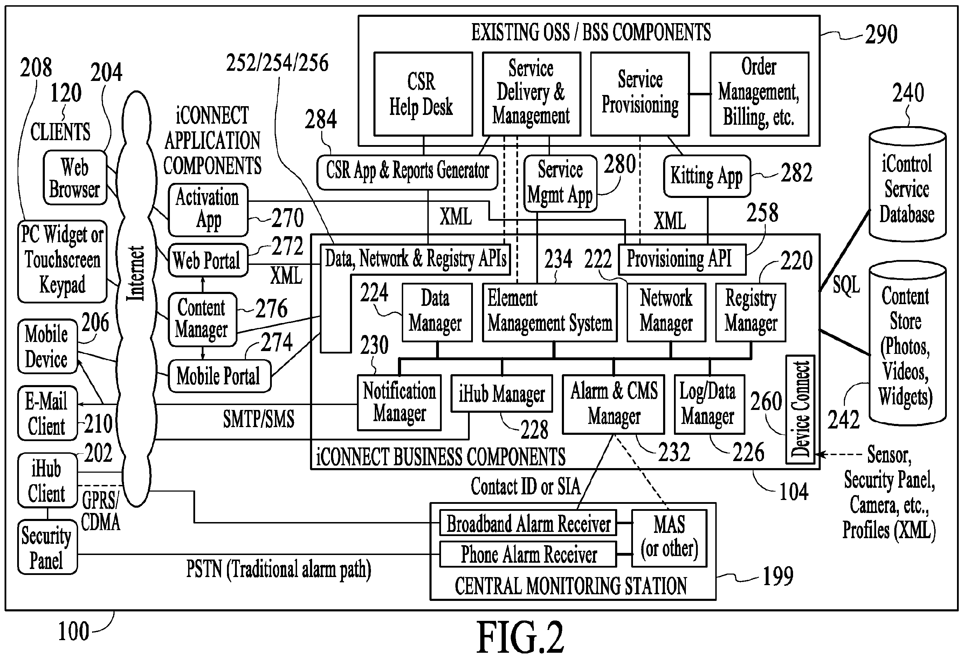

The integrated security system service is delivered by hosted servers running software components that communicate with a variety of client types while interacting with other systems. **Figure 2** is a block diagram of components of the integrated security system 100, under an embodiment. Following is a more detailed description of the components.

The iConnect servers 104 support a diverse collection of clients or client devices 120 ranging from mobile devices, to PCs, to in-home security devices, to a service provider's internal systems. Most clients 120 are used by end-users, but there are also a number of clients 120 that are used to operate the service,

Clients 120 used by end-users of the integrated security system 100 include, but are not limited to, the following:
Clients based on gateway client applications 202 (e.g., a processor-based device running the gateway technology that manages home security and automation devices).
A web browser 204 accessing a Web Portal application, performing end-user configuration and customization of the integrated security system service as well as monitoring of in-home device status, viewing photos and video, etc. Device and user management can also be performed by this portal application.
A mobile device 206 (e.g., PDA, mobile phone, etc.) accessing the integrated security system Mobile Portal. This type of client 206 is used by end-users to view system status and perform operations on devices (e.g., turning on a lamp, arming a security panel, etc,) rather than for system configuration tasks such as adding a new device or user.
PC or browser-based "widget" containers 208 that present integrated security system service content, as well as other third-party content, in simple, targeted ways (e.g. a widget that resides on a PC desktop and shows live video from a single in-home camera). "Widget" as used herein means applications or programs in the system.
Touchscreen home security keypads 208 and advanced in-home devices that present a variety of content widgets via an intuitive touchscreen user interface.
Notification recipients 210 (e.g., cell phones that receive SMS-based notifications when certain events occur (or don't occur), email clients that receive an email message with similar information, etc.).
Custom-built clients (not shown) that access the iConnect web services XML API to interact with users' home security and self-monitoring information in new and unique ways. Such clients could include new types of mobile devices, or complex applications where integrated security system content is integrated into a broader set of application features.

In addition to the end-user clients, the iConnect servers 104 support PC browser-based Service Management clients that manage the ongoing operation of the overall service, These clients run applications that handle tasks such as provisioning, service monitoring, customer support and reporting.

There are numerous types of server components of the iConnect servers 104 of an embodiment including, but not limited to, the following: Business Components which manage information about all of the home security and self-monitoring devices; End-User Application Components which display that information for users and access the Business Components via published XML APIs; and Service Management Application Components which enable operators to administer the service (these components also access the Business Components via the XML APIs, and also via published SNMP MIBs).

The server components provide access to, and management of, the objects associated with an integrated security system installation. The top-level object is the "network." It is a location where a gateway 102 is located, and is also commonly referred to as a site or premises; the premises can include any type of structure (e.g., home, office, warehouse, etc.) at which a gateway 102 is located. Users can only access the networks to which they have been granted permission. Within a network, every object monitored by the gateway 102 is called a device. Devices include the sensors, cameras, home security panels and automation devices, as well as the controller or processor-based device running the gateway applications.

Various types of interactions are possible between the objects in a system. Automations define actions that occur as a result of a change in state of a device. For example, take a picture with the front entry camera when the front door sensor changes to "open". Notifications are messages sent to users to indicate that something has occurred, such as the front door going to "open" state, or has not occurred (referred to as an iWatch notification). Schedules define changes in device states that are to take place at predefined days and times. For example, set the security panel to "Armed" mode every weeknight at 11:00pm.

The iConnect Business Components are responsible for orchestrating all of the low-level service management activities for the integrated security system service. They define all of the users and devices associated with a network (site), analyze how the devices interact, and trigger associated actions (such as sending notifications to users), All changes in device states are monitored and logged. The Business Components also manage all interactions with external systems as required, including sending alarms and other related self-monitoring data to the home security Central Monitoring System (CMS) 199. The Business Components are implemented as portable Java J2EE Servlets, but are not so limited.

The following iConnect Business Components manage the main elements of the integrated security system service, but the embodiment is not so limited:
A Registry Manager 220 defines and manages users and networks. This component is responsible for the creation, modification and termination of users and networks. It is also where a user's access to networks is defined.
A Network Manager 222 defines and manages security and self-monitoring devices that are deployed on a network (site). This component handles the creation, modification, deletion and configuration of the devices, as well as the creation of automations, schedules and notification rules associated with those devices.
A Data Manager 224 manages access to current and logged state data for an existing network and its devices. This component specifically does not provide any access to network management capabilities, such as adding new devices to a network, which are handled exclusively by the Network Manager 222.
To achieve optimal performance for all types of queries, data for current device states is stored separately from historical state data (a.k.a. "logs") in the database. A Log Data Manager 226 performs ongoing transfers of current device state data to the historical data log tables.

Additional iConnect Business Components handle direct communications with certain clients and other systems, for example:
An iHub Manager 228 directly manages all communications with gateway clients, including receiving information about device state changes, changing the configuration of devices, and pushing new versions of the gateway client to the hardware it is running on.
A Notification Manager 230 is responsible for sending all notifications to clients via SMS (mobile phone messages), email (via a relay server like an SMTP email server), etc.
An Alarm and CMS Manager 232 sends critical server-generated alarm events to the home security Central Monitoring Station (CMS) and manages all other communications of integrated security system service data to and from the CMS
The Element Management System (EMS) 234 is an iControl Business Component that manages all activities associated with service installation, scaling and monitoring, and filters and packages service operations data for use by service management applications. The SNMP MIBs published by the EMS can also be incorporated into any third party monitoring system if desired.

The iConnect Business Components store information about the objects that they manage in the iControl Service Database 240 and in the iControl Content Store 242. The iControl Content Store is used to store media objects like video, photos and widget content, while the Service Database stores information about users, networks, and devices. Database interaction is performed via a JDBC interface. For security purposes, the Business Components manage all data storage and retrieval.

The iControl Business Components provide web services-based APIs that application components use to access the Business Components' capabilities. Functions of application components include presenting integrated security system service data to end-users, performing administrative duties, and integrating with external systems and back-office applications.

The primary published APIs for the iConnect Business Components include, but are not limited to, the following:
A Registry Manager API 252 provides access to the Registry Manager Business Component's functionality, allowing management of networks and users.
A Network Manager API 254 provides access to the Network Manager Business Component's functionality, allowing management of devices on a network.
A Data Manager API 256 provides access to the Data Manager Business Component's functionality, such as setting and retrieving (current and historical) data about device states.
A Provisioning API 258 provides a simple way to create new networks and configure initial default properties.

Each API of an embodiment includes two modes of access: Java API or XML API. The XML APIs are published as web services so that they can be easily accessed by applications or servers over a network. The Java APIs are a programmer-friendly wrapper for the XML APIs. Application components and integrations written in Java should generally use the Java APIs rather than the XML APIs directly.

The iConnect Business Components also have an XML-based interface 260 for quickly adding support for new devices to the integrated security system. This interface 260, referred to as DeviceConnect 260, is a flexible, standards-based mechanism for defining the properties of new devices and how they can be managed. Although the format is flexible enough to allow the addition of any type of future device, pre-defined XML profiles are currently available for adding common types of devices such as sensors (SensorConnect), home security panels (PanelConnect) and IP cameras (CameraConnect).

The iConnect End-User Application Components deliver the user interfaces that run on the different types of clients supported by the integrated security system service. The components are written in portable Java J2EE technology (e.g., as Java Servlets, as JavaServer Pages (JSPs), etc,) and they all interact with the iControl Business Components via the published APIs.

The following End-User Application Components generate CSS-based HTML/JavaScript that is displayed on the target client. These applications can be dynamically branded with partner-specific logos and URL links (such as Customer Support, etc.). The End-User Application Components of an embodiment include, but are not limited to, the following:
An iControl Activation Application 270 that delivers the first application that a user sees when they set up the integrated security system service. This wizard-based web browser application securely associates a new user with a purchased gateway and the other devices included with it as a kit (if any). It primarily uses functionality published by the Provisioning API.
An iControl Web Portal Application 272 runs on PC browsers and delivers the web-based interface to the integrated security system service. This application allows users to manage their networks (e.g. add devices and create automations) as well as to view/change device states, and manage pictures and videos. Because of the wide scope of capabilities of this application, it uses three different Business Component APIs that include the Registry Manager API, Network Manager API, and Data Manager API, but the embodiment is not so limited.
An iControl Mobile Portal 274 is a small-footprint web-based interface that runs on mobile phones and PDAs. This interface is optimized for remote viewing of device states and pictures/videos rather than network management. As such, its interaction with the Business Components is primarily via the Data Manager API.
Custom portals and targeted client applications can be provided that leverage the same Business Component APIs used by the above applications.
A Content Manager Application Component 276 delivers content to a variety of clients. It sends multimedia-rich user interface components to widget container clients (both PC and browser-based), as well as to advanced touchscreen keypad clients. In addition to providing content directly to end-user devices, the Content Manager 276 provides widget-based user interface components to satisfy requests from other Application Components such as the iControl Web 272 and Mobile 274 portals.

A number of Application Components are responsible for overall management of the service. These pre-defined applications, referred to as Service Management Application Components, are configured to offer off-the-shelf solutions for production management of the integrated security system service including provisioning, overall service monitoring, customer support, and reporting, for example. The Service Management Application Components of an embodiment include, but are not limited to, the following.
A Service Management Application 280 allows service administrators to perform activities associated with service installation, scaling and monitoring/alerting. This application interacts heavily with the Element Management System (EMS) Business Component to execute its functionality, and also retrieves its monitoring data from that component via protocols such as SNMP MIBs.
A Kitting Application 282 is used by employees performing service provisioning tasks. This application allows home security and self-monitoring devices to be associated with gateways during the warehouse kitting process.
A CSR Application and Report Generator 284 is used by personnel supporting the integrated security system service, such as CSRs resolving end-user issues and employees enquiring about overall service usage. Pushes of new gateway firmware to deployed gateways is also managed by this application.

The iConnect servers 104 also support custom-built integrations with a service provider's existing OSS/BSS, CSR and service delivery systems 290, Such systems can access the iConnect web services XML API to transfer data to and from the iConnect servers 104. These types of integrations can compliment or replace the PC browser-based Service Management applications, depending on service provider needs.

As described above, the integrated security system of an embodiment includes a gateway, or iHub. The gateway of an embodiment includes a device that is deployed in the home or business and couples or connects the various third-party cameras, home security panels, sensors and devices to the iConnect server over a WAN connection as described in detail herein. The gateway couples to the home network and communicates directly with the home security panel in both wired and wireless sensor installations. The gateway is configured to be low-cost, reliable and thin so that it complements the integrated security system network-based architecture.

The gateway supports various wireless protocols and can interconnect with a wide range of home security control panels. Service providers and users can then extend the system's capabilities by adding IP cameras, lighting modules and additional security devices. The gateway is configurable to be integrated into many consumer appliances, including set-top boxes, routers and security panels, The small and efficient footprint of the gateway enables this portability and versatility, thereby simplifying and reducing the overall cost of the deployment.

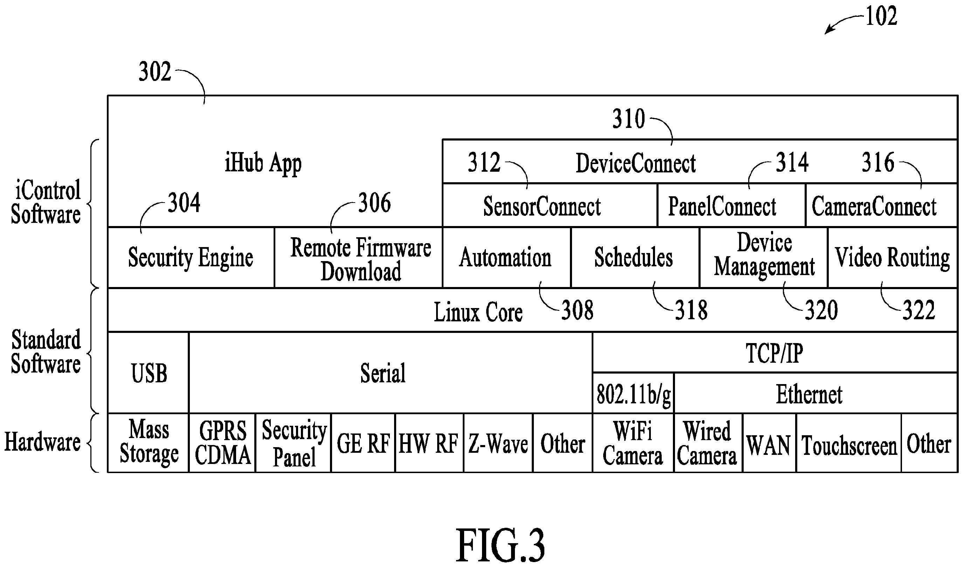

**Figure 3** is a block diagram of the gateway 102 including gateway software or applications, under an embodiment. The gateway software architecture is relatively thin and efficient, thereby simplifying its integration into other consumer appliances such as set-top boxes, routers, touch screens and security panels. The software architecture also provides a high degree of security against unauthorized access. This section describes the various key components of the gateway software architecture

The gateway application layer 302 is the main program that orchestrates the operations performed by the gateway. The Security Engine 304 provides robust protection against intentional and unintentional intrusion into the integrated security system network from the outside world (both from inside the premises as well as from the WAN), The Security Engine 304 of an embodiment comprises one or more sub-modules or components that perform functions including, but not limited to, the following:
Encryption including 128-bit SSL encryption for gateway and iConnect server communication to protect user data privacy and provide secure communication.
Bi-directional authentication between the gateway and iConnect server in order to prevent unauthorized spoofing and attacks. Data sent from the iConnect server to the gateway application (or vice versa) is digitally signed as an additional layer of security. Digital signing provides both authentication and validation that the data has not been altered in transit.
Camera SSL encapsulation because picture and video traffic offered by off-the-shelf networked IP cameras is not secure when traveling over the Internet. The gateway provides for 128-bit SSL encapsulation of the user picture and video data sent over the internet for complete user security and privacy.
802.11b/g/n with WPA-2 security to ensure that wireless camera communications always takes place using the strongest available protection.
A gateway-enabled device is assigned a unique activation key for activation with an iConnect server. This ensures that only valid gateway-enabled devices can be activated for use with the specific instance of iConnect server in use. Attempts to activate gateway-enabled devices by brute force are detected by the Security Engine. Partners deploying gateway-enabled devices have the knowledge that only a gateway with the correct serial number and activation key can be activated for use with an iConnect server, Stolen devices, devices attempting to masquerade as gateway-enabled devices, and malicious outsiders (or insiders as knowledgeable but nefarious customers) cannot effect other customers' gateway-enabled devices.

As standards evolve, and new encryption and authentication methods are proven to be useful, and older mechanisms proven to be breakable, the security manager can be upgraded "over the air" to provide new and better security for communications between the iConnect server and the gateway application, and locally at the premises to remove any risk of eavesdropping on camera communications.

A Remote Firmware Download module 306 allows for seamless and secure updates to the gateway firmware through the iControl Maintenance Application on the server 104, providing a transparent, hassle-free mechanism for the service provider to deploy new features and bug fixes to the installed user base. The firmware download mechanism is tolerant of connection loss, power interruption and user interventions (both intentional and unintentional). Such robustness reduces down time and customer support issues. Gateway firmware can be remotely download either for one gateway at a time, a group of gateways, or in batches.

The Automations engine 308 manages the user-defined rules of interaction between the different devices (e.g. when door opens turn on the light) Though the automation rules are programmed and reside at the portal/server level, they are cached at the gateway level in order to provide short latency between device triggers and actions.

DeviceConnect 310 includes definitions of all supported devices (e.g., cameras, security panels, sensors, etc.) using a standardized plug-in architecture. The DeviceConnect module 310 offers an interface that can be used to quickly add support for any new device as well as enabling interoperability between devices that use different technologies/protocols. For common device types, pre-defined sub-modules have been defined, making supporting new devices of these types even easier. SensorConnect 312 is provided for adding new sensors, CameraConnect 316 for adding IP cameras, and PanelConnect 314 for adding home security panels.

The Schedules engine 318 is responsible for executing the user defined schedules (e.g., take a picture every five minutes; every day at 8am set temperature to 65 degrees Fahrenheit, etc.), Though the schedules are programmed and reside at the iConnect server level they are sent to the scheduler within the gateway application. The Schedules Engine 318 then interfaces with SensorConnect 312 to ensure that scheduled events occur at precisely the desired time.

The Device Management module 320 is in charge of all discovery, installation and configuration of both wired and wireless IP devices (e.g., cameras, etc.) coupled or connected to the system. Networked IP devices, such as those used in the integrated security system, require user configuration of many IP and security parameters - to simplify the user experience and reduce the customer support burden, the device management module of an embodiment handles the details of this configuration. The device management module also manages the video routing module described below.

The video routing engine 322 is responsible for delivering seamless video streams to the user with zero-configuration. Through a multi-step, staged approach the video routing engine uses a combination of UPnP port-forwarding, relay server routing and STUN/TURN peer-to-peer routing.

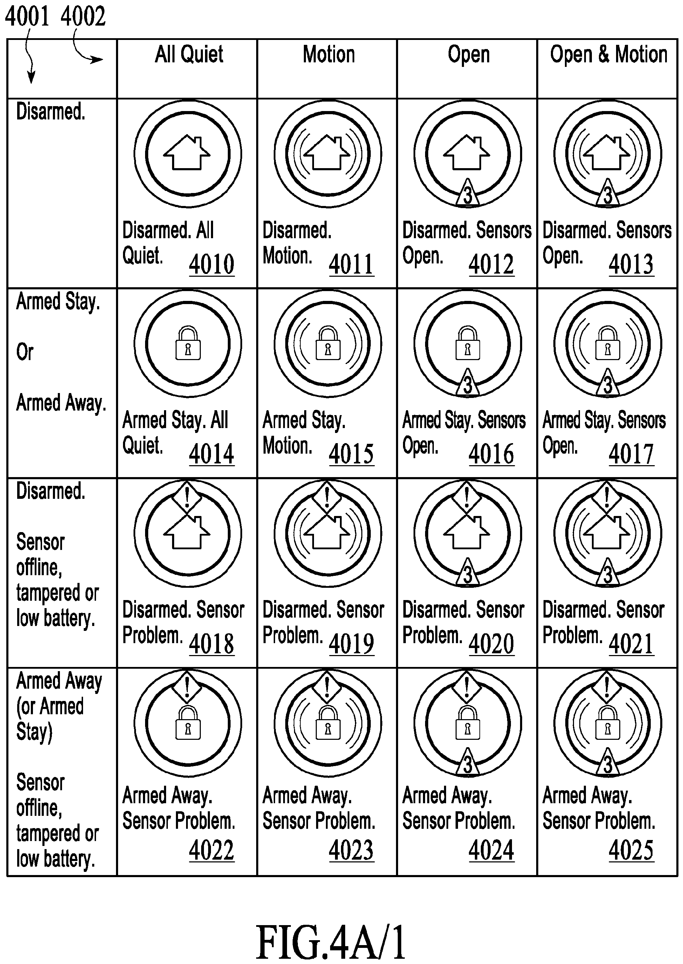

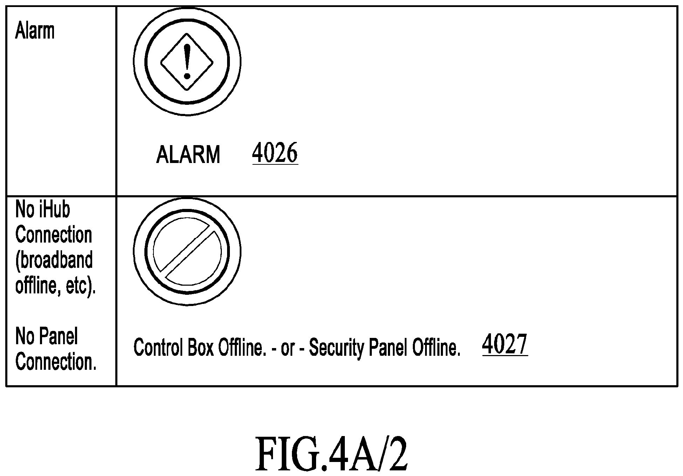

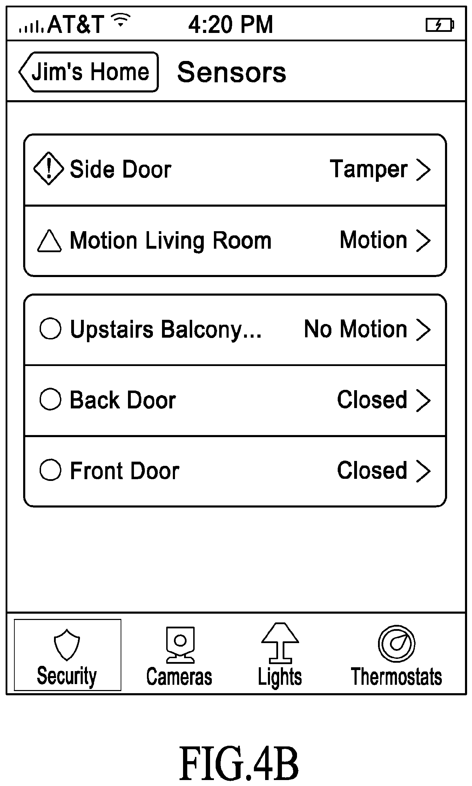

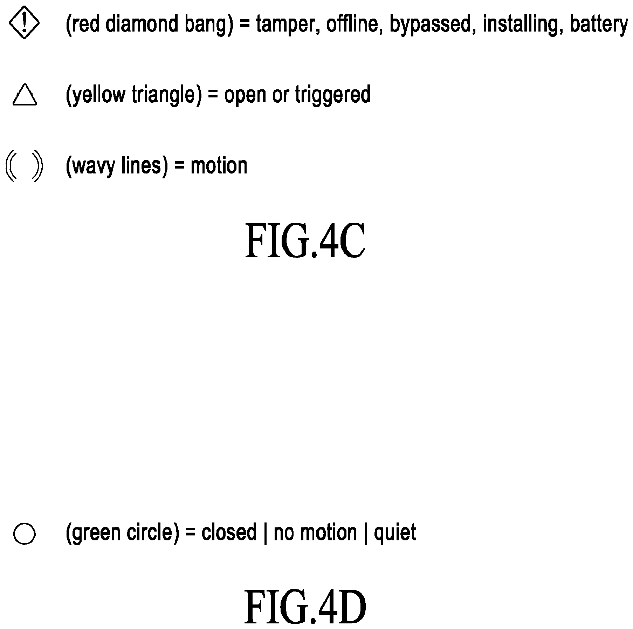

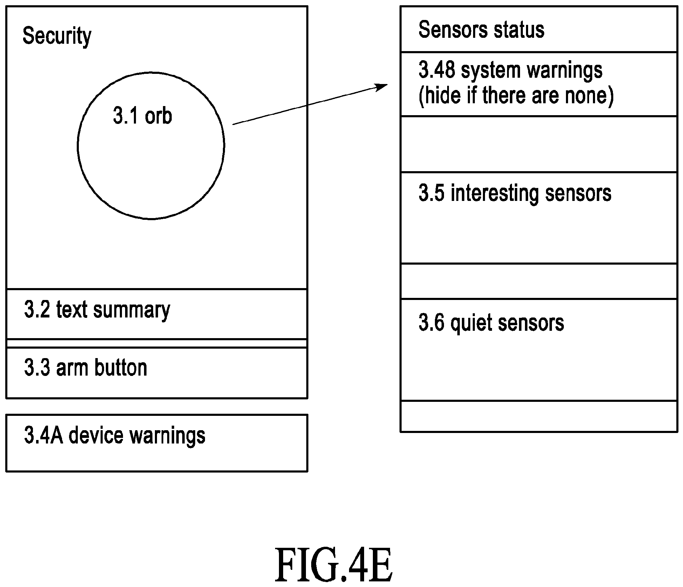

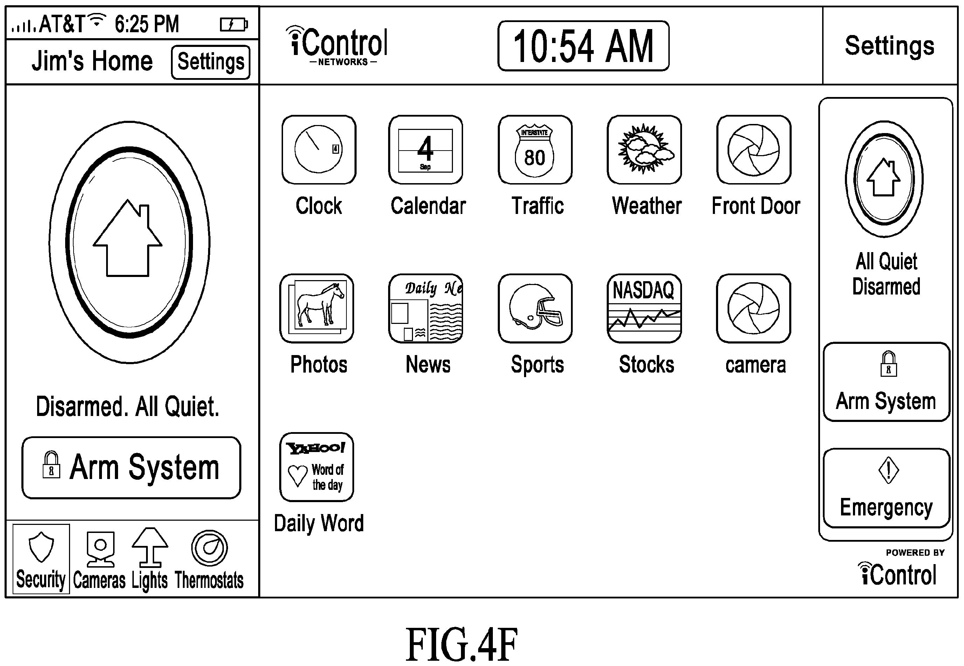

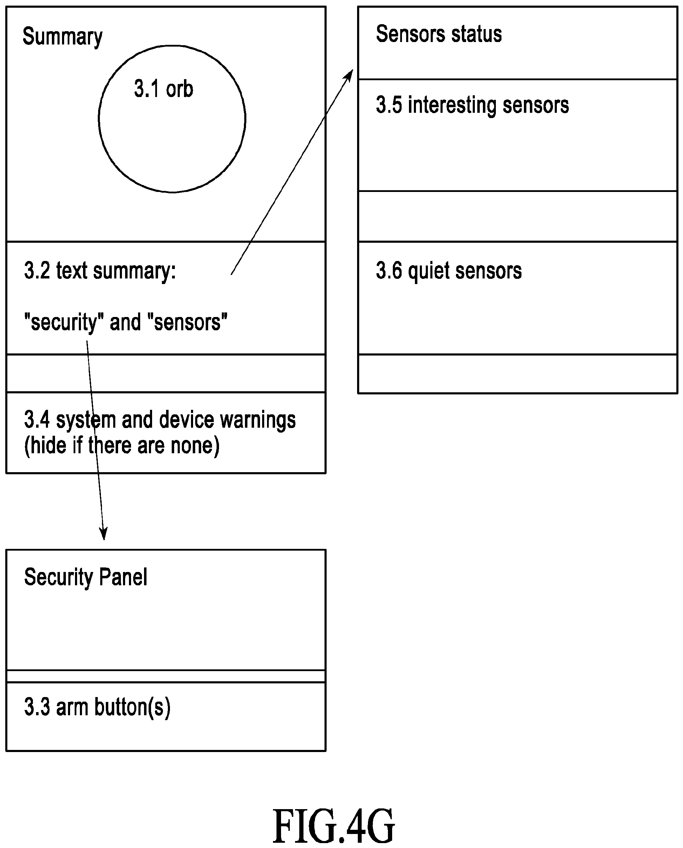

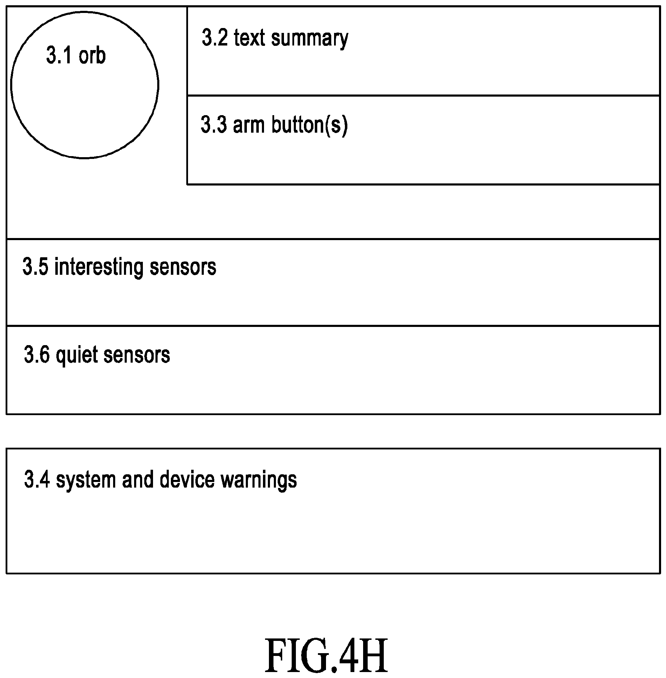

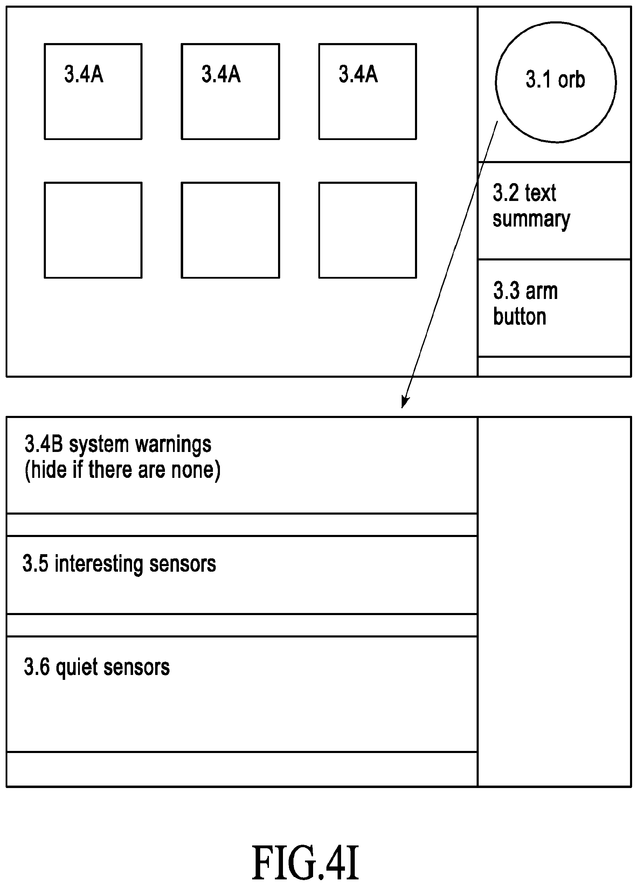

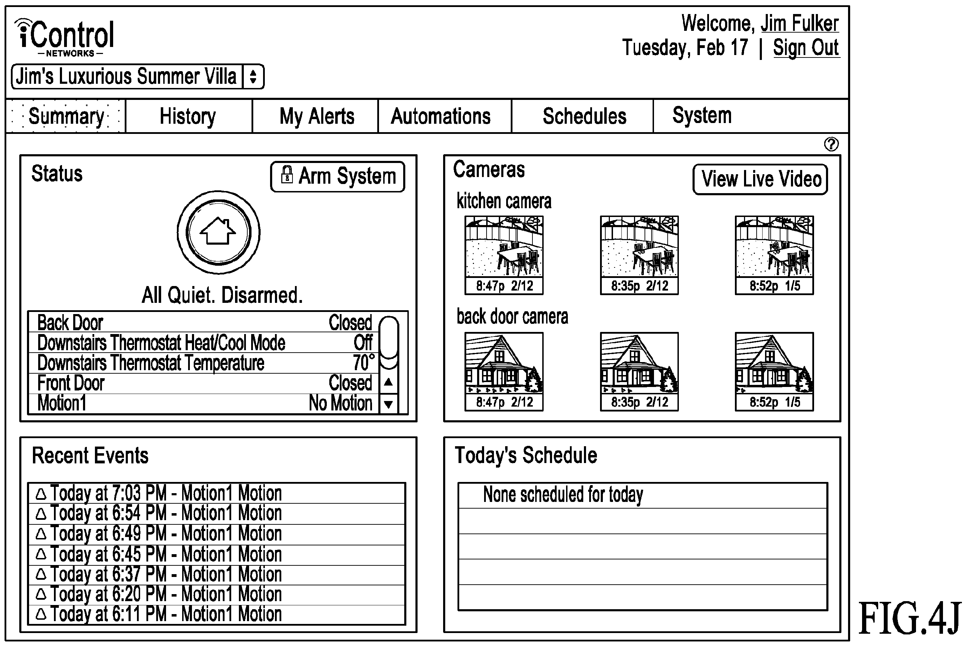

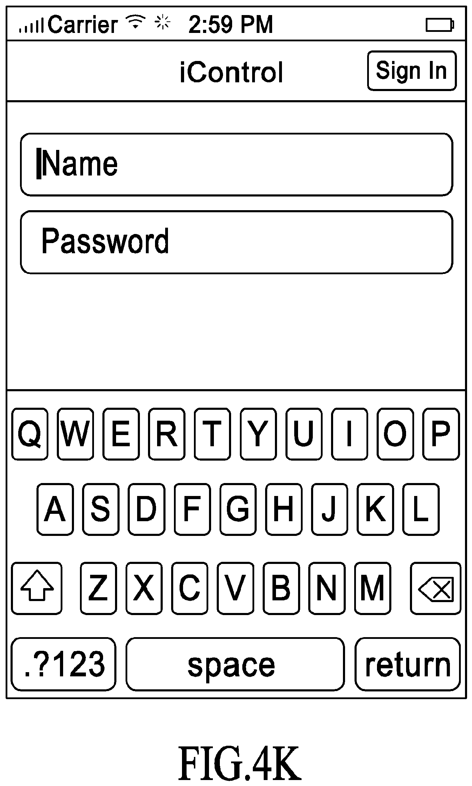

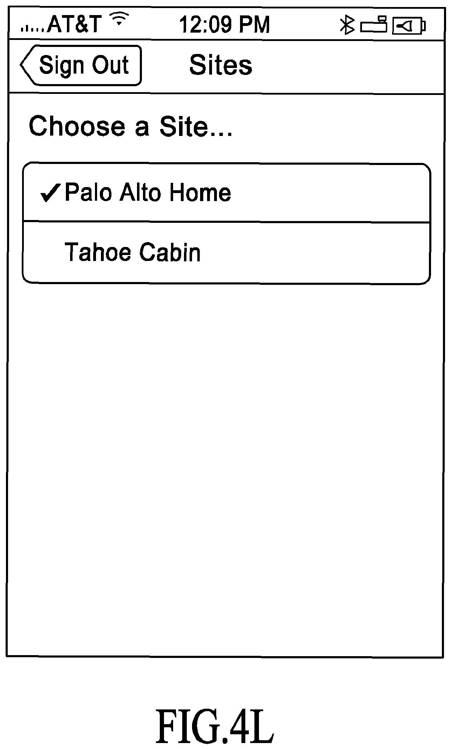

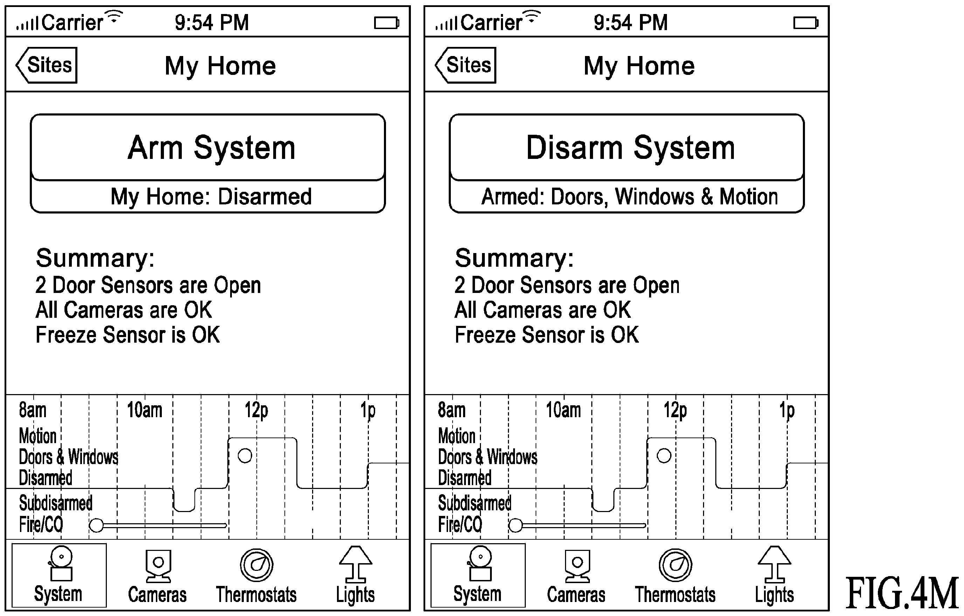

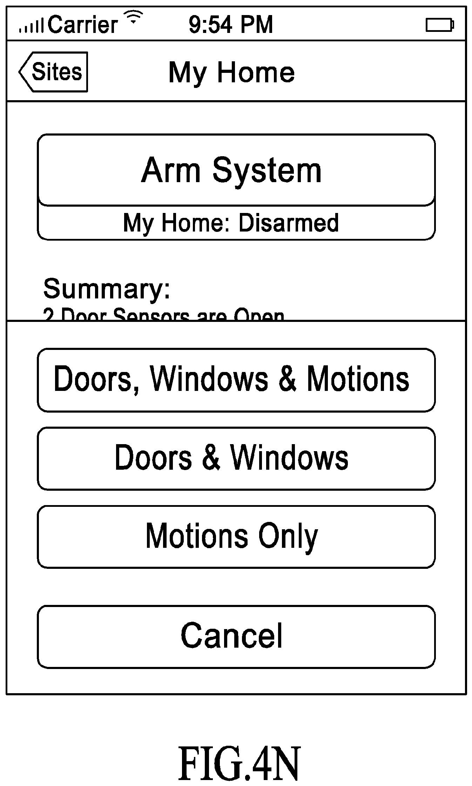

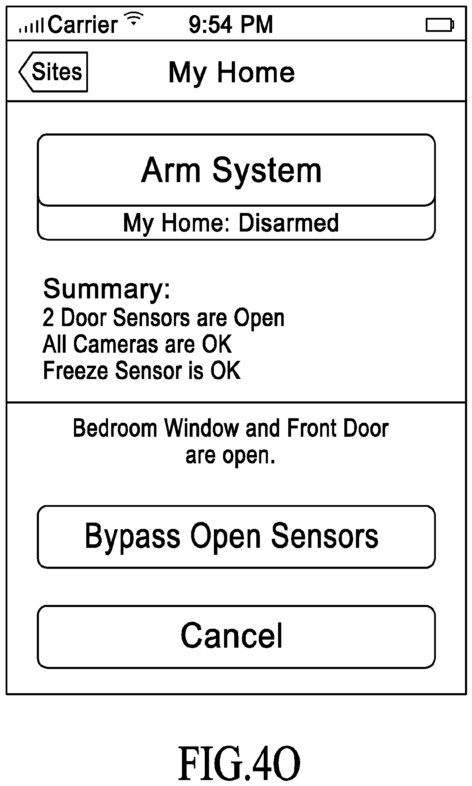

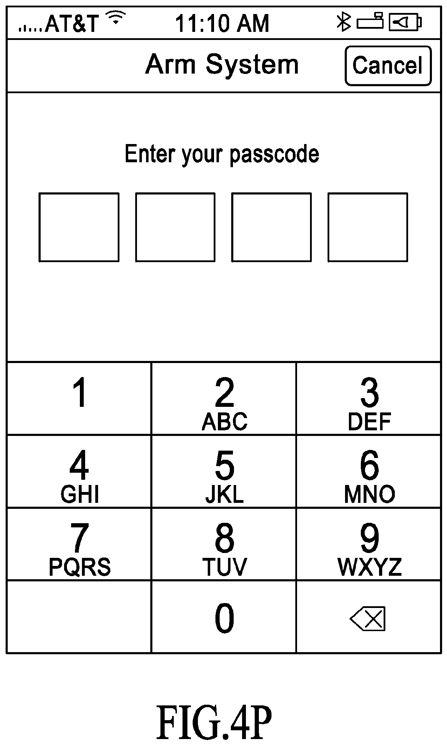

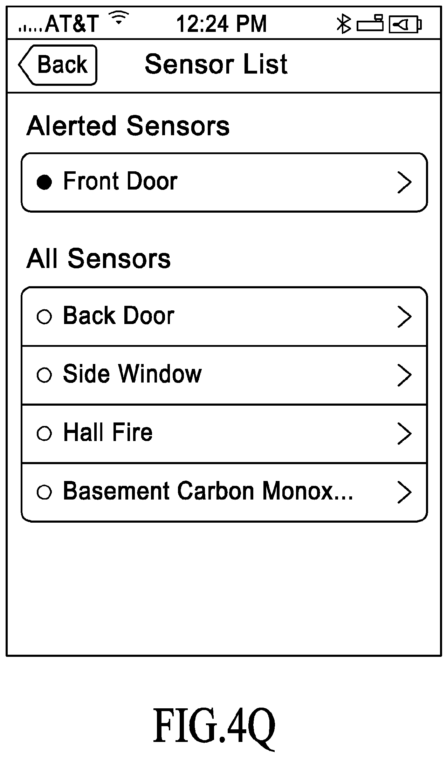

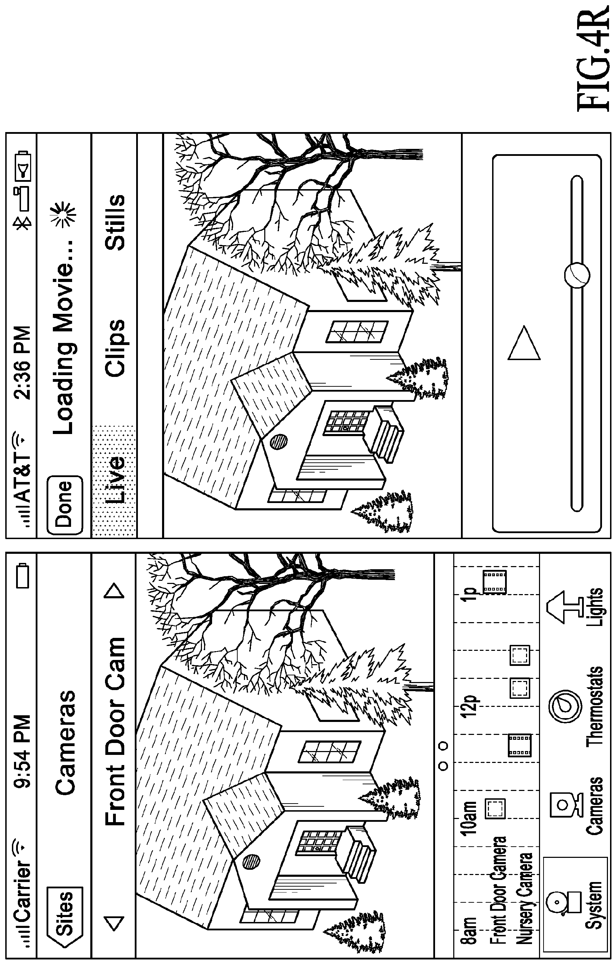

**Figure 4** is a block diagram of components of the gateway 102, under an embodiment. Depending on the specific set of functionality desired by the service provider deploying the integrated security system service, the gateway 102 can use any of a number of processors 402, due to the small footprint of the gateway application firmware. In an embodiment, the gateway could include the Broadcom BCM5354 as the processor for example. In addition, the gateway 102 includes memory (e.g., FLASH 404, RAM 406, etc.) and any number of input/output (I/O) ports 408.

Referring to the WAN portion 410 of the gateway 102 , the gateway 102 of an embodiment can communicate with the iConnect server using a number of communication types and/or protocols, for example Broadband 412, GPRS 414 and/or Public Switched Telephone Network (PTSN) 416 to name a few. In general, broadband communication 412 is the primary means of connection between the gateway 102 and the iConnect server 104 and the GPRS/CDMA 414 and/or PSTN 416 interfaces acts as back-up for fault tolerance in case the user's broadband connection fails for whatever reason, but the embodiment is not so limited.

Referring to the LAN portion 420 of the gateway 102, various protocols and physical transceivers can be used to communicate to off-the-shelf sensors and cameras. The gateway 102 is protocol-agnostic and technology-agnostic and as such can easily support almost any device networking protocol. The gateway 102 can, for example, support GE and Honeywell security RF protocols 422, Z-Wave 424, serial (RS232 and RS485) 426 for direct connection to security panels as well as WiFi 428 (802.11b/g) for communication to WiFi cameras.

The software or applications of the system of an embodiment include a system user interface (SUI) that provides an iconic, at-a-glance representation of security system status. The SUI is for use across all client types as described above with reference to Figure 1. The application(s) that provide the SUI can be a component of and/or hosted on one or more components of the integrated security system 100 of an embodiment, including the gateway 102, the iConnect Servers 104, and/or the remote client devices 120 (e.g., personal computers (PCs), cellular or mobile telephones, personal digital assistants (PDAs), processor-based remote devices, etc.).

The SUI includes a number of display elements that are presented across all types of client devices used to monitor status of the security system. The display elements of the SUI of an embodiment include, but are not limited to, an orb icon, text summary, arm button, device and system warnings, interesting sensors, and quiet sensors, as described in detail below. The SUI thus provides system status summary information (e.g., security and sensors) uniformly across all clients, Additionally, the SUI provides consistent iconography, terminology, and display rules across all clients as well as consistent sensor and system detail across clients.

Following is a description of the various states of the iControl sensors, and how these states are indicated uniformly across all clients using the SUI and other sensor information displays such as sensor lists and timelines.

Regarding the display elements of the SUI, **Figure 4A** (collectively Figures 4A/1 and 4A/2) shows the orb icon and corresponding text summary display elements, under an embodiment. Across all clients, when sensor detail is shown in a list or timeline, state is indicated using the proper icon, text summary and grouping. The orb icons and text summary elements of an embodiment generally represent system state 4001 to include the following states. "disarmed"; "armed stay", or "armed away"; "disarmed", or "sensor offline, tempered or low battery", armed away (or armed stay)", or "sensor offline, tampered or low battery"; "alarm", and "no iHub connection (broadband offline, etc.)", or "no panel connection". In addition to representing system state, the orb icons and text summary elements of an embodiment generally represent system status 4002 to include the following status: "all quiet"; "motion"; "open"; "open & motion".

Using various combinations of system state 4001 and status 4002, the orb icons of an embodiment indicate or represent one or more of the following: disarmed, all quiet 4010; disarmed, motion 4011; disarmed, sensors open 4012; disarmed, sensors open 4013; armed stay, all quiet 4014; armed stay, motion 4015; armed stay, sensors open 4016; armed stay, sensors open 4017; disarmed, sensor problem 4018; disarmed, sensor problem 4019; disarmed, sensor problem 4020; disarmed, sensor problem 4021; armed away, sensor problem 4022; armed away, sensor problem 4023; armed away, sensor problem 4024; armed away, sensor problem 4025; ALARM 4026; control box offline, or security panel offline 4027.

The text summary display element of the SUI includes or displays information including an alarm, security panel offline, and control box offline. Further, when the security panel and the control box are online and there are no current alarms, then the text summary section of the SUI includes a combination of one state summary and one status summary. The state summary of an embodiment is selected from among the following, but is not so limited: armed stay; armed away; disarmed; and armed maximum, night stay, etc. The status summary of an embodiment is selected from among the following, but is not so limited: sensor problem, sensors bypassed; sensors open; motion; all quiet.

The display elements of the SUI also include an arm button. The Arm button is used to arm/disarm the security panel. A single arm button (e.g., button labeled "Arm") can be used on the SUI of a first client device type (e.g., Touchscreen, iPhone, etc.). Two different buttons (e.g., "Arm Stay" and Arm Away") can be used on the SUI of a second client device type (e.g., web portal, mobile portal, etc.). In either embodiment, when the system is armed, the arm button ("Arm", "Arm Stay" and Arm Away") label will change to say "Disarm". If the system is in the process of arming, the button is disabled.

The display elements of the SUI include device and system warnings, as described above. These are informational warnings that are not associated with specific sensors, and involve more detail than can be displayed in the text summary display element. The device and system warnings display element is cumulative (e.g., built up in a list), but is not so limited. The device warnings include, but are not limited to, the following: camera(s) offline; light(s) offline; thermostat(s) offline; lock(s) offline; [future device(s)?] offline. The system warnings include, but are not limited to, the following: using cellular backup connection; using backup battery; sensor(s) bypassed; home management mode. [Mode]. The device and system warnings may be combined into one box, or indicated separately in respective regions or portions of the SUI, depending on a type of the client device (e.g., combined into one box on a web portal or a mobile portal, but indicated in separate boxes on a Touchscreen or iPhone device).

The list of all sensors includes door/window sensors, motion detectors, smoke, flood, fire, glass break, pressure mats, etc. The list of all sensors of an embodiment does not include cameras or locks, or non-security related devices such as lights, thermostats, energy, water etc. The list of sensors is split into groups that, in an embodiment, include interesting sensors, and quiet sensors, The interesting sensors are sorted to the top portion of the sensor list and the quiet sensors are sorted to the bottom portion of the sensor list. **Figure 4B** shows an example sensor list of the SUI, under an embodiment.

Any sensor that is tripped (e.g. open, motion, etc.) is categorized as an interesting sensor and place in the interesting sensor list Additionally, other sensor states such as tamper, low battery, or bypassed make them "interesting" regardless of their tripped state. The list of interesting sensors is sorted according to the following categories: offline; tamper; installing; low battery; bypassed; open/tripped; motion. Within each category, the sensors are sorted by sensor name.

Most interesting sensors are shown or displayed with an icon. **Figure 4C** shows icons of the interesting sensors, under an embodiment. A diamond bang icon (e.g., red diamond bang icon) represents tamper, offline, bypassed, installing, and/or battery. A triangle icon (e.g., yellow triangle icon) represents open or triggered. A wavy-lines icon represents motion. It is possible for an interesting sensor to have a green/closed icon (e.g., any quiet sensor that has been bypassed).

Following the state icon and the sensor name an embodiment displays status text. If a sensor is offline or tamper, it will show that text; otherwise the status text will show the tripped state: open, motion, tripped, etc. In addition, if a sensor is bypassed its state is "[state], bypassed"; this is the longest possible state. For example, a bypassed motion sensor that has recently detected motion would have the status: "Motion, bypassed" If a sensor has a low battery its state does not change, but it still joins the interesting sensors group.

The quiet sensors include sensors not categorized as interesting sensors. In general this means the sensor is closed or indicates no motion or is otherwise not tripped. **Figure 4D** shows the quiet sensor icon, under an embodiment. A circle icon (e.g., green circle icon) is a quiet sensor icon in an embodiment, and represents closed/no motion/quiet. If a door/window sensor is closed its state is "closed". If a motion sensor has not recently detected motion then its state is "no motion", Other sensors, such as a smoke detector, may say "quiet". Quiet sensors are listed alphabetically.

All types of client devices supported in an embodiment have the same status related sections on the SUI, but the locations of the status indicators or sections can be different depending on the client device, The status sections of an embodiment include, but are not limited to, the following: orb; arm state/sensor summary; change mode; device summary and system warnings, interesting sensors; and quiet sensors.

**Figure 4E** is a block diagram of a client device SUI (e.g., iPhone SUI), under an embodiment. The client interface of the iPhone, as one example client, has the orb on the security page. The text summary is below the orb. The arm button is below the text summary. Device summary is represented by the icons in the bottom horizontal tool bar If a camera, light, lock, or thermostat is offline then a red circle will appear in the upper-right corner of the toolbar's corresponding icon. System warnings appear as a group at the top of the sensor status screen. If there are no system warnings then the interesting sensors group is at the top of the sensor status screen (currently designed). Interesting sensors are below system warnings. Quiet sensors are below interesting sensors. **Figure 4F** is an example client device SUI (e.g., iPhone SUI), under an embodiment.

**Figure 4G** is a block diagram of a mobile portal client device SUI, under an embodiment. The client interface of the mobile portal, as one example client, has the orb at the top of the summary page below the site name. The text summary is below the orb. The arm buttons are on the security panel page (accessible via the "Security" link on the summary page). Device and system warnings are below the text summary. Interesting sensors are at the top of the sensor status page. Quiet sensors are below interesting sensors.

**Figure 4H** is a block diagram of a web portal client device SUI, under an embodiment. The client interface of the web portal, as one example client, has the orb in the upper-left corner of the security widget. The text summary is adjacent to the orb's right side. The arm button is adjacent to the orb's right side and below the text summary. Device and system warnings are in a separate box below the security panel widget, Interesting sensors span across the entire security widget below the orb. Quiet sensors span across the entire security widget below interesting sensors

**Figure 4I** is a block diagram of a touchscreen client device SUI, under an embodiment, The client interface of the touchscreen, as one example, has the orb at the top of the security bar. The text summary is below the orb The arm button is below the text summary. Device summary is represented by widget icons. System warnings are at the top of the sensor status screen, Interesting sensors are below system warnings. Quiet sensors are below interesting sensors, **Figure 4J** is an example touchscreen client device SUI, under an embodiment.

The SUI of an embodiment presents information to a user in a format that enables the rapid access and use of the data, in other words, a 'glanceable' user interface. In accordance with the embodiments herein, numerous presentation methods are described below, but the embodiment is not so limited, A presentation format of the SUI includes an interactive Timeline that presents history and state information in a graphical format. Another presentation format of the SUI includes a widget-based Slideshow timeline interface for presenting content on a home touchscreen. Yet another presentation format of the SUI includes a graphical interface for managing schedules, setpoints, and controls for lighting and thermostats and general energy usage from a security touchscreen or remote interface. Each of these presentation formats or methods of the SUI is described in detail below.

Embodiments of the SUI include a timeline user interface. The timeline user interface of an embodiment presents sensor state and/or history in a variable-length timeline. In this embodiment the timeline may be zoomed in/out with respect to time frame (e.g., the timescale may be dynamically changed between, for example, a 1 hour view, a 1 day view, and a 1 week view). In an embodiment on a dynamic touchscreen environment (e.g., the iPhone platform) this is accomplished by 'pinching' two fingers in to zoom in on time (i.e., cover a shorter period of time) or 'pinch out' to zoom out in time. In this embodiment, the timeline time window (i.e., the start and end points of the timeline) may also be altered by 'swiping' the timeline with a finger on the touchscreen. Other embodiments of dynamically changing the timeline include buttons to satisfy these functions, scrollbars to change the time window, and/or a magnifying slider that changes the 'zoom factor' of the time window.

An embodiment of the timeline user interface presents a history of camera events (e.g., photos taken, video clips captured, motion sensed, etc.). Such events are graphically depicted as icons. The user can then touch (or click) an icon and a viewer window presents and plays the content.

In another embodiment, the timeline user interface presents the state of an alarm panel and/or system. In this embodiment the ARM state of the panel is of particular interest and can be represented by a colored or shaded area in the timeline. For example, the timeline can appear GREEN when disarmed, ORANGE when ARMED Stay, and RED when ARMED Away.

In another embodiment, the timeline user interface presents the state of energy management components such as lighting and thermostats. In this embodiment, individual devices (e.g., light controllers) may be represented as lines when ON and nothing when OFF. The thermostat set-point can be represented in a bar-chart format showing a step function whenever a setpoint is changed. Additionally the actual temperature measured by the thermostat or other sensor is presented as a temperature line that varies over time.

Regarding the timeline user interface in a dynamic touchscreen environment, the iControl iPhone application referenced above allows access to remote home monitoring and alarm system functions via the iPhone. The iPhone application UI will act as a design center and will influence directly or indirectly the desktop widget UI, the Web/WAP phone UI, the Web Portal UI, the Touchscreen UI, the interactive TV UI and other future application UIs.

The iControl application will be launched from a single iControl icon from the iPhone home screen. The application will be written as a native iPhone application, in the style of a productivity application as defined by iPhone Human Interface guidelines, with levels of hierarchy and a tab bar for navigating four main views as follows: System Status, Cameras; Thermostats; Lighting.

Each view is comprised of an Event Timeline, and a Viewer In general, each view can have multiple instantiations (e.g. multiple cameras or multiple thermostats, each with the same functionality pointing to different devices) accessed by swiping a finger L-R or R-L. A page indicator displays a dot for each of instantiations. A glowing dot indicates the currently visible view.

Component data (e.g., photo list, event lists, photos, video clips, etc.) should be cached in persistent memory whenever possible, and flushed after a configurable period of time (e.g., one-week default). Upon initial boot, the application should first load local data (e.g., the history of the alarm panel) and then request incremental data from the server. Once a photo or clip has been viewed, this content is cached in the same way. An embodiment provides one or more of the following but is not so limited: rapid startup time if the application has been recently used; rapid response time for timelines (scroll around, zoom in/out); rapid display/play of content if previously viewed; minimal server and network loading.

A sign in screen establishes a secure session with the iConnect servers over an encrypted connection (https/SSL). Username and Password are entered only upon the initial sign in for the application. Sign in is not used while the application is still resident in memory even if quiescent for a period of time. Note that in the event a user attempts to ARM/DISARM or to perform an administrative function, a login or passcode will be required, **Figure 4K** is an example sign-in screen of the SUI, under an embodiment

The following are provided with the Sign In screen of an embodiment, but the embodiment is not so limited: the keyboard is automatically shown; tapping the "Sign In" button on the titlebar will submit the entered username and password; the username is shown in the clear, and the password is hidden; the username is remembered from last signin. The Password field value is always cleared; if passcode error, "Incorrect user name or password entered" or "Multiple failed sign in attempts" will appear below the password field.

If a user has multiple sites, this page allows the user to select different sites. When signing in, the first site is automatically selected and this screen is bypassed. The user can always go back and select another site from this page. If a user has only one site, none of this is shown. **Figure 4L** is an example site listing screen of the SUI, under an embodiment.

A system status screen allows the user to get a quick overview of the state of the security system including alarm panel and associated sensors. The System view includes one or more of main security panel information, a list of sensors and status, and a detailed view of each sensor type (e.g. door/windows, freeze, motion, etc).

**Figure 4M** is an example system status screen of the SUI, under an embodiment. The Navigation Bar displays the name of the current site (e.g., "MY HOME"). A "Sites" button will navigate to the list of available sites. If there is only one site, the button will be a "Sign Out" button. An "Arm System" and "Disarm System" button allows the user to arm or disarm the security system, respectively. Arm Status (e.g., "My Home: Disarmed", "Armed: Doors, Windows & Motion") appears below the Arm or Disarm button and displays the current state. A Summary Area of the SUI displays relevant status information of the security system. A Timeline shows a scrollable, scalable, historical view of important system activity.

When the Arm System button is pressed or selected, an Action Sheet allows the user to select the arming level. An embodiment includes the following choices: Doors, Windows & Motion; Doors & Windows, Motions Only Cancel arming. **Figure 4N** is an example action sheet screen of the SUI, under an embodiment.

If sensors are open while arming, the panel will send a protest message listing the sensors that need to be bypassed. A bypass dialog will display a list of the open sensors to bypass. If more than two sensors have to be bypassed, the first will be named, followed by "and n more sensors are open". The user can choose to bypass all sensors or cancel the arming process. **Figure 4O** is an example sensor bypass screen of the SUI, under an embodiment.

After selecting arm level and bypassing open sensors, the user enters the proper code to arm the security system. **Figure 4P** is an example code entry screen of the SUI, under an embodiment. If the code is not entered correctly, the enter code screen reappears with "ReEnter your passcode" as the label.

The arm state is indicated on the system screen below the Arm/Disarm button. The state can be one of the following in an embodiment: Disarmed - green background, Armed: Doors & Windows - red background; Armed: Doors, Windows & Motion - red background; Armed: Motion Only - red background; Subdisarmed - yellow background The Arm/Disarm button label will read "Disarm System" if the system is armed, or "Arm System" if the system is disarmed. If the system state is Subdisarmed, the button label will read "Disarm System". Arm/disarm state may be indicated on each screen, possibly by altering the "system" icon and color of background of the tab bar, or color of title bar or a symbol in top status bar

The current status of sensors is shown in summary ("All Okay", "3 Sensors Open", etc) and can be selected to give a detailed view of all sensors in the system. Clicking on any sensor in the list navigates to a sensor details screen, showing an individual timeline for each sensor activity. **Figure 4Q** is an example sensor status screen of the SUI, under an embodiment

The timeline of sensor and security system activity displayed on the SUI allows the user to navigate (using on-screen controls or swiping and pinching) a history of system activity. The type of information displayed in the timeline of an embodiment includes but is not limited to the following: Intrusion alarm events; Fire/Smoke events; Environmental (Carbon Monoxide, flood, temperature) events; Trouble (low battery, tamper) events; Panic (remote or keypad panic button) events. Note that non-critical events are not displayed, such as motion, when motion sensors are not armed, or windows opening when doors and windows are not armed.

The timeline of an example embodiment is divided vertically into five rows, with each row representing a different arm level for the security panel as follows. "Motion" displays arm level for motion detectors; "Doors & Windows" displays arm level for doors and windows armed; "Disarmed" displays arm level for security sensors, "Subdisarmed" displays arm level for gun cabinets, liquor cabinets; "Fire/ CO" displays arm level for fire/carbon monoxide (CO) sensors (e.g., these cannot be disarmed).

The arm level is indicated on the timeline using a shaded area. Events are indicated within these areas accordingly. For example, a fire alarm will always appear in the lowest level, no matter what the arm level. A gun cabinet sensor will show unless the system has been subdisarmed. A motion sensor will display as an event only if motion sensors have been armed. A span of time is indicated by a solid line extending from the initial event indicator, of the same color as the event indicator.

The user can return to the current time by tapping the "Now" button (to be designed)

As an example, the time intervals of an embodiment allow users to 'zoom' in and out of timeframes to see different timescale. The embodiment minimizes server calls and provides a 'snappy' interface on the client (each screen displays within two (2) seconds, even if all data is not yet present). The following timespans of information are presented as examples, but the embodiment is not so limited: system (alarm events) include, but are not limited to, 6 hours, 1 day, 3 days, 1 week (e.g., loaded and cached at idle time except 6-hour period which is updated as needed; screen should pop up with latest information, and once latest 6 hour time period is updated it then refreshes); camera data timespans include, but are not limited to, 6 hours, 1 day, 3 days, 1 week (e.g., last 6 hours of actual clips should be pre-loaded) (data indicating clips, pictures should be loaded and cached like system events); thermostat data timespans include, but are not limited to, 6 hours, 1 day, 3 days, 1 week, and thermostat data plot points are pre-loaded.

A "CAMERAS" screen allows the user to view live and archived pictures and video from all cameras on a network. The user can view live video from different cameras in a multi-camera system by tapping the left/right arrows in the bar at the top of the video feed. The user can also flick left/right to navigate between cameras. A page indicator shows the currently visible camera. **Figure 4R** is an example camera screen of the SUI, under an embodiment.

Live video plays by default in the camera view. By default, live video for the initial camera is shown. Live video within a Wifi LAN uses direct MPEG camera feed instead of feeding through server, but is not so limited. Tapping on the video activates or displays the full-screen player for that camera. The controls are visible at first and subsequently fade away, Controls available include controls to select live video (e.g., "Live"), video clips (e.g., "Clips"), still pictures (e.g., "Stills"), a play/pause icon to control videos, and an icon to exit the viewing mode and return to the main screen (e.g., "Done").

Archived pictures can be viewed by pressing the "Pictures" button or by pressing a picture icon in the timeline. Picture options are displayed by tapping on the picture; tapping away will hide the options. Picture options: next/previous picture, send via email, send via SMS, date/time stamp. A user can enter a date to go to pictures for that date.

Video clips can be viewed by pressing the "Clips" button or by pressing a video clip icon in the timeline. Video clips are typically less than 30 seconds each and can be played and paused. Video clip options are displayed when initially showing the video. Playing the video clip will hide the options. Video clip options: play, next/previous clip, send via email, date/time stamp, progress indicator with playback head, total time, elapsed time. When the video clip is finished, the options reappear. User can enter a date to go to clips for that date.

The timeline allows the user to navigate (using on-screen controls or swiping and pinching) all pictures and video clips available for all cameras. Different cameras are shown in rows within the timeline. Pictures are shown as picture icons in the appropriate camera's row. Video clips are shown as video clip icons. Tapping on picture or video icons shows that content in the viewer. The icon representing the content currently being viewed is highlighted. The user can return to the current time by tapping the "Now" button.

A thermostat screen or view allows the user to monitor and adjust current settings of one or more thermostats installed at the location. Users can view the information of at least one thermostat on a thermostat screen of the SUI. The user can flick left/right to select other thermostats in the system. Current position is shown by a page indicator. **Figure 4S1** is an example thermostat screen of the SUI, under an embodiment. **Figure 4S2** is an example thermostat screen of the SUI that displays energy usage information in addition to thermostat information, under an embodiment.

A current thermostat setting is shown and can be adjusted up or down in one degree increments, either using on-screen controls or by swiping up/down. Current Inside and Estimated Outside Temperature and Condition (from web) is shown A Heat, Cool, Off mode switch is used to select HVAC mode. Fahrenheit or Celsius is a preference that is set in the portal for the site.

The timeline allows the user to navigate (using on-screen controls or swiping and pinching) all temperature and thermostat history available for the selected thermostat The timeline shows the set point line, and inside temperature curves. The user can return to the current time by tapping the "Now" button.

A lighting screen allows the user to view and adjust current settings of one or more lights installed on the location. **Figure 4T** is an example lighting screen of the SUI, under an embodiment. All lights for a location are shown in a scrolling list. Current light states are shown and can be switched on or off. The dimmer setting for that light can be adjusted by moving the slider, if applicable.

The timeline allows the user to navigate (using on-screen controls or swiping and pinching) all lighting history available for all lights. The timeline shows light on/off spans and daylight and nighttime curves. The user can return to the current time by tapping the "Now" button.

Server support is provided using numerous different requests. Each would use SSL and contain the user's login credentials (stored by the application on the iPhone) so that the server can be stateless but cache authenticated sessions as an optimization when polls are frequent enough.

An application of an embodiment issues requests at startup to determine which devices are to be tracked and populates a local database of history for events of those devices, The application polls periodically for new events using received timestamps of the last events. For example, the application retrieves information of available networks. Regarding the system screen, the application issues one or more of the following requests for data: GetVariable (current armed state); SetVariable (arm/disarm); GetDevicesByType (sensors); GetVariablesHistoryForPeriod (activity chart). Regarding the Camera Screen, the application issues one or more of the following requests for data: GetVideoThumbnail; GetPictureThumbnail; GetVideoRelay; GetDevicesByType (cameras); GetVariablesHistoryForPeriod (activity chart). Regarding the Thermostat Screen, the application issues one or more of the following requests for data: GetVariable (temperature, status, set points), SetVariable (status, set points); GetDevicesByType (thermostat); GetVariablesHistoryForPeriod (activity chart), Regarding the Light Screen, the application issues one or more of the following requests for data: GetVariable (switch value); SetVariable (switch value); GetDevicesByType (lights), GetVariablesHistoryForPeriod (activity chart).

The embodiments herein include a slideshow timeline editor (STE). **Figure 4U** is an example slideshow timeline editor (STE), under an embodiment. The STE is a user interface and software application that enables the creation and management of multiple content formats and sources in a 'screensaver' for a display. Examples of appropriate displays include: touchscreens, mobile phones, PDAs, computers, TVs, etc.

In the embodiment, the STE includes a user interface comprising a widget palette, preview screen, and slideshow timeline tool. In an embodiment, widgets may be standard internet widgets such as Yahoo Konfabulator, Google widgets, or Adobe Flash widgets. Widget icons and descriptive text for icons available in the system are presented in the 'Available Widgets' widget palette.

When a user selects a widget icon (by clicking or touching or using a keyboard or other input device) the widget then is loaded by the Preview screen, and runs in that screen enabling the user to see the functionality and UI of that widget. Widgets may be selected and moved into the Slideshow Timeline Tool (for example by clicking and dragging, through a popup menu, etc.). Once placed in the timeline, the widget may be moved or stretched along the timeline to specify a start and stop time for that widget to run (or 'play'). Multiple widgets may be placed in this way along the timeline. Each widget's size and location on the timeline dictates to the system a start time and duration (and end time) for that widget to 'play' during the slideshow.

Once created, the slideshow sequence may be saved in the system (for example, saved as a preference for a specific user and used as their default screensaver). When played, the Slideshow begins at the first widget (leftmost widget in the picture) and then steps through each widget according to the timeline layout. During its allotted time period, the widget presents whatever information and controls the widget designer intended. For example, as shown in the DOC, a slideshow might include a Photo widget that plays for 15 seconds, followed by 5 seconds of weather, 10 more seconds of photo, 10 seconds of News, 5 seconds for a Front Door Camera widget, 10 seconds of Photos, and 5 seconds of Sports. Once completed, and depending upon user preferences, the Slideshow animation loops back to the starting point and continues.

In another embodiment, the Slideshow Timeline Editor itself may run on a touchscreen. The Slideshow Timeline Editor and slideshows of an embodiment are part of an interactive security system. The Slideshow of yet another embodiment can be started manually by user interaction such as a button press.

In another embodiment, a widget that is present on a security touchscreen may be automatically started or stopped through the use of a time scheduling tool or a notification from another device. For example, a camera widget might be notified to start playing live video when an event such as a door-opening is detected by a security system.

In another embodiment, the Slideshow animation sequence may be started by a time schedule for the purpose of satisfying an alarm clock function or timer (e.g., a 'Wake up' slideshow).

In another embodiment, multiple slideshows may be created and used by a plurality of touchscreens in a home environment. In this embodiment, each touchscreen has its own preferences relating to which Slideshows operate and when they operate,

In another embodiment, Slideshows created by one user can be shared with other users in different locations.

In another embodiment, the Slideshow Timeline editor combines widgets as described with events such that the Slideshow continues playing a widget prior to an event occurring (e.g., a simple slideshow could contain 15 seconds of Photos, followed by a 'Door Open' event, followed by 15 seconds of Weather). In this case, the Slideshow plays Photos for a minimum of 15 seconds, for example, and then continues playing Photos until either the Slideshow is manually stopped or a Door Open event is received by the player. Once received, the Slideshow immediately begins playing Weather for 15 seconds, and then loops back to the beginning of the slideshow.

In another embodiment, the Slideshow Timeline editor operates the same as described above, but includes the capability to embed 'Actions' into the sequence (e.g., the above case where we have 15 sec Photos, 'Door open' event, 'Turn Light On' Action for 20 sec, followed by Weather for 15 sec). In this case, once the Door Open event is received, the light turns on for 20 sec, and then the weather plays for 15 sec.

In another embodiment, The Slideshow can end after a predetermined number of loops (e.g., 1 loop, 2 loops, etc.).

In another embodiment, the Slideshow Timeline editor has multiple 'tracks' (as shown in the Doc). Each track plays simultaneously, and represents a different aspect of the Slideshow. Examples of tracks include Widgets (as described), Ticker (e.g. an overlay portion of the screen that plays independently from the underlying Widgets slideshow, such as a Stock ticker), and a soundtrack that plays music or sounds. Other tracks include 'background video clips', Events and Actions (as described above, but on a separate 'track').

The embodiments herein include an energy management user interface (EMUI). The EMUI is an intuitive graphical interface to manage time-based controls in an energy management system. **Figures 4V-4Y** show example screens or pages of the EMUI, under an embodiment. **Figures 4V** **and** **4W** show example thermostat control screens or pages of the EMUI, under an embodiment. **Figure 4X** shows an example lighting control screen or page of the EMUI, under an embodiment. **Figure 4Y1** shows an example energy usage screen or page of the EMUI, under an embodiment. **Figure 4Y2** shows an example energy usage screen or page of the EMUI, under an embodiment.

The EMUI provides a multi-phase interface that allows system components such as lights or thermostat set-points to vary depending upon the time of day. Conventional thermostat systems offer multiple set points but suffer from extremely cumbersome and non-intuitive UIs. The thermostat control screens or pages of the EMUI (Figures B and C) provides four phases (e.g., sunrise, day, eve, night) but the embodiment is not so limited. Each phase may use an intuitive picture (e.g., a sun or moon) to indicate the timeframe associated with the phase. In an embodiment the columns correspond to phases and the rows to the individual devices or groups of devices to be controlled.

In each row, a set point is displayed corresponding to each phase. For example, the Master Bedroom thermostat is set to 72 degrees in all phases. The Kitchen is set to 68 degrees in the Evening phase.

In an embodiment, a Master Settings row controls all rows that are turned off (e.g., grayed-out).

In an embodiment, a green indicator 'LED' shows that a Room Thermostat (row) is active.

In an embodiment, the lighting control screen or page of the EMUI (Figure D) controls lighting. Selection of a set point (column) changes the light image from grey (off) to varying colors or pictures indicating relative brightness.

In an embodiment, selecting a set point allows the user to enter a new value (e.g. from a keyboard, through onscreen up/down arrows, from an onscreen keyboard).

In an embodiment, selecting the Phase header (graphic) prompts the user to set a start time for that phase.

In an embodiment, the energy usage screen or page of the EMUI is a component of an overall energy management system that can display energy usage information in a graphical format.

The integrated security system includes couplings or connections among a variety of IP devices or components, and the device management module is in charge of the discovery, installation and configuration of the IP devices coupled or connected to the system, as described above. The integrated security system of an embodiment uses a "sandbox" network to discover and manage all IP devices coupled or connected as components of the system. The IP devices of an embodiment include wired devices, wireless devices, cameras, interactive touchscreens, and security panels to name a few. These devices can be wired via ethernet cable or Wifi devices, all of which are secured within the sandbox network, as described below. The "sandbox" network is described in detail below.

**Figure 5** is a block diagram 500 of network or premise device integration with a premise network 250, under an embodiment. In an embodiment, network devices 255-257 are coupled to the gateway 102 using a secure network coupling or connection such as SSL over an encrypted 802.11 link (utilizing for example WPA-2 security for the wireless encryption). The network coupling or connection between the gateway 102 and the network devices 255-257 is a private coupling or connection in that it is segregated from any other network couplings or connections. The gateway 102 is coupled to the premise router/firewall 252 via a coupling with a premise LAN 250. The premise router/firewall 252 is coupled to a broadband modem 251, and the broadband modem 251 is coupled to a WAN 200 or other network outside the premise. The gateway 102 thus enables or forms a separate wireless network, or sub-network, that includes some number of devices and is coupled or connected to the LAN 250 of the host premises. The gateway sub-network can include, but is not limited to, any number of other devices like WiFi IP cameras, security panels (e.g., IP-enabled), and security touchscreens, to name a few, The gateway 102 manages or controls the sub-network separately from the LAN 250 and transfers data and information between components of the sub-network and the LAN 250/WAN 200, but is not so limited. Additionally, other network devices 254 can be coupled to the LAN 250 without being coupled to the gateway 102.

**Figure 6** is a block diagram 600 of network or premise device integration with a premise network 250, under an alternative embodiment. The network or premise devices 255-257 are coupled to the gateway 102 The network coupling or connection between the gateway 102 and the network devices 255-257 is a private coupling or connection in that it is segregated from any other network couplings or connections. The gateway 102 is coupled or connected between the premise router/firewall 252 and the broadband modem 251. The broadband modem 251 is coupled to a WAN 200 or other network outside the premise, while the premise router/firewall 252 is coupled to a premise LAN 250 As a result of its location between the broadband modem 251 and the premise router/firewall 252, the gateway 102 can be configured or function as the premise router routing specified data between the outside network (e.g., WAN 200) and the premise router/firewall 252 of the LAN 250. As described above, the gateway 102 in this configuration enables or forms a separate wireless network, or sub-network, that includes the network or premise devices 255-257 and is coupled or connected between the LAN 250 of the host premises and the WAN 200, The gateway sub-network can include, but is not limited to, any number of network or premise devices 255-257 like WiFi IP cameras, security panels (e.g., IP-enabled), and security touchscreens, to name a few. The gateway 102 manages or controls the sub-network separately from the LAN 250 and transfers data and information between components of the sub-network and the LAN 250/WAN 200, but is not so limited. Additionally, other network devices 254 can be coupled to the LAN 250 without being coupled to the gateway 102.

The examples described above with reference to Figures 5 and 6 are presented only as examples of IP device integration. The integrated security system is not limited to the type, number and/or combination of IP devices shown and described in these examples, and any type, number and/or combination of IP devices is contemplated within the scope of this disclosure as capable of being integrated with the premise network.

The integrated security system of an embodiment includes a touchscreen (also referred to as the iControl touchscreen or integrated security system touchscreen), as described above, which provides core security keypad functionality, content management and presentation, and embedded systems design, The networked security touchscreen system of an embodiment enables a consumer or security provider to easily and automatically install, configure and manage the security system and touchscreen located at a customer premise. Using this system the customer may access and control the local security system, local IP devices such as cameras, local sensors and control devices (such as lighting controls or pipe freeze sensors), as well as the local security system panel and associated security sensors (such as door/window, motion, and smoke detectors). The customer premise may be a home, business, and/or other location equipped with a wired or wireless broadband IP connection.

The system of an embodiment includes a touchscreen with a configurable software user interface and/or a gateway device (e.g., iHub) that couples or connects to a premise security panel through a wired or wireless connection, and a remote server that provides access to content and information from the premises devices to a user when they are remote from the home. The touchscreen supports broadband and/or WAN wireless connectivity. In this embodiment, the touchscreen incorporates an IP broadband connection (e.g., Wifi radio, Ethernet port, etc.), and/or a cellular radio (e.g., GPRS/GSM, CDMA, WiMax, etc.). The touchscreen described herein can be used as one or more of a security system interface panel and a network user interface (UI) that provides an interface to interact with a network (e.g., LAN, WAN, internet, etc.).

The touchscreen of an embodiment provides an integrated touchscreen and security panel as an all-in-one device, Once integrated using the touchscreen, the touchscreen and a security panel of a premise security system become physically co-located in one device, and the functionality of both may even be co-resident on the same CPU and memory (though this is not required).

The touchscreen of an embodiment also provides an integrated IP video and touchscreen UI. As such, the touchscreen supports one or more standard video CODECs/players (e.g., H.264, Flash Video, MOV, MPEG4, M-JPEG, etc.). The touchscreen UI then provides a mechanism (such as a camera or video widget) to play video. In an embodiment the video is streamed live from an IP video camera. In other embodiments the video comprises video clips or photos sent from an IP camera or from a remote location.

The touchscreen of an embodiment provides a configurable user interface system that includes a configuration supporting use as a security touchscreen. In this embodiment, the touchscreen utilizes a modular user interface that allows components to be modified easily by a service provider, an installer, or even the end user. Examples of such a modular approach include using Flash widgets, HTML-based widgets, or other downloadable code modules such that the user interface of the touchscreen can be updated and modified while the application is running. In an embodiment the touchscreen user interface modules can be downloaded over the internet. For example, a new security configuration widget can be downloaded from a standard web server, and the touchscreen then loads such configuration app into memory, and inserts it in place of the old security configuration widget. The touchscreen of an embodiment is configured to provide a self-install user interface.

Embodiments of the networked security touchscreen system described herein include a touchscreen device with a user interface that includes a security toolbar providing one or more functions including arm, disarm, panic, medic, and alert. The touchscreen therefore includes at least one screen having a separate region of the screen dedicated to a security toolbar. The security toolbar of an embodiment is present in the dedicated region at all times that the screen is active.

The touchscreen of an embodiment includes a home screen having a separate region of the screen allocated to managing home-based functions. The home-based functions of an embodiment include managing, viewing, and/or controlling IP video cameras. In this embodiment, regions of the home screen are allocated in the form of widget icons, these widget icons (e.g. for cameras, thermostats, lighting, etc) provide functionality for managing home systems. So, for example, a displayed camera icon, when selected, launches a Camera Widget, and the Camera widget in turn provides access to video from one or more cameras, as well as providing the user with relevant camera controls (take a picture, focus the camera, etc.)

The touchscreen of an embodiment includes a home screen having a separate region of the screen allocated to managing, viewing, and/or controlling internet-based content or applications. For example, the Widget Manager UI presents a region of the home screen (up to and including the entire home screen) where internet widgets icons such as weather, sports, etc. may be accessed). Each of these icons may be selected to launch their respective content services.

The touchscreen of an embodiment is integrated into a premise network using the gateway, as described above. The gateway as described herein functions to enable a separate wireless network, or sub-network, that is coupled, connected, or integrated with another network (e.g., WAN, LAN of the host premises, etc.). The sub-network enabled by the gateway optimizes the installation process for IP devices, like the touchscreen, that couple or connect to the sub-network by segregating these IP devices from other such devices on the network. This segregation of the IP devices of the sub-network further enables separate security and privacy policies to be implemented for these IP devices so that, where the IP devices are dedicated to specific functions (e.g., security), the security and privacy policies can be tailored specifically for the specific functions. Furthermore, the gateway and the sub-network it forms enables the segregation of data traffic, resulting in faster and more efficient data flow between components of the host network, components of the sub-network, and between components of the sub-network and components of the network.

The touchscreen of an embodiment includes a core functional embedded system that includes an embedded operating system, required hardware drivers, and an open system interface to name a few. The core functional embedded system can be provided by or as a component of a conventional security system (e.g., security system available from GE Security). These core functional units are used with components of the integrated security system as described herein, Note that portions of the touchscreen description below may include reference to a host premise security system (e.g., GE security system), but these references are included only as an example and do not limit the touchscreen to integration with any particular security system.

As an example, regarding the core functional embedded system, a reduced memory footprint version of embedded Linux forms the core operating system in an embodiment, and provides basic TCP/IP stack and memory management functions, along with a basic set of low-level graphics primitives. A set of device drivers is also provided or included that offer low-level hardware and network interfaces, In addition to the standard drivers, an interface to the RS 485 bus is included that couples or connects to the security system panel (e.g., GE Concord panel). The interface may, for example, implement the Superbus 2000 protocol, which can then be utilized by the more comprehensive transaction-level security functions implemented in PanelConnect technology (e.g SetAlarmLevel (int level, int partition, char *accessCode)). Power control drivers are also provided.

**Figure 7** is a block diagram of a touchscreen 700 of the integrated security system, under an embodiment. The touchscreen 700 generally includes an application/presentation layer 702 with a resident application 704, and a core engine 706. The touchscreen 700 also includes one or more of the following, but is not so limited: applications of premium services 710, widgets 712, a caching proxy 714, network security 716, network interface 718, security object 720, applications supporting devices 722, PanelConnect API 724, a gateway interface 726, and one or more ports 728.

More specifically, the touchscreen, when configured as a home security device, includes but is not limited to the following application or software modules: RS 485 and/or RS-232 bus security protocols to conventional home security system panel (e.g., GE Concord panel); functional home security classes and interfaces (e.g. Panel ARM state, Sensor status, etc.), Application/Presentation layer or engine; Resident Application; Consumer Home Security Application; installer home security application; core engine; and System bootloader/Software Updater. The core Application engine and system bootloader can also be used to support other advanced content and applications. This provides a seamless interaction between the premise security application and other optional services such as weather widgets or IP cameras.

An alternative configuration of the touchscreen includes a first Application engine for premise security and a second Application engine for all other applications. The integrated security system application engine supports content standards such as HTML, XML, Flash, etc. and enables a rich consumer experience for all 'widgets', whether security-based or not. The touchscreen thus provides service providers the ability to use web content creation and management tools to build and download any 'widgets' regardless of their functionality.

As discussed above, although the Security Applications have specific low-level functional requirements in order to interface with the premise security system, these applications make use of the same fundamental application facilities as any other 'widget', application facilities that include graphical layout, interactivity, application handoff, screen management, and network interfaces, to name a few.

Content management in the touchscreen provides the ability to leverage conventional web development tools, performance optimized for an embedded system, service provider control of accessible content, content reliability in a consumer device, and consistency between 'widgets' and seamless widget operational environment. In an embodiment of the integrated security system, widgets are created by web developers and hosted on the integrated security system Content Manager (and stored in the Content Store database). In this embodiment the server component caches the widgets and offers them to consumers through the web-based integrated security system provisioning system. The servers interact with the advanced touchscreen using HTTPS interfaces controlled by the core engine and dynamically download widgets and updates as needed to be cached on the touchscreen. In other embodiments widgets can be accessed directly over a network such as the Internet without needing to go through the iControl Content Manager

Referring to **Figure 7****,** the touchscreen system is built on a tiered architecture, with defined interfaces between the Application/Presentation Layer (the Application Engine) on the top, the Core Engine in the middle, and the security panel and gateway APIs at the lower level. The architecture is configured to provide maximum flexibility and ease of maintenance.

The application engine of the touchscreen provides the presentation and interactivity capabilities for all applications (widgets) that run on the touchscreen, including both core security function widgets and third party content widgets. **Figure 8** is an example screenshot 800 of a networked security touchscreen, under an embodiment. This example screenshot 800 includes three interfaces or user interface (UI) components 802-806, but is not so limited. A first UI 802 of the touchscreen includes icons by which a user controls or accesses functions and/or components of the security system (e.g., "Main", "Panic", "Medic", "Fire", state of the premise alarm system (e.g., disarmed, armed, etc.), etc.); the first UI 802, which is also referred to herein as a security interface, is always presented on the touchscreen. A second UI 804 of the touchscreen includes icons by which a user selects or interacts with services and other network content (e.g., clock, calendar, weather, stocks, news, sports, photos, maps, music, etc.) that is accessible via the touchscreen. The second UI 804 is also referred to herein as a network interface or content interface. A third UI 806 of the touchscreen includes icons by which a user selects or interacts with additional services or componets (e.g., intercom control, security, cameras coupled to the system in particular regions (e.g., front door, baby, etc.) available via the touchscreen.

A component of the application engine is the Presentation Engine, which includes a set of libraries that implement the standards-based widget content (e.g., XML, HTML, JavaScript, Flash) layout and interactivity. This engine provides the widget with interfaces to dynamically load both graphics and application logic from third parties, support high level data description language as well as standard graphic formats. The set of web content-based functionality available to a widget developer is extended by specific touchscreen functions implemented as local web services by the Core Engine.

The resident application of the touchscreen is the master service that controls the interaction of all widgets in the system, and enforces the business and security rules required by the service provider. For example, the resident application determines the priority of widgets, thereby enabling a home security widget to override resource requests from a less critical widget (e.g. a weather widget). The resident application also monitors widget behavior, and responds to client or server requests for cache updates.

The core engine of the touchscreen manages interaction with other components of the integrated security system, and provides an interface through which the resident application and authorized widgets can get information about the home security system, set alarms, install sensors, etc. At the lower level, the Core Engine's main interactions are through the PanelConnect API, which handles all communication with the security panel, and the gateway Interface, which handles communication with the gateway. In an embodiment, both the iHub Interface and PanelConnect API are resident and operating on the touchscreen. In another embodiment, the PanelConnect API runs on the gateway or other device that provides security system interaction and is accessed by the touchscreen through a web services interface.

The Core Engine also handles application and service level persistent and cached memory functions, as well as the dynamic provisioning of content and widgets, including but not limited to: flash memory management, local widget and content caching, widget version management (download, cache flush new/old content versions), as well as the caching and synchronization of user preferences. As a portion of these services the Core engine incorporates the bootloader functionality that is responsible for maintaining a consistent software image on the touchscreen, and acts as the client agent for all software updates. The bootloader is configured to ensure full update redundancy so that unsuccessful downloads cannot corrupt the integrated security system.

Video management is provided as a set of web services by the Core Engine. Video management includes the retrieval and playback of local video feeds as well as remote control and management of cameras (all through iControl CameraConnect technology).

Both the high level application layer and the mid-level core engine of the touchscreen can make calls to the network. Any call to the network made by the application layer is automatically handed off to a local caching proxy, which determines whether the request should be handled locally. Many of the requests from the application layer are web services API requests; although such requests could be satisfied by the iControl servers, they are handled directly by the touchscreen and the gateway. Requests that get through the caching proxy are checked against a white list of acceptable sites, and, if they match, are sent off through the network interface to the gateway. Included in the Network Subsystem is a set of network services including HTTP, HTTPS, and server-level authentication functions to manage the secure client-server interface. Storage and management of certificates is incorporated as a part of the network services layer.

Server components of the integrated security system servers support interactive content services on the touchscreen. These server components include, but are not limited to the content manager, registry manager, network manager, and global registry, each of which is described herein.

The Content Manager oversees aspects of handling widget data and raw content on the touchscreen. Once created and validated by the service provider, widgets are 'ingested' to the Content Manager, and then become available as downloadable services through the integrated security system Content Management APIs. The Content manager maintains versions and timestamp information, and connects to the raw data contained in the backend Content Store database. When a widget is updated (or new content becomes available) all clients registering interest in a widget are systematically updated as needed (a process that can be configured at an account, locale, or system-wide level).

The Registry Manager handles user data, and provisioning accounts, including information about widgets the user has decided to install, and the user preferences for these widgets.

The Network Manager handles getting and setting state for all devices on the integrated security system network (e.g., sensors, panels, cameras, etc.). The Network manager synchronizes with the gateway, the advanced touchscreen, and the subscriber database.

The Global Registry is a primary starting point server for all client services, and is a logical referral service that abstracts specific server locations/addresses from clients (touchscreen, gateway 102, desktop widgets, etc.). This approach enables easy scaling/migration of server farms.

The touchscreen of an embodiment operates wirelessly with a premise security system. The touchscreen of an embodiment incorporates an RF transceiver component that either communicates directly with the sensors and/or security panel over the panel's proprietary RF frequency, or the touchscreen communicates wirelessly to the gateway over 802.11, Ethernet, or other IP-based communications channel, as described in detail herein. In the latter case the gateway implements the PanelConnect interface and communicates directly to the security panel and/or sensors over wireless or wired networks as described in detail above.

The touchscreen of an embodiment is configured to operate with multiple security systems through the use of an abstracted security system interface. In this embodiment, the PanelConnect API can be configured to support a plurality of proprietary security system interfaces, either simultaneously or individually as described herein. In one embodiment of this approach, the touchscreen incorporates multiple physical interfaces to security panels (e.g. GE Security RS-485, Honeywell RF, etc.) in addition to the PanelConnect API implemented to support multiple security interfaces. The change needed to support this in PanelConnect is a configuration parameter specifying the panel type connection that is being utilized.

So for example, the setARMState() function is called with an additional parameter (e.g., Armstate = setARMState(type="ARM STAY ARM AWAY DISARM", Parameters="ExitDelay=30 |Lights=OFF", panelType ="GE Concord4 RS48.5")). The 'panelType' parameter is used by the setARMState function (and in practice by all of the PanelConnect functions) to select an algorithm appropriate to the specific panel out of a plurality of alogorithms.

The touchscreen of an embodiment is self-installable. Consequently, the touchscreen provides a 'wizard' approach similar to that used in traditional computer installations (e.g. InstallShield). The wizard can be resident on the touchscreen, accessible through a web interface, or both, In one embodiment of a touchscreen self-installation process, the service provider can associate devices (sensors, touchscreens, security panels, lighting controls, etc.) remotely using a web-based administrator interface,

The touchscreen of an embodiment includes a battery backup system for a security touchscreen. The touchscreen incorporates a standard Li-ion or other battery and charging circuitry to allow continued operation in the event of a power outage. In an embodiment the battery is physically located and connected within the touchscreen enclosure, In another embodiment the battery is located as a part of the power transformer, or in between the power transformer and the touchscreen.

The example configurations of the integrated security system described above with reference to Figures 5 and 6 include a gateway that is a separate device, and the touchscreen couples to the gateway. However, in an alternative embodiment, the gateway device and its functionality can be incorporated into the touchscreen so that the device management module, which is now a component of or included in the touchscreen, is in charge of the discovery, installation and configuration of the IP devices coupled or connected to the system, as described above. The integrated security system with the integrated touchscreen/gateway uses the same "sandbox" network to discover and manage all IP devices coupled or connected as components of the system.

The touchscreen of this alternative embodiment integrates the components of the gateway with the components of the touchscreen as described herein. More specifically, the touchscreen of this alternative embodiment includes software or applications described above with reference to Figure 3. In this alternative embodiment, the touchscreen includes the gateway application layer 302 as the main program that orchestrates the operations performed by the gateway. A Security Engine 304 of the touchscreen provides robust protection against intentional and unintentional intrusion into the integrated security system network from the outside world (both from inside the premises as well as from the WAN). The Security Engine 304 of an embodiment comprises one or more sub-modules or components that perform functions including, but not limited to, the following:
Encryption including 128-bit SSL encryption for gateway and iConnect server communication to protect user data privacy and provide secure communication.
Bi-directional authentication between the touchscreen and iConnect server in order to prevent unauthorized spoofing and attacks. Data sent from the iConnect server to the gateway application (or vice versa) is digitally signed as an additional layer of security. Digital signing provides both authentication and validation that the data has not been altered in transit.
Camera SSL encapsulation because picture and video traffic offered by off-the-shelf networked IP cameras is not secure when traveling over the Internet, The touchscreen provides for 128-bit SSL encapsulation of the user picture and video data sent over the internet for complete user security and privacy.
802.11b/g/n with WPA-2 security to ensure that wireless camera communications always takes place using the strongest available protection.
A touchscreen-enabled device is assigned a unique activation key for activation with an iConnect server. This ensures that only valid gateway-enabled devices can be activated for use with the specific instance of iConnect server in use. Attempts to activate gateway-enabled devices by brute force are detected by the Security Engine. Partners deploying touchscreen-enabled devices have the knowledge that only a gateway with the correct serial number and activation key can be activated for use with an iConnect server. Stolen devices, devices attempting to masquerade as gateway-enabled devices, and malicious outsiders (or insiders as knowledgeable but nefarious customers) cannot effect other customers' gateway-enabled devices.

As standards evolve, and new encryption and authentication methods are proven to be useful, and older mechanisms proven to be breakable, the security manager can be upgraded "over the air" to provide new and better security for communications between the iConnect server and the gateway application, and locally at the premises to remove any risk of eavesdropping on camera communications.

A Remote Firmware Download module 306 of the touchscreen allows for seamless and secure updates to the gateway firmware through the iControl Maintenance Application on the server 104, providing a transparent, hassle-free mechanism for the service provider to deploy new features and bug fixes to the installed user base. The firmware download mechanism is tolerant of connection loss, power interruption and user interventions (both intentional and unintentional). Such robustness reduces down time and customer support issues. Touchscreen firmware can be remotely download either for one touchscreen at a time, a group of touchscreen, or in batches.

The Automations engine 308 of the touchscreen manages the user-defined rules of interaction between the different devices (e.g. when door opens turn on the light) Though the automation rules are programmed and reside at the portal/server level, they are cached at the gateway level in order to provide short latency between device triggers and actions.

DeviceConnect 310 of the touchscreen touchscreen includes definitions of all supported devices (e.g., cameras, security panels, sensors, etc.) using a standardized plug-in architecture. The DeviceConnect module 310 offers an interface that can be used to quickly add support for any new device as well as enabling interoperability between devices that use different technologies/protocols. For common device types, pre-defined sub-modules have been defined, making supporting new devices of these types even easier. SensorConnect 312 is provided for adding new sensors, CameraConnect 316 for adding IP cameras, and PanelConnect 314 for adding home security panels.

The Schedules engine 318 of the touchscreen is responsible for executing the user defined schedules (e.g., take a picture every five minutes; every day at 8am set temperature to 65 degrees Fahrenheit, etc.). Though the schedules are programmed and reside at the iConnect server level they are sent to the scheduler within the gateway application of the touchscreen. The Schedules Engine 318 then interfaces with SensorConnect 312 to ensure that scheduled events occur at precisely the desired time.

The Device Management module 320 of the touchscreen is in charge of all discovery, installation and configuration of both wired and wireless IP devices (e.g., cameras, etc.) coupled or connected to the system. Networked IP devices, such as those used in the integrated security system, require user configuration of many IP and security parameters, and the device management module of an embodiment handles the details of this configuration. The device management module also manages the video routing module described below.

The video routing engine 322 of the touchscreen is responsible for delivering seamless video streams to the user with zero-configuration. Through a multi-step, staged approach the video routing engine uses a combination of UPnP port-forwarding, relay server routing and STUN/TURN peer-to-peer routing. The video routing engine is described in detail in the Related Applications.

**Figure 9** is a block diagram 900 of network or premise device integration with a premise network 250, under an embodiment. In an embodiment, network devices 255, 256, 957 are coupled to the touchscreen 902 using a secure network connection such as SSL over an encrypted 802,11 link (utilizing for example WPA-2 security for the wireless encryption), and the touchscreen 902 coupled to the premise router/firewall 252 via a coupling with a premise LAN 250. The premise router/firewall 252 is coupled to a broadband modem 251, and the broadband modem 251 is coupled to a WAN 200 or other network outside the premise. The touchscreen 902 thus enables or forms a separate wireless network, or sub-network, that includes some number of devices and is coupled or connected to the LAN 250 of the host premises. The touchscreen sub-network can include, but is not limited to, any number of other devices like WiFi IP cameras, security panels (e.g., IP-enabled), and IP devices, to name a few. The touchscreen 902 manages or controls the sub-network separately from the LAN 250 and transfers data and information between components of the sub-network and the LAN 250/WAN 200, but is not so limited. Additionally, other network devices 254 can be coupled to the LAN 250 without being coupled to the touchscreen 902.

**Figure 10** is a block diagram 1000 of network or premise device integration with a premise network 250, under an alternative embodiment. The network or premise devices 255, 256, 1057 are coupled to the touchscreen 1002, and the touchscreen 1002 is coupled or connected between the premise router/firewall 252 and the broadband modem 251. The broadband modem 251 is coupled to a WAN 200 or other network outside the premise, while the premise router/firewall 252 is coupled to a premise LAN 250. As a result of its location between the broadband modem 251 and the premise router/firewall 252, the touchscreen 1002 can be configured or function as the premise router routing specified data between the outside network (e.g., WAN 200) and the premise router/firewall 252 of the LAN 250, As described above, the touchscreen 1002 in this configuration enables or forms a separate wireless network, or sub-network, that includes the network or premise devices 255, 156, 1057 and is coupled or connected between the LAN 250 of the host premises and the WAN 200. The touchscreen sub-network can include, but is not limited to, any number of network or premise devices 255, 256, 1057 like WiFi IP cameras, security panels (e.g., IP-enabled), and security touchscreens, to name a few. The touchscreen 1002 manages or controls the sub-network separately from the LAN 250 and transfers data and information between components of the sub-network and the LAN 250/WAN 200, but is not so limited. Additionally, other network devices 254 can be coupled to the LAN 250 without being coupled to the touchscreen 1002

The gateway of an embodiment, whether a stand-along component or integrated with a touchscreen, enables couplings or connections and thus the flow or integration of information between various components of the host premises and various types and/or combinations of IP devices, where the components of the host premises include a network (e.g., LAN) and/or a security system or subsystem to name a few. Consequently, the gateway controls the association between and the flow of information or data between the components of the host premises, For example, the gateway of an embodiment forms a sub-network coupled to another network (e.g., WAN, LAN, etc.), with the sub-network including IP devices. The gateway further enables the association of the IP devices of the sub-network with appropriate systems on the premises (e.g., security system, etc.). Therefore, for example, the gateway can form a sub-network of IP devices configured for security functions, and associate the sub-network only with the premises security system, thereby segregating the IP devices dedicated to security from other IP devices that may be coupled to another network on the premises.

The gateway of an embodiment, as described herein, enables couplings or connections and thus the flow of information between various components of the host premises and various types and/or combinations of IP devices, where the components of the host premises include a network, a security system or subsystem to name a few. Consequently, the gateway controls the association between and the flow of information or data between the components of the host premises. For example, the gateway of an embodiment forms a sub-network coupled to another network (e.g., WAN, LAN, etc.), with the sub-network including IP devices. The gateway further enables the association of the IP devices of the sub-network with appropriate systems on the premises (e.g., security system, etc.). Therefore, for example, the gateway can form a sub-network of IP devices configured for security functions, and associate the sub-network only with the premises security system, thereby segregating the IP devices dedicated to security from other IP devices that may be coupled to another network on the premises.

**Figure 11** is a flow diagram for a method 1100 of forming a security network including integrated security system components, under an embodiment. Generally, the method comprises coupling 1102 a gateway comprising a connection management component to a local area network in a first location and a security server in a second location. The method comprises forming 1104 a security network by automatically establishing a wireless coupling between the gateway and a security system using the connection management component. The security system of an embodiment comprises security system components located at the first location, The method comprises integrating 1106 communications and functions of the security system components into the security network via the wireless coupling.

**Figure 12** is a flow diagram for a method 1200 of forming a security network including integrated security system components and network devices, under an embodiment. Generally, the method comprises coupling 1202 a gateway to a local area network located in a first location and a security server in a second location. The method comprises automatically establishing 1204 communications between the gateway and security system components at the first location, the security system including the security system components. The method comprises automatically establishing 1206 communications between the gateway and premise devices at the first location. The method comprises forming 1208 a security network by electronically integrating, via the gateway, communications and functions of the premise devices and the security system components

In an example embodiment, **Figure 13** is a flow diagram 1300 for integration or installation of an IP device into a private network environment, under an embodiment. The IP device includes any IP-capable device which, for example, includes the touchscreen of an embodiment. The variables of an embodiment set at time of installation include, but are not limited to, one or more of a private SSID/Password, a gateway identifier, a security panel identifier, a user account TS, and a Central Monitoring Station account identification.

An embodiment of the IP device discovery and management begins with a user or installer activating 1302 the gateway and initiating 1304 the install mode of the system. This places the gateway in an install mode. Once in install mode, the gateway shifts to a default (Install) Wifi configuration. This setting will match the default setting for other integrated security system-enabled devices that have been pre-configured to work with the integrated security system. The gateway will then begin to provide 1306 DHCP addresses for these IP devices. Once the devices have acquired a new DHCP address from the gateway, those devices are available for configuration into a new secured Wifi network setting.

The user or installer of the system selects 1308 all devices that have been identified as available for inclusion into the integrated security system. The user may select these devices by their unique IDs via a web page, Touchscreen, or other client interface. The gateway provides 1310 data as appropriate to the devices. Once selected, the devices are configured 1312 with appropriate secured Wifi settings, including SSID and WPA/WPA-2 keys that are used once the gateway switches back to the secured sandbox configuration from the "Install" settings. Other settings are also configured as appropriate for that type of device. Once all devices have been configured, the user is notified and the user can exit install mode. At this point all devices will have been registered 1314 with the integrated security system servers.

The installer switches 1316 the gateway to an operational mode, and the gateway instructs or directs 1318 all newly configured devices to switch to the "secured" Wifi sandbox settings. The gateway then switches 1320 to the "secured" Wifi settings. Once the devices identify that the gateway is active on the "secured" network, they request new DHCP addresses from the gateway which, in response, provides 1322 the new addresses, The devices with the new addresses are then operational 1324 on the secured network.

In order to ensure the highest level of security on the secured network, the gateway can create or generate a dynamic network security configuration based on the unique ID and private key in the gateway, coupled with a randomizing factor that can be based on online time or other inputs. This guarantees the uniqueness of the gateway secured network configuration.

To enable the highest level of performance, the gateway analyzes the RF spectrum of the 802.11x network and determines which frequency band/channel it should select to run.

An alternative embodiment of the camera/IP device management process leverages the local ethernet connection of the sandbox network on the gateway. This alternative process is similar to the Wifi discovery embodiment described above, except the user connects the targeted device to the ethernet port of the sandbox network to begin the process. This alternative embodiment accommodates devices that have not been pre-configured with the default "Install" configuration for the integrated security system.

This alternative embodiment of the IP device discovery and management begins with the user/installer placing the system into install mode. The user is instructed to attach an IP device to be installed to the sandbox Ethernet port of the gateway The IP device requests a DHCP address from the gateway which, in response to the request, provides the address. The user is presented the device and is asked if he/she wants to install the device If yes, the system configures the device with the secured Wifi settings and other device-specific settings (e.g., camera settings for video length, image quality etc.). The user is next instructed to disconnect the device from the ethernet port. The device is now available for use on the secured sandbox network.

**Figure 14** is a block diagram showing communications among integrated IP devices of the private network environment, under an embodiment. The IP devices of this example include a security touchscreen 1403, gateway 1402 (e.g., "iHub"), and security panel (e.g., "Security Panel 1", "Security Panel 2", "Security Panel n"), but the embodiment is not so limited. In alternative embodiments any number and/or combination of these three primary component types may be combined with other components including IP devices and/or security system components. For example, a single device which comprises an integrated gateway, touchscreen, and security panel is merely another embodiment of the integrated security system described herein. The description that follows includes an example configuration that includes a touchscreen hosting particular applications. However, the embodiment is not limited to the touchscreen hosting these applications, and the touchscreen should be thought of as representing any IP device.

Referring to Figure 14, the touchscreen 1403 incorporates an application 1410 that is implemented as computer code resident on the touchscreen operating system, or as a web-based application running in a browser, or as another type of scripted application (e.g., Flash, Java, Visual Basic, etc.). The touchscreen core application 1410 represents this application, providing user interface and logic for the end user to manage their security system or to gain access to networked information or content (Widgets). The touchscreen core application 1410 in turn accesses a library or libraries of functions to control the local hardware (e.g. screen display, sound, LEDs, memory, etc.) as well as specialized librarie(s) to couple or connect to the security system.

In an embodiment of this security system connection, the touchscreen 1403 communicates to the gateway 1402, and has no direct communication with the security panel. In this embodiment, the touchscreen core application 1410 accesses the remote service APIs 1412 which provide security system functionality (e.g. ARM/DISARM panel, sensor state, get/set panel configuration parameters, initiate or get alarm events, etc.). In an embodiment, the remote service APIs 1412 implement one or more of the following functions, but the embodiment is not so limited: Armstate = setARMState(type="ARM STAY| ARM AWAY| DISARM", Parameters="ExitDelay=30 |Lights=OFF"); sensorState=getSensors(type="ALL| SensorName | SensorNameList"); result = setSensorState(SensorName, parameters="Option1, Options2,...Option n"), interruptHandler =SensorEvent(); and, interruptHandler=alarmEvent().

Functions of the remote service APIs 1412 of an embodiment use a remote PanelConnect API 1424 which which resides in memory on the gateway 1402. The touchscreen 1403 communicates with the gateway 1402 through a suitable network interface such as an Ethernet or 802.11 RF connection, for example. The remote PanelConnect API 1424 provides the underlying Security System Interfaces 1426 used to communicate with and control one or more types of security panel via wired link 1430 and/or RF link 3. The PanelConnect API 1224 provides responses and input to the remote services APIs 1426, and in turn translates function calls and data to and from the specific protocols and functions supported by a specific implementation of a Security Panel (e.g. a GE Security Simon XT or Honeywell Vista 20P). In an embodiment, the PanelConnect API 1224 uses a 345MHz RF transceiver or receiver hardware/firmware module to communicate wirelessly to the security panel and directly to a set of 345 MHz RF-enabled sensors and devices, but the embodiment is not so limited.

The gateway of an alternative embodiment communicates over a wired physical coupling or connection to the security panel using the panel's specific wired hardware (bus) interface and the panel's bus-level protocol.

In an alternative embodiment, the Touchscreen 1403 implements the same PanelConnect API 1414 locally on the Touchscreen 1403, communicating directly with the Security Panel 2 and/or Sensors 2 over the proprietary RF link or over a wired link for that system. In this embodiment the Touchscreen 1403, instead of the gateway 1402, incorporates the 345 MHz RF transceiver to communicate directly with Security Panel 2 or Sensors 2 over the RF link 2. In the case of a wired link the Touchscreen 1403 incorporates the real-time hardware (e.g. a PIC chip and RS232-variant serial link) to physically connect to and satisfy the specific bus-level timing requirements of the SecurityPanel2.

In yet another alternative embodiment, either the gateway 1402 or the Touchscreen 1403 implements the remote service APIs. This embodiment includes a Cricket device ("Cricket") which comprises but is not limited to the following components: a processor (suitable for handling 802.11 protocols and processing, as well as the bus timing requirements of SecurityPanel1); an 802.11 (WiFi) client IP interface chip; and, a serial bus interface chip that implements variants of RS232 or RS485, depending on the specific Security Panel.

The Cricket also implements the full PanelConnect APIs such that it can perform the same functions as the case where the gateway implements the PanelConnect APIs. In this embodiment, the touchscreen core application 1410 calls functions in the remote service APIs 1412 (such as setArmState()). These functions in turn couple or connect to the remote Cricket through a standard IP connection ("Cricket IP Link") (e.g., Ethernet, Homeplug, the gateway's proprietary Wifi network, etc.). The Cricket in turn implements the PanelConnect API, which responds to the request from the touchscreen core application, and performs the appropriate function using the proprietary panel interface. This interface uses either the wireless or wired proprietary protocol for the specific security panel and/or sensors.

**Figure 15** is a flow diagram of a method of integrating an external control and management application system with an existing security system, under an embodiment, Operations begin when the system is powered on 1510, involving at a minimum the power-on of the gateway device, and optionally the power-on of the connection between the gateway device and the remote servers. The gateway device initiates 1520 a software and RF sequence to locate the extant security system. The gateway and installer initiate and complete 1530 a sequence to 'learn' the gateway into the security system as a valid and authorized control device. The gateway initiates 1540 another software and RF sequence of instructions to discover and learn the existence and capabilities of existing RF devices within the extant security system, and store this information in the system. These operations under the system of an embodiment are described in further detail below,

Unlike conventional systems that extend an existing security system, the system of an embodiment operates utilizing the proprietary wireless protocols of the security system manufacturer. In one illustrative embodiment, the gateway is an embedded computer with an IP LAN and WAN connection and a plurality of RF transceivers and software protocol modules capable of communicating with a plurality of security systems each with a potentially different RF and software protocol interface. After the gateway has completed the discovery and learning 1540 of sensors and has been integrated 1550 as a virtual control device in the extant security system, the system becomes operational Thus, the security system and associated sensors are presented 1550 as accessible devices to a potential plurality of user interface subsystems.

The system of an embodiment integrates 1560 the functionality of the extant security system with other non-security devices including but not limited to IP cameras, touchscreens, lighting controls, door locking mechanisms, which may be controlled via RF, wired, or powerline-based networking mechanisms supported by the gateway or servers.

The system of an embodiment provides a user interface subsystem 1570 enabling a user to monitor, manage, and control the system and associated sensors and security systems. In an embodiment of the system, a user interface subsystem is an HTML/XML/Javascript/Java/AJAX/Flash presentation of a monitoring and control application, enabling users to view the state of all sensors and controllers in the extant security system from a web browser or equivalent operating on a computer, PDA, mobile phone, or other consumer device,

In another illustrative embodiment of the system described herein, a user interface subsystem is an HTML/XML/Javascript/Java/AJAX presentation of a monitoring and control application, enabling users to combine the monitoring and control of the extant security system and sensors with the monitoring and control of non-security devices including but not limited to IP cameras, touchscreens, lighting controls, door locking mechanisms

In another illustrative embodiment of the system described herein, a user interface subsystem is a mobile phone application enabling users to monitor and control the extant security system as well as other non-security devices,

In another illustrative embodiment of the system described herein, a user interface subsystem is an application running on a keypad or touchscreen device enabling users to monitor and control the extant security system as well as other non-security devices.

In another illustrative embodiment of the system described herein, a user interface subsystem is an application operating on a TV or set-top box connected to a TV enabling users to monitor and control the extant security system as well as other non-security devices.

**Figure 16** is a block diagram of an integrated security system 1600 wirelessly interfacing to proprietary security systems, under an embodiment. A security system 1610 is coupled or connected to a Gateway 1620, and from Gateway 1620 coupled or connected to a plurality of information and content sources across a network 1630 including one or more web servers 1640, system databases 1650, and applications servers 1660. While in one embodiment network 1630 is the Internet, including the World Wide Web, those of skill in the art will appreciate that network 1630 may be any type of network, such as an intranet, an extranet, a virtual private network (VPN), a mobile network, or a non- TCP/IP based network.

Moreover, other elements of the system of an embodiment may be conventional, well-known elements that need not be explained in detail herein. For example, security system 1610 could be any type home or business security system, such devices including but not limited to a standalone RF home security system or a non-RF-capable wired home security system with an add-on RF interface module. In the integrated security system 1600 of this example, security system 1610 includes an RF-capable wireless security panel (WSP) 1611 that acts as the master controller for security system 1610. Well-known examples of such a WSP include the GE Security Concord, Networx, and Simon panels, the Honeywell Vista and Lynx panels, and similar panesl from DSC and Napco, to name a few. A wireless module 1614 includes the RF hardware and protocol software necessary to enable communication with and control of a plurality of wireless devices 1613. WSP 1611 may also manage wired devices 1614 physically connected to WSP 1611 with an RS232 or RS485 or Ethernet connection or similar such wired interface.

In an implementation consistent with the systems and methods described herein, Gateway 1620 provides the interface between security system 1610 and LAN and/or WAN for purposes of remote control, monitoring, and management, Gateway 1620 communicates with an external web server 1640, database 1650, and application server 1660 over network 1630 (which may comprise WAN, LAN, or a combination thereof). In this example system, application logic, remote user interface functionality, as well as user state and account are managed by the combination of these remote servers. Gateway 1620 includes server connection manager 1621, a software interface module responsible for all server communication over network 1630, Event manager 1622 implements the main event loop for Gateway 1620, processing events received from device manager 1624 (communicating with non-security system devices including but not limited to IP cameras, wireless thermostats, or remote door locks). Event manager 1622 further processes events and control messages from and to security system 1610 by utilizing WSP manager 1623.

WSP manager 1623 and device manager 1624 both rely upon wireless protocol manager 1626 which receives and stores the proprietary or standards-based protocols required to support security system 1610 as well as any other devices interfacing with gateway 1620. WSP manager 1623 further utilizes the comprehensive protocols and interface algorithms for a plurality of security systems 1610 stored in the WSP DB client database associated with wireless protocol manager 1626. These various components implement the software logic and protocols necessary to communicate with and manager devices and security systems 1610. Wireless Transceiver hardware modules 1625 are then used to implement the physical RF communications link to such devices and security systems 1610. An illustrative wireless transceiver 1625 is the GE Security Dialog circuit board, implementing a 319.5MHz two-way RF transceiver module. In this example, RF Link 1670 represents the 319.5MHz RF communication link, enabling gateway 1620 to monitor and control WSP 1611 and associated wireless and wired devices 1613 and 1614, respectively.

In one embodiment, server connection manager 1621 requests and receives a set of wireless protocols for a specific security system 1610 (an illustrative example being that of the GE Security Concord panel and sensors) and stores them in the WSP DB portion of the wireless protocol manager 1626 WSP manager 1623 then utilizes such protocols from wireless protocol manager 162.6 to initiate the sequence of processes detailed in Figure 15 and Figure 16 for learning gateway 1620 into security system 1610 as an authorized control device. Once learned in, as described with reference to Figure 16 (and above), event manager 1622 processes all events and messages detected by the combination of WSP manager 1623 and the GE Security wireless transceiver module 1625.

In another embodiment, gateway 1620 incorporates a plurality of wireless transceivers 1625 and associated protocols managed by wireless protocol manager 1626. In this embodiment events and control of multiple heterogeneous devices may be coordinated with WSP 1611, wireless devices 1613, and wired devices 1614. For example a wireless sensor from one manufacturer may be utilized to control a device using a different protocol from a different manufacturer.

In another embodiment, gateway 1620 incorporates a wired interface to security system 1610, and incorporates a plurality of wireless transceivers 1625 and associated protocols managed by wireless protocol manager 1626. In this embodiment events and control of multiple heterogeneous devices may be coordinated with WSP 1611, wireless devices 1613, and wired devices 1614.

Of course, while an illustrative embodiment of an architecture of the system of an embodiment is described in detail herein with respect to Figure 16, one of skill in the art will understand that modifications to this architecture may be made without departing from the scope of the description presented herein. For example, the functionality described herein may be allocated differently between client and server, or amongst different server or processor-based components. Likewise, the entire functionality of the gateway 1620 described herein could be integrated completely within an existing security system 1610. In such an embodiment, the architecture could be directly integrated with a security system 1610 in a manner consistent with the currently described embodiments.

**Figure 17** is a flow diagram for wirelessly 'learning' the Gateway into an existing security system and discovering extant sensors, under an embodiment. The learning interfaces gateway 1620 with security system 1610. Gateway 1620 powers up 1710 and initiates software sequences 1720 and 1725 to identify accessible WSPs 1611 and wireless devices 1613, respectively (e.g., one or more WSPs and/or devices within range of gateway 1620). Once identified, WSP 1611 is manually or automatically set into 'learn mode' 1730, and gateway 1620 utilizes available protocols to add 1740 itself as an authorized control device in security system 1610. Upon successful completion of this task, WSP 1611 is manually or automatically removed from 'learn mode' 1750.

Gateway 1620 utilizes the appropriate protocols to mimic 1760 the first identified device 1614. In this operation gateway 1620 identifies itself using the unique or pseudo-unique identifier of the first found device 1614, and sends an appropriate change of state message over RF Link 1670. In the event that WSP 1611 responds to this change of state message, the device 1614 is then added 1770 to the system in database 1650. Gateway 1620 associates 1780 any other information (such as zone name or token-based identifier) with this device 1614 in database 1650, enabling gateway 1620, user interface modules, or any application to retrieve this associated information.

In the event that WSP 1611 does not respond to the change of state message, the device 1614 is not added 1770 to the system in database 1650, and this device 1614 is identified as not being a part of security system 1610 with a flag, and is either ignored or added as an independent device, at the discretion of the system provisioning rules, Operations hereunder repeat 1785 operations 1760, 1770, 1780 for all devices 1614 if applicable. Once all devices 1614 have been tested in this way, the system begins operation 1790.

In another embodiment, gateway 1620 utilizes a wired connection to WSP 1611, but also incorporates a wireless transceiver 1625 to communicate directly with devices 1614. In this embodiment, operations under 1720 above are removed, and operations under 1740 above are modified so the system of this embodiment utilizes wireline protocols to add itself as an authorized control device in security system 1610.

A description of an example embodiment follows in which the Gateway (Figure 16, element 1620) is the iHub available from iControl Networks, Palo Alto, CA, and described in detail herein. In this example the gateway is "automatically" installed with a security system.

The automatic security system installation begins with the assignment of an authorization key to components of the security system (e.g., gateway, kit including the gateway, etc.). The assignment of an authorization key is done in lieu of creating a user account. An installer later places the gateway in a user's premises along with the premises security system. The installer uses a computer to navigate to a web portal (e.g., integrated security system web interface), logs in to the portal, and enters the authorization key of the installed gateway into the web portal for authentication, Once authenticated, the gateway automatically discovers devices at the premises (e.g., sensors, cameras, light controls, etc.) and adds the discovered devices to the system or "network". The installer assigns names to the devices, and tests operation of the devices back to the server (e g., did the door open, did the camera take a picture, etc.). The security device information is optionally pushed or otherwise propagated to a security panel and/or to the server network database. The installer finishes the installation, and instructs the end user on how to create an account, username, and password, At this time the user enters the authorization key which validates the account creation (uses a valid authorization key to associate the network with the user's account). New devices may subsequently be added to the security network in a variety of ways (e.g., user first enters a unique ID for each device/sensor and names it in the server, after which the gateway can automatically discover and configure the device).

A description of another example embodiment follows in which the security system (Figure 16, element 1610) is a Dialog system and the WSP (Figure 16, element 1611) is a SimonXT available from General Electric Security, and the Gateway (Figure 16, element 1620) is the iHub available from iControl Networks, Palo Alto, CA, and described in detail herein. Descriptions of the install process for the SimonXT and iHub are also provided below.

GE Security's Dialog network is one of the most widely deployed and tested wireless security systems in the world. The physical RF network is based on a 319.5 MHz unlicensed spectrum, with a bandwidth supporting up to 19Kbps communications. Typical use of this bandwidth -even in conjunction with the integrated security system-is far less than that. Devices on this network can support either one-way communication (either a transmitter or a receiver) or two-way communication (a transceiver). Certain GE Simon, Simon XT, and Concord security control panels incorporate a two-way transceiver as a standard component. The gateway also incorporates the same two-way transceiver card. The physical link layer of the network is managed by the transceiver module hardware and firmware, while the coded payload bitstreams are made available to the application layer for processing.

Sensors in the Dialog network typically use a 60-bit protocol for communicating with the security panel transceiver, while security system keypads and the gateway use the encrypted 80-bit protocol. The Dialog network is configured for reliability, as well as low-power usage. Many devices are supervised, i.e. they are regularly monitored by the system 'master' (typically a GE security panel), while still maintaining excellent power usage characteristics. A typical door window sensor has a battery life in excess of 5-7 years.

The gateway has two modes of operation in the Dialog network: a first mode of operation is when the gateway is configured or operates as a 'slave' to the GE security panel; a second mode of operation is when the gateway is configured or operates as a 'master' to the system in the event a security panel is not present. In both configurations, the gateway has the ability to 'listen' to network traffic, enabling the gateway to continually keep track of the status of all devices in the system. Similarly, in both situations the gateway can address and control devices that support setting adjustments (such as the GE wireless thermostat).

In the configuration in which the gateway acts as a 'slave' to the security panel, the gateway is 'learned into' the system as a GE wireless keypad. In this mode of operation, the gateway emulates a security system keypad when managing the security panel, and can query the security panel for status and 'listen' to security panel events (such as alarm events).

The gateway incorporates an RF Transceiver manufactured by GE Security, but is not so limited. This transceiver implements the Dialog protocols and handles all network message transmissions, receptions, and timing. As such, the physical, link, and protocol layers of the communications between the gateway and any GE device in the Dialog network are totally compliant with GE Security specifications.

At the application level, the gateway emulates the behavior of a GE wireless keypad utilizing the GE Security 80-bit encrypted protocol, and only supported protocols and network traffic are generated by the gateway. Extensions to the Dialog RF protocol of an embodiment enable full control and configuration of the panel, and iControl can both automate installation and sensor enrollment as well as direct configuration downloads for the panel under these protocol extensions.

As described above, the gateway participates in the GE Security network at the customer premises. Because the gateway has intelligence and a two-way transceiver, it can 'hear' all of the traffic on that network. The gateway makes use of the periodic sensor updates, state changes, and supervisory signals of the network to maintain a current state of the premises. This data is relayed to the integrated security system server (e.g., Figure 2, element 260) and stored in the event repository for use by other server components. This usage of the GE Security RF network is completely non-invasive; there is no new data traffic created to support this activity.

The gateway can directly (or indirectly through the Simon XT panel) control two-way devices on the network. For example, the gateway can direct a GE Security Thermostat to change its setting to 'Cool' from 'Off', as well as request an update on the current temperature of the room. The gateway performs these functions using the existing GE Dialog protocols, with little to no impact on the network; a gateway device control or data request takes only a few dozen bytes of data in a network that can support 19 Kbps,

By enrolling with the Simon XT as a wireless keypad, as described herein, the gateway includes data or information of all alarm events, as well as state changes relevant to the security panel. This information is transferred to the gateway as encrypted packets in the same way that the information is transferred to all other wireless keypads on the network.

Because of its status as an authorized keypad, the gateway can also initiate the same panel commands that a keypad can initiate. For example, the gateway can arm or disarm the panel using the standard Dialog protocol for this activity, Other than the monitoring of standard alarm events like other network keypads, the only incremental data traffic on the network as a result of the gateway is the infrequent remote arm/disarm events that the gateway initiates, or infrequent queries on the state of the panel.

The gateway is enrolled into the Simon XT panel as a 'slave' device which, in an embodiment, is a wireless keypad. This enables the gateway for all necessary functionality for operating the Simon XT system remotely, as well as combining the actions and information of non-security devices such as lighting or door locks with GE Security devices. The only resource taken up by the gateway in this scenario is one wireless zone (sensor ID).

The gateway of an embodiment supports three forms of sensor and panel enrollment/installation into the integrated security system, but is not limited to this number of enrollment/installation options. The enrollment/installation options of an embodiment include installer installation, kitting, and panel, each of which is described below.

Under the installer option, the installer enters the sensor IDs at time of installation into the integrated security system web portal or iScreen. This technique is supported in all configurations and installations.

Kits can be pre-provisioned using integrated security system provisioning applications when using the kitting option. At kitting time, multiple sensors are automatically associated with an account, and at install time there is no additional work required.

In the case where a panel is installed with sensors already enrolled (i.e. using the GE Simon XT enrollment process), the gateway has the capability to automatically extract the sensor information from the system and incorporate it into the user account on the integrated security system server.

The gateway and integrated security system of an embodiment uses an auto-learn process for sensor and panel enrollment in an embodiment. The deployment approach of an embodiment can use additional interfaces that GE Security is adding to the Simon XT panel. With these interfaces, the gateway has the capability to remotely enroll sensors in the panel automatically. The interfaces include, but are not limited to, the following: EnrollDevice(ID, type, name, zone, group); SetDeviceParameters(ID, type, Name, zone, group), GetDeviceParameters(zone); and RemoveDevice(zone).

The integrated security system incorporates these new interfaces into the system, providing the following install process. The install process can include integrated security system logistics to handle kitting and pre-provisioning. Pre-kitting and logistics can include a pre-provisioning kitting tool provided by integrated security system that enables a security system vendor or provider ("provider") to offer pre-packaged initial 'kits'. This is not required but is recommended for simplifying the install process. This example assumes a 'Basic' kit is preassembled and includes one (1) Simon XT, three (3) Door/ window sensors, one (1) motion sensor, one (1) gateway, one (1) keyfob, two (2) cameras, and ethernet cables. The kit also includes a sticker page with all Zones (1-24) and Names (full name list).

The provider uses the integrated security system kitting tool to assemble 'Basic' kit packages. The contents of different types of starter kits may be defined by the provider, At the distribution warehouse, a worker uses a bar code scanner to scan each sensor and the gateway as it is packed into the box. An ID label is created that is attached to the box. The scanning process automatically associates all the devices with one kit, and the new ID label is the unique identifier of the kit. These boxes are then sent to the provider for distribution to installer warehouses. Individual sensors, cameras, etc. are also sent to the provider installer warehouse. Each is labeled with its own barcode/ ID.

An installation and enrollment procedure of a security system including a gateway is described below as one example of the installation process.
1. Order and Physical Install Process
   a. Once an order is generated in the iControl system, an install ticket is created and sent electronically to the provider for assignment to an installer.
   b. The assigned installer picks up his/her ticket(s) and fills his/her truck with Basic and/or Advanced starter kits. He/she also keeps a stock of individual sensors, cameras, iHubs, Simon XTs, etc. Optionally, the installer can also stock homeplug adapters for problematic installations.
   c. The installer arrives at the address on the ticket, and pulls out the Basic kit. The installer determines sensor locations from a tour of the premises and discussion with the homeowner. At this point assume the homeowner requests additional equipment including an extra camera, two (2) additional door/window sensors, one (1) glass break detector, and one (1) smoke detector.
   d. Installer mounts SimonXT in the kitchen or other location in the home as directed by the homeowner, and routes the phone line to Simon XT if available GPRS and Phone numbers pre-programmed in SimonXT to point to the provider Central Monitoring Station (CMS).
   e. Installer places gateway in the home in the vicinity of a router and cable modem. Installer installs an ethernet line from gateway to router and plugs gateway into an electrical outlet.
2. Associate and Enroll gateway into SimonXT
   a. Installer uses either his/her own laptop plugged into router, or homeowners computer to go to the integrated security system web interface and log in with installer ID/pass.
   b. Installer enters ticket number into admin interface, and clicks 'New Install' button. Screen prompts installer for kit ID (on box's barcode label).
   c. Installer clicks 'Add SimonXT'. Instructions prompt installer to put Simon XT into install mode, and add gateway as a wireless keypad. It is noted that this step is for security only and can be automated in an embodiment.
   d. Installer enters the installer code into the Simon XT. Installer Learns 'gateway' into the panel as a wireless keypad as a group 1 device.
   e. Installer goes back to Web portal, and clicks the 'Finished Adding SimonXT' button.
3. Enroll Sensors into SimonXT via iControl
   a. All devices in the Basic kit are already associated with the user's account
   b. For additional devices, Installer clicks 'Add Device' and adds the additional camera to the user's account (by typing in the camera ID/Serial #).
   c. Installer clicks 'Add Device' and adds other sensors (two (2) door/window sensors, one (1) glass break sensor, and one (1) smoke sensor) to the account (e.g., by typing in IDs).
   d. As part of Add Device, Installer assigns zone, name, and group to the sensor. Installer puts appropriate Zone and Name sticker on the sensor temporarily,
   e. All sensor information for the account is pushed or otherwise propagated to the iConnect server, and is available to propagate to CMS automation software through the CMS application programming interface (API).
   f. Web interface displays 'Installing Sensors in System....' and automatically adds all of the sensors to the Simon XT panel through the GE RF link.
   g. Web interface displays 'Done Installing' --> all sensors show green.
4. Place and Tests Sensors in Home
   a. Installer physically mounts each sensor in its desired location, and removes the stickers.
   b. Installer physically mounts WiFi cameras in their location and plugs into AC power. Optional fishing of low voltage wire through wall to remove dangling wires. Camera transformer is still plugged into outlet but wire is now inside the wall.
   c. Installer goes to Web interface and is prompted for automatic camera install. Each camera is provisioned as a private, encrypted Wifi device on the gateway secured sandbox network, and firewall NAT traversal is initiated. Upon completion the customer is prompted to test the security system.
   d. Installer selects the 'Test System' button on the web portal -- the SimonXT is put into Test mode by the gateway over GE RF.
   e. Installer manually tests the operation of each sensor, receiving an audible confirmation from SimonXT,
   f. Gateway sends test data directly to CMS over broadband link, as well as storing the test data in the user's account for subsequent report generation.
   g. Installer exits test mode from the Web portal.
5. Installer instructs customer on use of the Simon XT, and shows customer how to log into the iControl web and mobile portals. Customer creates a username/password at this time.
6. Installer instructs customer how to change Simon XT user code from the Web interface. Customer changes user code which is pushed to SimonXT automatically over GE RF.

An installation and enrollment procedure of a security system including a gateway is described below as an alternative example of the installation process. This installation process is for use for enrolling sensors into the SimonXT and integrated security system and is compatible with all existing GE Simon panels.

The integrated security system supports all pre-kitting functionality described in the installation process above. However, for the purpose of the following example, no kitting is used.
1. Order and Physical Install Process
   a. Once an order is generated in the iControl system, an install ticket is created and sent electronically to the security system provider for assignment to an installer.
   b. The assigned installer picks up his/her ticket(s) and fills his/her truck with individual sensors, cameras, iHubs, Simon XTs, etc. Optionally, the installer can also stock homeplug adapters for problematic installations.
   c. The installer arrives at the address on the ticket, and analyzes the house and talks with the homeowner to determine sensor locations, At this point assume the homeowner requests three (3) cameras, five (5) door/window sensors, one (1) glass break detector, one (1) smoke detector, and one (1) keyfob.
   d. Installer mounts SimonXT in the kitchen or other location in the home. The installer routes a phone line to Simon XT if available. GPRS and Phone numbers are pre-programmed in SimonXT to point to the provider CMS.
   e. Installer places gateway in home in the vicinity of a router and cable modem, and installs an ethernet line from gateway to the router, and plugs gateway into an electrical outlet.
2. Associate and Enroll gateway into SimonXT
   a. Installer uses either his/her own laptop plugged into router, or homeowners computer to go to the integrated security system web interface and log in with an installer ID/pass.
   b. Installer enters ticket number into admin interface, and clicks 'New Install' button. Screen prompts installer to add devices.
   c. Installer types in ID of gateway, and it is associated with the user's account.
   d. Installer clicks 'Add Device' and adds the cameras to the user's account (by typing in the camera ID/Serial #).
   e. Installer clicks 'Add SimonXT'. Instructions prompt installer to put Simon XT into install mode, and add gateway as a wireless keypad.
   f. Installer goes to Simon XT and enters the installer code into the Simon XT. Learns 'gateway' into the panel as a wireless keypad as group 1 type sensor
   g. Installer returns to Web portal, and clicks the 'Finished Adding SimonXT' button,
   h. Gateway now is alerted to all subsequent installs over the security system RF.
3. Enroll Sensors into SimonXT via iControl
   a. Installer clicks 'Add Simon XT Sensors' -- Displays instructions for adding sensors to Simon XT.
   b. Installer goes to Simon XT and uses Simon XT install process to add each sensor, assigning zone, name, group. These assignments are recorded for later use.
   c. The gateway automatically detects each sensor addition and adds the new sensor to the integrated security system.
   d. Installer exits install mode on the Simon XT, and returns to the Web portal.
   e. Installer clicks 'Done Adding Devices'.
   f. Installer enters zone/sensor naming from recorded notes into integrated security system to associate sensors to friendly names,
   g. All sensor information for the account is pushed to the iConnect server, and is available to propagate to CMS automation software through the CMS API.
4. Place and Tests Sensors in Home
   a. Installer physically mounts each sensor in its desired location.
   b. Installer physically mounts Wifi cameras in their location and plugs into AC power. Optional fishing of low voltage wire through wall to remove dangling wires. Camera transformer is still plugged into outlet but wire is now inside the wall.
   c. Installer puts SimonXT into Test mode from the keypad.
   d. Installer manually tests the operation of each sensor, receiving an audible confirmation from SimonXT
   e. Installer exits test mode from the Simon XT keypad.
   f. Installer returns to web interface and is prompted to automatically set up cameras. After waiting for completion cameras are now provisioned and operational.
5. Installer instructs customer on use of the Simon XT, and shows customer how to log into the integrated security system web and mobile portals. Customer creates a username/password at this time,
6. Customer and Installer observe that all sensors/cameras are green.
7. Installer instructs customer how to change Simon XT user code from the keypad. Customer changes user code and stores in SimonXT.
8. The first time the customer uses the web portal to Arm/Disarm system the web interface prompts the customer for the user code, which is then stored securely on the server. In the event the user code is changed on the panel the web interface once again prompts the customer.

The panel of an embodiment can be programmed remotely. The CMS pushes new programming to SimonXT over a telephone or GPRS link. Optionally, iControl and GE provide a broadband link or coupling to the gateway and then a link from the gateway to the Simon XT over GE RF.

In addition to the configurations described above, the gateway of an embodiment supports takeover configurations in which it is introduced or added into a legacy security system. A description of example takeover configurations follow in which the security system (Figure 2, element 210) is a Dialog system and the WSP (Figure 2, element 211) is a GE Concord panel (e.g., equipped with POTS, GE RF, and Superbus 2000 RS485 interface (in the case of a Lynx takeover the Simon XT is used) available from General Electric Security. The gateway (Figure 2, element 220) in the takeover configurations is an iHub (e.g., equipped with built-in 802.11b/g router, Ethernet Hub, GSM/GPRS card, RS485 inteface, and iControl Honeywell-compatible RF card) available from iControl Networks, Palo Alto, CA. While components of particular manufacturers are used in this example, the embodiments are not limited to these components or to components from these vendors.

The security system can optionally include RF wireless sensors (e.g., GE wireless sensors utilizing the GE Dialog RF technology), IP cameras, a GE-iControl Touchscreen (the touchscreen is assumed to be an optional component in the configurations described herein, and is thus treated separately from the iHub; in systems in which the touchscreen is a component of the base security package, the integrated iScreen (available from iControl Networks, Palo Alto, CA) can be used to combine iHub technology with the touchscreen in a single unit), and Z-Wave devices to name a few,

The takeover configurations described below assume takeover by a "new" system of an embodiment of a security system provided by another third party vendor, referred to herein as an "original" or "legacy" system. Generally, the takeover begins with removal of the control panel and keypad of the legacy system. A GE Concord panel is installed to replace the control panel of the legacy system along with an iHub with GPRS Modem, The legacy system sensors are then connected or wired to the Concord panel, and a GE keypad or touchscreen is installed to replace the control panel of the legacy system. The iHub includes the iControl RF card, which is compatible with the legacy system. The iHub finds and manages the wireless sensors of the legacy system, and learns the sensors into the Concord by emulating the corresponding GE sensors. The iHub effectively acts as a relay for legacy wireless sensors.

Once takeover is complete, the new security system provides a homogeneous system that removes the compromises inherent in taking over or replacing a legacy system. For example, the new system provides a modern touchscreen that may include additional functionality, new services, and supports integration of sensors from various manufacturers. Furthermore, lower support costs can be realized because call centers, installers, etc. are only required to support one architecture. Additionally, there is minimal install cost because only the panel is required to be replaced as a result of the configuration flexibility offered by the iHub.

The system takeover configurations described below include but are not limited to a dedicated wireless configuration, a dedicated wireless configuration that includes a touchscreen, and a fished Ethernet configuration. Each of these configurations is described in detail below.

**Figure 18** is a block diagram of a security system in which the legacy panel is replaced with a GE Concord panel wirelessly coupled to an iHub. under an embodiment. All existing wired and RF sensors remain in place. The iHub is located near the Concord panel, and communicates with the panel via the 802.11 link, but is not so limited. The iHub manages cameras through a built-in 802.11 router. The iHub listens to the existing RF HW sensors, and relays sensor information to the Concord panel (emulating the equivalent GE sensor). The wired sensors of the legacy system are connected to the wired zones on the control panel.

**Figure 19** is a block diagram of a security system in which the legacy panel is replaced with a GE Concord panel wirelessly coupled to an iHub. and a GE-iControl Touchscreen, under an embodiment All existing wired and RF sensors remain in place. The iHub is located near the Concord panel, and communicates with the panel via the 802 11 link, but is not so limited. The iHub manages cameras through a built-in 802.11 router. The iHub listens to the existing RF HW sensors, and relays sensor information to the Concord panel (emulating the equivalent GE sensor). The wired sensors of the legacy system are connected to the wired zones on the control panel.

The GE-iControl Touchscreen can be used with either of an 802.11 connection or Ethernet connection with the iHub. Because the takeover involves a GE Concord panel (or Simon XT), the touchscreen is always an option. No extra wiring is required for the touchscreen as it can use the 4-wire set from the replaced keypad of the legacy system. This provides power, battery backup (through Concord), and data link (RS485 Superbus 2000) between Concord and touchscreen. The touchscreen receives its broadband connectivity through the dedicated 802.11 link to the iHub.

**Figure 20** is a block diagram of a security system in which the legacy panel is replaced with a GE Concord panel connected to an iHub via an Ethernet coupling, under an embodiment. All existing wired and RF sensors remain in place. The iHub is located near the Concord panel, and wired to the panel using a 4-wire SUperbus 2000 (RS485) interface, but is not so limited. The iHub manages cameras through a built-in 802.11 router. The iHub listens to the existing RF HW sensors, and relays sensor information to the Concord panel (emulating the equivalent GE sensor). The wired sensors of the legacy system are connected to the wired zones on the control panel.

The takeover installation process is similar to the installation process described above, except the control panel of the legacy system is replaced; therefore, only the differences with the installation described above are provided here. The takeover approach of an embodiment uses the existing RS485 control interfaces that GE Security and iControl support with the iHub, touchscreen, and Concord panel. With these interfaces, the iHub is capable of automatically enrolling sensors in the panel The exception is the leverage of an iControl RF card compatible with legacy systems to 'takeover' existing RF sensors. A description of the takeover installation process follows.

During the installation process, the iHub uses an RF Takeover Card to automatically extract all sensor IDs, zones, and names from the legacy panel. The installer removes connections at the legacy panel from hardwired wired sensors and labels each with the zone. The installer pulls the legacy panel and replaces it with the GE Concord panel. The installer also pulls the existing legacy keypad and replaces it with either a GE keypad or a GE-iControl touchscreen. The installer connects legacy hardwired sensors to appropriate wired zone (from labels) on the Concord. The installer connects the iHub to the local network and connects the iHub RS485 interface to the Concord panel. The iHub automatically 'enrolls' legacy RF sensors into the Concord panel as GE sensors (maps IDs), and pushes or otherwise propagates other information gathered from HW panel (zone, name, group). The installer performs a test of all sensors back to CMS. In operation, the iHub relays legacy sensor data to the Concord panel, emulating equivalent GE sensor behavior and protocols.

The areas of the installation process particular to the legacy takeover include how the iHub extracts sensor info from the legacy panel and how the iHub automatically enrolls legacy RF sensors and populates Concord with wired zone information. Each of these areas is described below.

In having the iHub extract sensor information from the legacy panel, the installer 'enrolls' iHub into the legacy panel as a wireless keypad (use install code and house ID-available from panel). The iHub legacy RF Takeover Card is a compatible legacy RF transceiver. The installer uses the web portal to place iHub into 'Takeover Mode', and the web portal the automatically instructs the iHub to begin extraction. The iHub queries the panel over the RF link (to get all zone information for all sensors, wired and RF). The iHub then stores the legacy sensor information received during the queries on the iConnect server.

The iHub also automatically enrolls legacy RF sensors and populates Concord with wired zone information. In so doing, the installer selects 'Enroll legacy Sensors into Concord' (next step in 'Takeover' process on web portal). The iHub automatically queries the iConnect server, and downloads legacy sensor information previously extracted. The downloaded information includes an ID mapping from legacy ID to 'spoofed' GE ID. This mapping is stored on the server as part of the sensor information (e.g., the iConnect server knows that the sensor is a legacy sensor acting in GE mode), The iHub instructs Concord to go into install mode, and sends appropriate Superbus 2000 commands for sensor learning to the panel. For each sensor, the "spoofed" GE ID is loaded, and zone, name, and group are set based on information extracted from legacy panel. Upon completion, the iHub notifies the server, and the web portal is updated to reflect next phase of Takeover (e.g., "Test Sensors").

Sensors are tested in the same manner as described above. When a HW sensor is triggered, the signal is captured by the iHub legacy RF Takeover Card, translated to the equivalent GE RF sensor signal, and pushed to the panel as a sensor event on the SuperBus 2000 wires.

In support of remote programming of the panel, CMS pushes new programming to Concord over a phone line, or to the iConnect CMS/Alarm Server API, which in turn pushes the programming to the iHub. The iHub uses the Concord Superbus 2000 RS485 link to push the programming to the Concord panel.

**Figure 21** is a flow diagram for automatic takeover 2100 of a security system, under an embodiment. Automatic takeover includes establishing 2102 a wireless coupling between a takeover component running under a processor and a first controller of a security system installed at a first location. The security system includes some number of security system components coupled to the first controller. The automatic takeover includes automatically extracting 2104 security data of the security system from the first controller via the takeover component. The automatic takeover includes automatically transferring 2106 the security data to a second controller and controlling loading of the security data into the second controller. The second controller is coupled to the security system components and replaces the first controller

**Figure 22** is a flow diagram for automatic takeover 2200 of a security system, under an alternative embodiment. Automatic takeover includes automatically forming 2202 a security network at a first location by establishing a wireless coupling between a security system and a gateway. The gateway of an embodiment includes a takeover component The security system of an embodiment includes security system components. The automatic takeover includes automatically extracting 2204 security data of the security system from a first controller of the security system. The automatic takeover includes automatically transferring 2206 the security data to a second controller. The second controller of an embodiment is coupled to the security system components and replaces the first controller.

As described above, computer networks suitable for use with the embodiments described herein include local area networks (LAN), wide area networks (WAN), Internet, or other connection services and network variations such as the world wide web, the public internet, a private internet, a private computer network, a public network, a mobile network, a cellular network, a value-added network, and the like. Computing devices coupled or connected to the network may be any microprocessor controlled device that permits access to the network, including terminal devices, such as personal computers, workstations, servers, mini computers, main-frame computers, laptop computers, mobile computers, palm top computers, hand held computers, mobile phones, TV set-top boxes, or combinations thereof The computer network may include one of more LANs, WANs, Internets, and computers, The computers may serve as servers, clients, or a combination thereof

The integrated security system can be a component of a single system, multiple systems, and/or geographically separate systems. The integrated security system can also be a subcomponent or subsystem of a single system, multiple systems, and/or geographically separate systems. The integrated security system can be coupled to one or more other components (not shown) of a host system or a system coupled to the host system.

One or more components of the integrated security system and/or a corresponding system or application to which the integrated security system is coupled or connected includes and/or runs under and/or in association with a processing system. The processing system includes any collection of processor-based devices or computing devices operating together, or components of processing systems or devices, as is known in the art. For example, the processing system can include one or more of a portable computer, portable communication device operating in a communication network, and/or a network server. The portable computer can be any of a number and/or combination of devices selected from among personal computers, personal digital assistants, portable computing devices, and portable communication devices, but is not so limited. The processing system can include components within a larger computer system,

The processing system of an embodiment includes at least one processor and at least one memory device or subsystem. The processing system can also include or be coupled to at least one database. The term "processor" as generally used herein refers to any logic processing unit, such as one or more central processing units (CPUs), digital signal processors (DSPs), application-specific integrated circuits (ASIC), etc. The processor and memory can be monolithically integrated onto a single chip, distributed among a number of chips or components, and/or provided by some combination of algorithms. The methods described herein can be implemented in one or more of software algorithm(s), programs, firmware, hardware, components, circuitry, in any combination

The components of any system that includes the integrated security system can be located together or in separate locations. Communication paths couple the components and include any medium for communicating or transferring files among the components. The communication paths include wireless connections, wired connections, and hybrid wireless/wired connections. The communication paths also include couplings or connections to networks including local area networks (LANs), metropolitan area networks (MANs), wide area networks (WANs), proprietary networks, interoffice or backend networks, and the Internet. Furthermore, the communication paths include removable fixed mediums like floppy disks, hard disk drives, and CD-ROM disks, as well as flash RAM, Universal Serial Bus (USB) connections, RS-232 connections, telephone lines, buses, and electronic mail messages.

Aspects of the integrated security system and corresponding systems and methods described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the integrated security system and corresponding systems and methods include: microcontrollers with memory (such as electronically erasable programmable read only memory (EEPROM)), embedded microprocessors, firmware, software, etc. Furthermore, aspects of the integrated security system and corresponding systems and methods may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

It should be noted that any system, method, and/or other components disclosed herein may be described using computer aided design tools and expressed (or represented), as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, e-mail, etc.) over the Internet and/or other computer networks via one or more data transfer protocols (e.g., HTTP, FTP, SMTP, etc.). When received within a computer system via one or more computer-readable media, such data and/or instruction-based expressions of the above described components may be processed by a processing entity (e.g., one or more processors) within the computer system in conjunction with execution of one or more other computer programs.

Unless the context clearly requires otherwise, throughout the description and the claims, the words "comprise," "comprising," and the like are to be construed in an inclusive sense as opposed to an exclusive or exhaustive sense; that is to say, in a sense of "including but not limited to" Words using the singular or plural number also include the plural or singular number respectively. Additionally, the words "herein," "hereunder," "above," "below," and words of similar import, when used in this application, refer to this application as a whole and not to any particular portions of this application. When the word "or" is used in reference to a list of two or more items, that word covers all of the following interpretations of the word: any of the items in the list, all of the items in the list and any combination of the items in the list.

## Claims

1. An interface device comprising:
a processor;
a display coupled to the processor, wherein the processor is coupled to a local network and a security system at a first location;
a plurality of interfaces coupled to the processor and presented to a user via the display, wherein the plurality of interfaces include a security interface and a network interface integrated with the security interface, wherein the security interface allows the user to control functions of the security system and to access data collected by the security system, wherein the network interface allows the user to control functions of network components coupled to the local network and to access content of a remote network coupled to the local network,
wherein the plurality of interfaces comprises a slideshow timeline editor, STE, wherein the STE comprises:
a widget palette comprising widgets, and
a slideshow timeline,
wherein the STE is configured to receive user input, wherein the user input comprises selecting the widgets from the widget palette and placing said widgets on the slideshow timeline, wherein the widgets comprise an event widget that corresponds to events detected by components of the security system, wherein the widgets comprise an action widget that corresponds to actions taken via the network components,
wherein the user input further comprises moving and adjusting a size of a widget among said widgets on the slideshow timeline to specify a start and a stop time for the widget to play,
wherein the interface device is configured to play a slideshow comprising said widgets by playing each of said widgets according to a timeline layout of the slideshow timeline, wherein the size and location of each of said widgets on the slideshow timeline dictates a start time and duration for the respective widget to play during the slideshow.

2. The device of claim 1, wherein the plurality of interfaces comprises a timeline user interface, TUI, wherein the TUI comprises a variable-length timeline, wherein a time scale of the TUI can be dynamically changed.

3. The device of claim 2, wherein the TUI comprises component data presented in a timeline, wherein the component data comprises component state presented in a timeline, wherein the component data comprises component history presented in a timeline, wherein the component data corresponds to at least one of a plurality of security components and the network components, wherein the security system comprises the plurality of security components, wherein the component data is at least one of photos and video from a camera, a security system state, or a state of an alarm panel, and wherein the security system comprises the alarm panel.

4. The device of claim 3, wherein the network components comprise one or more energy management components, wherein the component data comprises state data of the one or more energy management components, wherein the one or more energy management components comprise at least one of a device controller, a system controller, a lighting controller, or a temperature controller, wherein the TUI comprises a control icon for the device controller, wherein the TUI comprises a control icon for the system controller, wherein the TUI comprises a control icon for the lighting controller, wherein the TUI comprises a control icon for the temperature controller.

5. The device of claim 1, wherein the slideshow timeline editor, STE, interface enables generation of slideshow animations, wherein the STE interface enables creation and management of a plurality of content formats and a plurality of content sources for a display, wherein the STE interface comprises a preview screen.

6. The device of claim 5, wherein the widget palette comprises widget icons representing the widgets, and descriptive text corresponding to the widget icons.

7. The device of claim 6, wherein a selected widget icon is moved into the slideshow timeline, wherein the slideshow timeline enables placement of the selected widget icon on the slideshow timeline, wherein the placement on the slideshow timeline controls a start time and a stop time of the widget, wherein the slideshow timeline comprises a plurality of selected widget icons placed at intervals along the slideshow timeline, wherein the placement on the slideshow timeline of the plurality of selected widget icons controls a respective start time and stop time of a plurality of widgets corresponding to widget icons, wherein the respective start time and stop time of a widget is a time relative to at least one of a respective start time and stop time of another widget of the plurality of widgets.

8. The device of claim 5, wherein the STE interface enables generation of slideshow animations integrated with the events, wherein the STE interface enables generation of slideshow animations integrated with the actions, wherein the actions are actions taken via the network components.

9. The device of claim 1, wherein the plurality of interfaces comprises an energy management user interface, EMUI, wherein the EMUI enables control of energy management components, wherein the EMUI displays energy usage information of the first location, wherein the network components comprise the energy management components.

10. The device of claim 9, wherein the energy management components comprise at least one of a device controller, a system controller, a lighting controller, and a temperature controller, wherein the EMUI comprises a control icon for the device controller, wherein the EMUI comprises a control icon for the system controller.

11. The device of claim 10, wherein the EMUI comprises one of:
a) a control icon for the lighting controller; and
a plurality of control phases, wherein each control phase corresponds to a time period;
b) a control icon for the lighting controller;
a plurality of control phases, wherein each control phase corresponds to a time period; and
a first plurality of regions that include information of the control phase; and
c) a control icon for the lighting controller;
a plurality of control phases, wherein each control phase corresponds to a time period;
a first plurality of regions that include information of the control phase; and
a second plurality of regions that include information of the lighting controller.

12. The device of claim 11, wherein the information of the lighting controller comprises a lighting level of a region of the first location, the lighting level corresponding to a control phase, wherein the information of the lighting controller comprises a lighting state of a region of the first location, the lighting state corresponding to a control phase.

13. The device of claim 10, wherein the EMUI comprises a control icon for the temperature controller, wherein the EMUI comprises a plurality of control phases, wherein each control phase corresponds to a time period.

14. The device of claim 13, wherein the EMUI comprises a first plurality of regions that include information of the plurality of control phases.

15. The device of claim 14, wherein the EMUI comprises a second plurality of regions that include information of the temperature controller.

16. The device of claim 15, wherein the information of the temperature controller comprises a temperature of a region of the first location, the temperature corresponding to a control phase, wherein the temperature is at least one of a current temperature of the region or a historic temperature of the region, wherein the information of the temperature controller comprises a temperature setting of a region of the first location, the temperature setting corresponding to a control phase.

17. A system comprising an interface device according to any of claims 1 to 16, coupled to: said local network; and said security system at a first location.

## Patentansprüche

1. Schnittstellenvorrichtung, umfassend:
einen Prozessor;
ein Display, das mit dem Prozessor gekoppelt ist, wobei der Prozessor an einem ersten Ort mit einem lokalen Netzwerk und einem Sicherheitssystem gekoppelt ist;
mehrere Schnittstellen, die mit dem Prozessor gekoppelt sind und einem Benutzer über das Display gezeigt werden, wobei die mehreren Schnittstellen eine Sicherheitsschnittstelle und eine in die Sicherheitsschnittstelle integrierte Netzwerkschnittstelle enthalten, wobei die Sicherheitsschnittstelle dem Benutzer das Steuern von Funktionen des Sicherheitssystems und das Zugreifen auf Daten ermöglicht, die von dem Sicherheitssystem gesammelt wurden, wobei die Netzwerkschnittstelle dem Benutzer das Steuern von Funktionen von Netzwerkkomponenten, die mit dem lokalen Netzwerk gekoppelt sind, und das Zugreifen auf Inhalte eines entfernten Netzwerks ermöglicht, das mit dem lokalen Netzwerk gekoppelt ist, wobei die mehreren Schnittstellen einen Diashow-Zeitleisteneditor STE umfassen, wobei der STE umfasst:
eine Widget-Palette, die Widgets umfasst, und eine Diashow-Zeitleiste, wobei die STE so konfiguriert ist, dass sie Benutzereingaben empfängt, wobei die Benutzereingabe das Auswählen der Widgets aus der Widget-Palette und das Platzieren der Widgets auf der Diashow-Zeitleiste umfasst, wobei die Widgets ein Ereignis-Widget umfassen, das Ereignissen entspricht, die von Komponenten des Sicherheitssystems erkannt werden, wobei die Widgets ein Aktions-Widget umfassen, das Aktionen entspricht, die über die Netzwerkkomponenten ausgeführt werden, wobei die Benutzereingabe ferner das Bewegen und Anpassen einer Größe eines Widgets zwischen den Widgets auf der Diashow-Zeitleiste umfasst, um eine Start- und eine Stoppzeit für die Wiedergabe des Widgets festzulegen, wobei die Schnittstellenvorrichtung so konfiguriert ist, dass eine Diashow mit den Widgets abgespielt wird, indem jedes der Widgets gemäß einem Zeitleistenlayout der Diashow-Zeitleiste abgespielt wird, wobei Größe und der Ort der einzelnen Widgets auf der Diashow-Zeitleiste eine Startzeit und Dauer für das jeweilige während der Diashow abzuspielende Widget festlegen.

2. Vorrichtung nach Anspruch 1, wobei die mehreren Schnittstellen eine Zeitleisten-Benutzerschnittstelle TUI umfassen, wobei die TUI eine Zeitleiste variabler Länge umfasst, wobei eine Zeitskala der TUI dynamisch geändert werden kann.

3. Vorrichtung nach Anspruch 2, wobei die TUI Komponentendaten umfasst, die in einer Zeitleiste dargestellt sind, wobei die Komponentendaten den Komponentenzustand umfassen, der in einer Zeitleiste dargestellt ist, wobei die Komponentendaten den Komponentenverlauf umfassen, der in einer Zeitleiste dargestellt ist, wobei die Komponentendaten mindestens einem aus mehreren Sicherheitskomponenten und den Netzwerkkomponenten entsprechen, wobei das Sicherheitssystem die mehreren Sicherheitskomponenten umfasst, wobei die Komponentendaten mindestens eines von Fotos und Videos von einer Kamera, einem Sicherheitssystemzustand oder einem Zustand einer Alarmtafel sind und wobei das Sicherheitssystem die Alarmtafel umfasst.

4. Vorrichtung nach Anspruch 3, wobei die Netzwerkkomponenten eine oder mehrere Energiemanagementkomponenten umfassen, wobei die Komponentendaten Zustandsdaten der einen oder mehreren Energiemanagementkomponenten umfassen, wobei die eine oder mehreren Energiemanagementkomponenten mindestens eines von einer Vorrichtungssteuerung, einer Systemsteuerung, einer Beleuchtungssteuerung oder einer Temperatursteuerung umfassen, wobei die TUI ein Steuerungssymbol für die Vorrichtungssteuerung umfasst, wobei die TUI ein Steuerungssymbol für die Systemsteuerung umfasst, wobei die TUI ein Steuerungssymbol für die Beleuchtungssteuerung umfasst, wobei die TUI ein Steuerungssymbol für die Temperatursteuerung umfasst.

5. Vorrichtung nach Anspruch 1, wobei die Diashow-Zeitleisteneditor-STE-Schnittstelle das Erzeugen von Diashow-Animationen ermöglicht, wobei die STE-Schnittstelle das Erstellen und Managen mehrerer Inhaltsformate und mehrerer Inhaltsquellen für ein Display ermöglicht, wobei die STE-Schnittstelle einen Vorschaubildschirm umfasst.

6. Vorrichtung nach Anspruch 5, wobei die Widget-Palette Widget-Symbole, die die Widgets darstellen, und beschreibenden Text umfasst, der den Widget-Symbolen entspricht.

7. Vorrichtung nach Anspruch 6, wobei ein ausgewähltes Widget-Symbol in die Diashow-Zeitleiste verschoben wird, wobei die Diashow-Zeitleiste das Platzieren des ausgewählten Widget-Symbols auf der Diashow-Zeitleiste ermöglicht, wobei das Platzieren auf der Diashow-Zeitleiste eine Startzeit und eine Stoppzeit des Widgets steuert, wobei die Diashow-Zeitleiste mehrere ausgewählte Widget-Symbole umfasst, die in Intervallen entlang der Diashow-Zeitachse angeordnet sind, wobei das Platzieren der mehreren ausgewählten Widget-Symbole auf der Diashow-Zeitachse eine jeweilige Startzeit und Stoppzeit der mehreren entsprechenden Widgets entsprechend den Widget-Symbolen steuert, wobei die jeweilige Startzeit und Stoppzeit eines Widgets eine Zeit relativ zu mindestens einer von jeweiliger Startzeit und Stoppzeit eines anderen Widgets der mehreren Widgets ist.

8. Vorrichtung nach Anspruch 5, wobei die STE-Schnittstelle das Erzeugen von Diashow-Animationen ermöglicht, die in die Ereignisse integriert sind, wobei die STE-Schnittstelle das Erzeugen von Diashow-Animationen ermöglicht, die in die Aktionen integriert sind, wobei die Aktionen Aktionen sind, die über die Netzwerkkomponenten ausgeführt werden.

9. Vorrichtung nach Anspruch 1, wobei die mehreren Schnittstellen eine Energiemanagement-Benutzerschnittstelle EMUI umfassen, wobei die EMUI das Steuern von Energiemanagementkomponenten ermöglicht, wobei die EMUI Energieverbrauchsinformationen des ersten Ortes anzeigt, wobei die Netzwerkkomponenten die Energiemanagementkomponenten umfassen.

10. Vorrichtung nach Anspruch 9, wobei die Energiemanagementkomponenten mindestens eine von einer Vorrichtungssteuerung, einer Systemsteuerung, einer Beleuchtungssteuerung und einer Temperatursteuerung umfassen, wobei die EMUI ein Steuerungssymbol für die Vorrichtungssteuerung umfasst, wobei die EMUI ein Steuerungssymbol für die Systemsteuerung umfasst.

11. Vorrichtung nach Anspruch 10, wobei die EMUI eines der folgenden umfasst:
a) ein Steuerungssymbol für die Beleuchtungssteuerung; und
mehrere Steuerungsphasen, wobei jede Steuerungsphase einer Zeitperiode entspricht;
b) ein Steuerungssymbol für die Lichtsteuerung;
mehrere Steuerungsphasen, wobei jede Steuerungsphase einer Zeitperiode entspricht; und
mehrere erste Regionen, die Informationen über die Steuerungsphase enthalten; und
c) ein Steuerungssymbol für die Beleuchtungssteuerung;
mehrere Steuerungsphasen, wobei jede Steuerungsphase einer Zeitperiode entspricht;
mehrere erste Regionen, die Informationen über die Steuerungsphase enthalten; und
mehrere zweite Regionen, die Informationen über die Beleuchtungssteuerung enthalten.

12. Vorrichtung nach Anspruch 11, wobei die Informationen über die Beleuchtungssteuerung ein Beleuchtungsniveau einer Region des ersten Ortes umfassen, wobei das Beleuchtungsniveau einer Steuerungsphase entspricht, wobei die Informationen über die Beleuchtungssteuerung einen Beleuchtungszustand einer Region des ersten Orts umfassen, wobei der Beleuchtungszustand einer Steuerungsphase entspricht.

13. Vorrichtung nach Anspruch 10, wobei die EMUI ein Steuerungssymbol für die Temperatursteuerung umfasst, wobei die EMUI mehrere Steuerungsphasen umfasst, wobei jede Steuerungsphase einer Zeitperiode entspricht.

14. Vorrichtung nach Anspruch 13, wobei die EMUI mehrere erste Regionen umfasst, die Informationen über die mehreren Steuerungsphasen enthalten.

15. Vorrichtung nach Anspruch 14, wobei die EMUI mehrere zweite Regionen umfasst, die Informationen über die Temperatursteuerung enthalten.

16. Vorrichtung nach Anspruch 15, wobei die Information der Temperatursteuerung eine Temperatur einer Region des ersten Ortes umfasst, wobei die Temperatur einer Steuerungsphase entspricht, wobei die Temperatur mindestens eine von einer aktuellen Temperatur der Region oder einer historischen Temperatur der Region ist, wobei die Informationen der Temperatursteuerung eine Temperatureinstellung einer Region des ersten Ortes umfassen, wobei die Temperatureinstellung einer Steuerungsphase entspricht.

17. System, umfassend eine Schnittstellenvorrichtung nach einem der Ansprüche 1 bis 16, gekoppelt mit:
dem lokalen Netzwerk; und
dem Sicherheitssystem an einem ersten Ort.

## Revendications

1. Dispositif d'interface comprenant :
un processeur ;
un affichage couplé au processeur, le processeur étant couplé à un réseau local et à un système de sécurité au niveau d'un premier emplacement ;
une pluralité d'interfaces couplées au processeur et présentées à un utilisateur par l'intermédiaire de l'affichage, la pluralité d'interfaces comportant une interface de sécurité et une interface réseau intégrée à l'interface de sécurité, l'interface de sécurité permettant à l'utilisateur de commander les fonctions du système de sécurité et d'accéder aux données collectées par le système de sécurité, l'interface réseau permettant à l'utilisateur de commander les fonctions des composants réseau couplés au réseau local et d'accéder au contenu d'un réseau distant couplé au réseau local, la pluralité d'interfaces comprenant un éditeur d'évènements chronologiques de diaporama (STE), le STE comprenant :
une palette de composants d'interface graphique comprenant des composants d'interface graphique et des événements chronologiques de diaporama, le STE étant configuré pour recevoir une entrée utilisateur, l'entrée utilisateur comprenant la sélection des composants d'interface graphique dans la palette de composants d'interface graphique et le placement desdits composants d'interface graphique sur les événements chronologiques de diaporama, les composants d'interface graphique comprenant un composant d'interface graphique d'évènement qui correspond à des évènements détectés par des composants du système de sécurité, les composants d'interface graphique comprennent un composant d'interface graphique d'action qui correspond aux actions prises par l'intermédiaire des composants réseau, l'entrée utilisateur comprend en outre le déplacement et l'ajustement de la taille d'un composant d'interface graphique parmi lesdits composants d'interface graphique sur les évènements chronologiques de diaporama afin de spécifier une heure de début et une heure d'arrêt pour la lecture du composant d'interface graphique, le dispositif d'interface étant configuré pour lire un diaporama comprenant lesdits composants d'interface graphique par la lecture de chacun desdits composants d'interface graphique selon une disposition d'évènements chronologiques de diaporama, la taille et l'emplacement de chacun desdits composants d'interface graphique sur les événements chronologiques de diaporama dictent une heure de début et une durée pour le composant d'interface graphique respectif à lire pendant le diaporama.

2. Dispositif selon la revendication 1, dans lequel la pluralité d'interfaces comprennent une interface utilisateur d'évènements chronologiques, TUI, la TUI comprenant des évènements chronologiques de longueur variable, une échelle de temps de la TUI pouvant être modifiée de façon dynamique.

3. Dispositif selon la revendication 2, dans lequel la TUI comprend des données de composant présentées dans des évènements chronologiques, les données de composant comprenant l'état de composant présenté dans un évènement chronologique, les données de composant comprenant l'historique de composant présenté dans un évènement chronologique, les données de composant correspondant à au moins un élément parmi une pluralité de composants de sécurité et les composants réseau, le système de sécurité comprenant la pluralité de composants de sécurité, les données de composant étant au moins un élément parmi des photos et des vidéos d'une caméra, un état du système de sécurité ou un état d'un panneau d'alarme, et le système de sécurité comprenant le panneau d'alarme.

4. Dispositif selon la revendication 3, dans lequel les composants réseau comprennent un ou plusieurs composants de gestion d'énergie, les données de composant comprenant des données d'état des un ou plusieurs composants de gestion d'énergie, les un ou plusieurs composants de gestion d'énergie comprenant au moins l'un d'un dispositif de commande de dispositif, d'un dispositif de commande de système, d'un dispositif de commande d'éclairage ou d'un dispositif de commande de température, la TUI comprenant une icône de commande pour le dispositif de commande de dispositif, la TUI comprenant une icône de commande pour le dispositif de commande de système, la TUI comprenant une icône de commande pour le dispositif de commande d'éclairage, la TUI comprenant une icône de commande pour le dispositif de commande de température.

5. Dispositif selon la revendication 1, dans lequel l'interface d'éditeur d'évènements chronologiques de diaporama, STE permet de générer des animations de diaporama, l'interface STE permettant la création et la gestion d'une pluralité de formats de contenu et d'une pluralité de sources de contenu pour un affichage, l'interface STE comprenant un écran d'aperçu.

6. Dispositif selon la revendication 5, dans lequel la palette de composants d'interface graphique comprend des icônes de composants d'interface graphique représentant les composants d'interface graphique et un texte descriptif correspondant aux icônes de composants d'interface graphique.

7. Dispositif selon la revendication 6, dans lequel une icône de composant d'interface graphique sélectionnée est déplacée dans les évènements chronologiques de diaporama, les évènements chronologiques de diaporama permettant le placement de l'icône de composant d'interface graphique sélectionné sur l'évènement chronologique de diaporama, le placement sur l'évènement chronologique de diaporama commande une heure de début et une heure d'arrêt du composant d'interface graphique, l'évènement chronologique de diaporama comprenant une pluralité d'icônes de composants d'interface graphique sélectionnées placées à intervalles le long de l'évènement chronologique de diaporama, le placement sur l'évènement chronologique de diaporama de la pluralité d'icônes de composants d'interface graphique sélectionnées commandant une heure de début et une heure d'arrêt respectives d'une pluralité de composants d'interface graphique correspondant aux icônes de composants d'interface graphique, l'heure de début et l'heure d'arrêt respectives d'un composant d'interface graphique étant une heure relative à au moins une heure de début et une heure d'arrêt respectives d'un autre composant d'interface graphique de la pluralité de composants d'interface graphique.

8. Dispositif selon la revendication 5, dans lequel l'interface STE permet la génération d'animations de diaporamas intégrées aux événements, l'interface STE permettant la génération d'animations de diaporamas intégrés aux actions, les actions sont des actions prises par l'intermédiaire des composants réseau.

9. Dispositif selon la revendication 1, dans lequel la pluralité d'interfaces comprennent une interface utilisateur de gestion d'énergie, EMUI, l'EMUI permettant la commande des composants de gestion d'énergie, l'EMUI affichant des informations sur l'utilisation d'énergie du premier emplacement, les composants réseau comprenant les composants de gestion d'énergie.

10. Dispositif selon la revendication 9, dans lequel les composants de gestion d'énergie comprennent au moins l'un d'un dispositif de commande de dispositif, d'un dispositif de commande de système, d'un dispositif de commande d'éclairage et d'un dispositif de commande de température, l'EMUI comprenant une icône de commande pour le dispositif de commande de dispositif, l'EMUI comprenant une icône de commande pour le dispositif de commande de système.

11. Dispositif selon la revendication 10, dans lequel l'EMUI comprend l'un des éléments suivants :
a) une icône de commande pour le dispositif de commande d'éclairage ; et
une pluralité de phases de commande, chaque phase de commande correspondant à une durée ;
b) une icône de commande pour le dispositif de commande d'éclairage ;
une pluralité de phases de commande, chaque phase de commande correspondant à une durée ; et
une première pluralité de régions qui comportent des informations de la phase de commande ; et
c) une icône de commande pour le dispositif de commande d'éclairage ;
une pluralité de phases de commande, chaque phase de commande correspondant à une durée ;
une première pluralité de régions qui comportent des informations de la phase de commande ; et
une seconde pluralité de régions qui comportent des informations du dispositif de commande d'éclairage.

12. Dispositif selon la revendication 11, dans lequel les informations du dispositif de commande d'éclairage comprennent un niveau d'éclairage d'une région du premier emplacement, le niveau d'éclairage correspondant à une phase de commande, les informations du dispositif de commande d'éclairage comprenant un état d'éclairage d'une région du premier emplacement, l'état d'éclairage correspondant à une phase de commande.

13. Dispositif selon la revendication 10, dans lequel l'EMUI comprend une icône de commande pour le dispositif de commande de température, l'EMUI comprenant une pluralité de phases de commande, chaque phase de commande correspondant à une durée.

14. Dispositif selon la revendication 13, dans lequel l'EMUI comprend une première pluralité de régions qui comportent des informations de la pluralité de phases de commande.

15. Dispositif selon la revendication 14, dans lequel l'EMUI comprend une seconde pluralité de régions qui comportent des informations du dispositif de commande de température.

16. Dispositif selon la revendication 15, dans lequel les informations du dispositif de commande de température comprennent une température d'une région du premier emplacement, la température correspondant à une phase de commande, la température est au moins l'une d'une température actuelle de la région ou d'une température historique de la région, les informations du dispositif de commande de température comprennent un réglage de température d'une région du premier emplacement, le réglage de température correspondant à une phase de commande.

17. Système comprenant un dispositif d'interface selon l'une quelconque des revendications 1 à 16, couplé :
audit réseau local ; et
audit système de sécurité au niveau d'un premier emplacement.
